# EUROPEAN PATENT APPLICATION

(11) **EP 3 926 243 A1**
(43) Date of publication of application: **22.12.2021**
(21) Application number: 20197658.6
(22) Date of filing: 23.09.2020
(51) Int. Cl.: F24D 19/10, G05D 1/00, G05D 7/06

(54) **METHOD, APPARATUS AND SYSTEM FOR BALANCING THE FLUID PRESSURE OF FLUID DISTRIBUTION SYSTEMS**

(30) Priority: 18.06.2020 CA 3083899
(71) Applicant: Faiczak, John, Toronto, Ontario M8Z 1V1 (CA)
(72) Inventor: Faiczak, John, Toronto, Ontario M8Z 1V1 (CA)
(74) Representative: Barker Brettell LLP

(57) **Abstract**

The present invention is a fluid distribution system comprising connected conduits (e.g., lines) wherein fluid flows, such as pipes within a building. The lines may be configured to: (i) include multiple lines that connect at intersections (some of the intersections will be identified as nodes); and (ii) incorporate node units associated with pressure assemblies ("PSAs"). Activities of a node unit incorporating a PSA can result in alterations in fluid flow, such as by a loop control process or other processes to operate one or more pumps. Each PSA has a pump incorporated therein. These alterations adjust fluid flow to cause the system to produce a balanced and high efficiency energy transfer (e.g., heating or cooling), and do not require any: addition of any line (conduit) pressure losses, measuring of differential pressure, or identification or use of any specific, fixed or absolute pressure value. Each PSA functions based on an operation locus (for a node unit) and/or an operation locus range (for node unit groupings) to adjust the fluid flow.

## Description

### Field of Invention

This invention relates in general to the field of monitoring and controlling the fluid flowing in a fluid distribution system and more particularly to a system incorporating nodes units that each incorporate a pump, said node units being operable to measure fluid flow within the system and utilize such measurement to balance the fluid distribution within the system.

### Background of the Invention

Known, prior art, fluid distributions systems function to control fluid (i.e., liquid) distribution to a thermal load (such as a space in a building - e.g., a room in a building, or another space or area in a building) in accordance with specific, fixed or absolute pressure values. In such prior art systems require a specific, fixed pressure value to be set at one or more pressure controllers (e.g., manually adjusted balancing valves) within the system. The setting can be determined through automation or manually adjusting such pressure controller balancing valve. The purpose of the setting is to achieve as close to a balanced line pressure loss of the fluid flowing in a system as possible.

Control of the flow of a liquid or fluid within a system is applied in industries such as cooling and heating systems, as well as other types of systems that require fluid to flow through the system. In such prior art systems the flow of fluid between two elements of the system is controlled. The control is achieved through identifying and applying settings within the system that are fixed values to which fluid flow, fluid flow pressure levels and the positions of valves, can be set.

Thus, in the prior art systems generally, it is a specific requirement that the system be operable so that functions such as line pressure loss settings can be manually set. Balancing valves can be manually set to specific fixed values, such as is required to achieve a particular flow within the system. Examples of the prior art systems are provided below. The discussion of the prior art below incorporates cooling and heating systems, as well as other systems that control liquid flow.

As an example of prior art, U.S. Patent No. 5,904,292 issued on May 18, 1999 to Douglas S. McIntosh, discloses a modulating fluid control device for a fluid-based heating and cooling system for a measured environment. To control the flow of liquid in the system valves must be set to a specific level in accordance with a detected flow rate value.

Another example of prior art is PCT Patent Application Publication WO2014/152585 filed March 14, 2014 as PCT application PCT/US2014/027501 by Schlumberger Holdings Limited. This application discloses a system that incorporates multi-stage downhole oil-water separators that are connected in a hydraulic series and are flow balanced and pressure balanced with respect to each other. This invention is directed to controlling the flow between the separators by reducing or increasing the flow rate between upstream and downstream elements of the invention. (Downstream is referenced herein in relation to the flow of the liquid in the conduits, such that the flow is always in a downstream direction, therefore upstream, as used herein, references the opposite direction to the liquid flow.)

Another example of prior art is U.S. Patent No. 8,105,995 issued on September 13, 2011 to Entegris, Inc. This patent discloses a flow control device that is operable to measure pressure and to generate a valve control signal based upon the measurement. The measurement is expressed as an absolute pressure value (e.g., a measured pressure by voltage level).

Another example of prior art is U.S. Patent Application Publication No. 2011/0005605 filed as U.S. patent application 12/934,021 on September 22, 2010 by Arkray, Inc. This application discloses a liquid delivery control method for delivering a liquid by generating a differential pressure within a micro-channel in respect to the liquid through the use of a pump. Pressure loss in the micro-channel causes a change in direction of the flow of the liquid. A pressure sensor detects the pressure of the liquid in the micro-channel and this is provided to the control processing unit (CPU) as a specific value. Another example of prior art is U.S. Patent No. 8,746,269 issued on June 10, 2014 to Shell Oil Company. This patent discloses a method and apparatus for controlling gas flow through a conjunction between one or more incoming streams and one or more outgoing streams. The method utilizes a biased mass flow imbalance value. The flow of the incoming and outgoing streams is adjusted to move the biased mass flow imbalance value towards zero.

Another example of prior art is U.S. Patent Application Publication No. 2014/0332088 filed as U.S. patent application 14/358,547 on May 15, 2014 by Yona Senesh. This patent application discloses a network of conduits distributing liquid and said network being coupled to a supply of liquid and to a network. The flow of the fluid in the conduits is controlled in accordance with an absolute pressure value used to operate the valves in the system that control the flow rate of the fluid.

Another example of prior art is U.S. Patent Application Publication No. 2013/0263611 filed as U.S. patent application 13/442,897 on April 10, 2012 by International Business Machines Corporation. This patent application discloses automated control of a cooling system that is responsive to the predicted probability of fail exceeding a first acceptable threshold or the expected residual life being below a second acceptable threshold. The system requires measuring the cooling system to identify absolute pressure values that are used to determine if the first or second thresholds have been exceeded or not reached.

Another example of prior art is U.S. Patent No. 3,729,051 issued on April 24, 1973 to Gerald F. Mannion and James R. Mannion. This patent discloses a flow regulation unit and system for regulating the flow of chilled water, hot water or other incompressible process fluid to a series of stations. The valves in the system that control the flow of fluid in the system are set to specific absolute pressure values.

The prior art includes references that disclose inventions specifically focused upon the control of the position of valves. These prior art references involve setting a valve to a specific position that represents an absolute state level change. These prior art systems do not involve differential increments of changes of the valve position to achieve balanced line pressure loss in a system. These prior art systems further generally involve setting a valve in accordance with a specific absolute pressure value. Some examples of this type of prior art include the references below.

An example of the prior art is U.S. Patent No. 8,788,105 issued on July 22, 2014 to Oventrop GmbH & Co. KG. This patent discloses a heating-cooling system wherein flow in zones within the system is adjusted by controlling the respective valves to cause the value of the differential pressure in the zone to correspond to a set-point value.

Another example of prior art is U.S. Patent No. 6,155,283 issued on December 5, 2000 to The Foxboro Company. This patent discloses a valve position controller tuning method that incorporates a valve position controller activated by a valve position controller output signal to cause the valve positioner to move the valve flow modulating member from one stuck position to another stuck position.

Another example of prior art is U.S. Patent No. 8,109,289 issued February 7, 2012 to Honeywell International Inc. This patent discloses a valve balancing unit coupled with a valve. The method of the invention incorporates adjusting the setting of a valve to a specific valve position corresponding to a target flow rate at that valve, in accordance with a specific differential pressure level.

Another example of prior art is Natasa Djuric, et al, "Optimization of energy consumption in building with hydronic heating systems considering thermal comfort by use of computer-based tools", Energy and Buildings 39 (2007) 471-477. This article discloses a method for determining a specific optimal parameter value to derive thermal comfort within a building.

Another example of prior art is U.S. Patent No. 8024161 issued September 20, 2011 to Honeywell International Inc. This patent discloses a mathematical model and set of available measurements to generate balancing valve settings that are fixed differential pressure settings. The valve is a lockable flow-control valve.

Another example of prior art is U.S. Patent Application Publication No. 2018/0113481, applied for by John Faiczak on November 29, 2016. The patent application discloses a fluid distribution system wherein node units are operable to achieve alterations in fluid pressure, by repositioning balancing valves and/or by alteration of the speed of the system pump.

What is needed is a fluid distribution system that operates so that a balanced fluid flow that ensures that a target level of fluid flow within the system is achieved and maintained throughout the system, so that the needs (such as heating and/or cooling needs, or other needs to achieve a particular environment) of all areas of a building wherein the system is installed are met. What is further needed is a fluid distribution system wherein automatic updates to adjust fluid flow occur based on the identification of an operation locus range wherein all node units in the system can function to cause the system to produce a balanced and high efficiency energy transfer. What is still further needed is a fluid distribution system wherein each node unit incorporates at least one pump.

### Summary of the Invention

In one aspect, the present disclosure relates to a fluid distribution system comprising: one or more nodes incorporated in a conduit; one or more node units incorporated in the conduit, each of the one or more node units being operable to receive information from other node units and from one or more external sources, and to process the received information to produce processed information for the purpose of determining if balanced flow in the conduit and fluid flow at the one or more nodes is achieved and to generate adjustments to generate balanced fluid flow in the fluid distribution system; one or more pumps, whereby each node unit incorporates one pump; a return conduit wherein fluid flows directly to the thermal supply; and said fluid distribution system being operable to maintain balance of fluid flow in the conduit and at each of the one or more nodes after initiation of the fluid distribution system to achieve a high efficiency energy transfer within the fluid distribution system devoid of any of the following: pinpoint settings for any fluid flow value; and pinpoint settings for any pump speed.

In another aspect the present disclosure relates to the fluid distribution system wherein the one or more of the one or more node units are configured into one or more node unit groupings, and each one or more node unit groupings incorporate one of the one or more nodes that is directly upstream or direction downstream of each of the one or more node units in the node unit grouping.

In another aspect the present disclosure relates to the fluid distribution system being operable to determine an operation locus for one or more of the one or more node units, and such node units being operable in accordance with the operation locus.

In another aspect the present disclosure relates to the fluid distribution system being operable to determine an operation locus range for two or more of the one or more node units, and such node units being operable in accordance with the operation locus range.

In another aspect the present disclosure relates to the fluid distribution system wherein one or more node unit groupings are configured in one or more fluid distribution sections, and the fluid distribution system is configured to incorporate the one or more fluid distribution sections, each of said one or more fluid distribution sections being connected to the return conduit on a downstream end.

In another aspect the present disclosure relates to the fluid distribution system wherein one or more of the one or more node units has a thermal load connected downstream thereof and between such node unit and the return conduit.

In another aspect the present disclosure relates to the fluid distribution system wherein the thermal load is a secondary distribution section incorporating an inlet node and at least one node unit.

In another aspect the present disclosure relates to the fluid distribution system further comprising one or more of the following: one or more display units; one or more man machine interface units; or one or more servers, positioned locally or remotely from the fluid distribution system.

In yet another aspect the present disclosure relates to a method for generating and maintaining balanced of fluid flow in a fluid distribution system comprising the steps of: operating the fluid distribution system configured to incorporate: one or more nodes incorporated in the conduit; one or more node units incorporated in the conduit, each incorporating a pump; an electronic communications network (ECN) connecting each of the one or more node units to the one node unit that is directly upstream and to any one or more of the one or more node units that are directly downstream; and a return conduit; and each of the one or more node units: receiving information from other node units and from one or more external sources; processing the received information to produce processed information for the purpose of determining if balanced fluid flow in the conduit and at the one or more nodes is achieved; generating pump speed adjustments to create balanced flow and pump pressure in the fluid distribution system; and transmitting the processed information to one of the one or more node units that is upstream via the ECN; and each of the one or more node units and the pump operating after initiation of the fluid distribution system to achieve a high efficiency energy transfer devoid of any of the following: pinpoint settings for any fluid flow value; and pinpoint settings for any pump speed.

In another aspect the present disclosure relates to the method for generating and maintaining balanced of fluid flow in a fluid distribution system further incorporating the following steps: each of the one or more nodes units determining an operation locus and operating in accordance with the received processed information and the operation locus; and one or more of the one or more node units determining an operation locus range and transmitting processed information that effects operation of the fluid distribution system in accordance with the operation locus range.

In another aspect the present disclosure relates to the method for generating and maintaining balanced of fluid flow in a fluid distribution system incorporating one or more of the further step of one or more of the node units receiving information from an external source that one or more of the following: a thermal load; and one or more external probes.

In another aspect the present disclosure relates to the method for generating and maintaining balanced of fluid flow in a fluid distribution system further incorporating the steps of the fluid distribution system operating to achieve 100% efficient energy transfer from the primary system to the secondary system, and equal flow in any thermal load that is a secondary distribution section and any primary distribution section for the fluid distribution system, said secondary distribution section being downstream of a node unit or a node unit in the primary distribution section, and the secondary distribution system incorporating a node unit that incorporates a fluid flow sensor, and incorporating the following steps: the fluid flow sensor measuring the fluid flow of the fluid in the secondary distribution section; the node unit in the primary distribution section that is upstream of the secondary distribution section measuring the fluid flow of the fluid at said node unit; and said node unit comparing the fluid flow information it receives of the fluid flow in the secondary distribution section to the fluid flow of the fluid in the primary distribution section, and operating to adjust the speed of the pump incorporated in such node unit to thereby adjust fluid flow for the purpose of achieving an equal fluid flow of the fluid in the primary distribution section and the secondary distribution section.

In another aspect the present disclosure relates to the method for generating and maintaining balanced of fluid flow in a fluid distribution system further incorporating the step of the node units generating the net flow target information and a net change report relating to one or more node units downstream of the node unit, said one or more node units downstream of the node unit all being directly downstream of the one of the one or more nodes that is directly downstream of the node unit, the node unit and such downstream one or more node units being configured in a node unit grouping, and said node unit transmitting such net flow target information and net change report to the one of the one or more node units that is directly upstream of said node unit.

In another aspect the present disclosure relates to the method for generating and maintaining balanced of fluid flow in a fluid distribution system further incorporating the step of transferring information in any of the following: from one or more of the one or more node units to one or more display units; bi-directionally between one or more man machine interface units and one or more of the one or more node units; and bi-directionally between one or more servers, positioned locally or remotely from the fluid distribution system, and one or more of the one or more node units; whereby the fluid distribution system is operable in accordance with the information received from the one or more man machine interface units.

In another aspect the present disclosure relates to the method for generating and maintaining balanced of fluid flow in a fluid distribution system further incorporating the step of the one or more node units operating to balance the fluid flow in the fluid distribution system that is one of the following: a constant flow system; a variable flow system; and a combination of a constant flow system and a variable flow system.

In another aspect the present disclosure relates to the method for generating and maintaining balanced of fluid flow in a fluid distribution system further incorporating the steps of the node unit, the node unit, and the node unit, each generating the change report to indicate a requirement for the fluid flow to be increased, decreased, or have a null change at the one of the one or more nodes that is directly upstream thereof.

In this respect, before explaining at least one embodiment of the invention in detail, it is to be understood that the invention is not limited in its application to the details of construction and to the arrangements of the components set forth in the following description or illustrated in the drawings. The invention is capable of other embodiments and of being practiced and carried out in various ways. Also, it is to be understood that the phraseology and terminology employed herein are for the purpose of description and should not be regarded as limiting.

### Brief Description of the Drawings

The invention will be better understood and objects of the invention will become apparent when consideration is given to the following detailed description thereof. Such description makes reference to the annexed drawings wherein:
FIG. 1 is a systems drawing showing a configuration of the elements of a pressure source assembly (PSA), in accordance with an embodiment of the present invention.
FIG. 2 is a systems drawing showing a distribution system incorporating at least two node unit groups, in accordance with an embodiment of the present invention.
FIG. 3 is a systems drawing showing information sharing in a distribution system (ECN), between the node units and external devices by way of an electronic communication network in accordance with an embodiment of the present invention.
FIG. 4 is a chart showing the effects for fluid flow as a function of differential pressure, in accordance with an embodiment of the present invention.
FIG. 5 is a chart showing the effects occurring when increased fluid flow is applied to a node in relation to the operation locus of a node unit, in accordance with an embodiment of the present invention.
FIG. 6 is a flow chart diagram of the operations of a node unit to generate change report information, in accordance with an embodiment of the present invention.
FIG. 7 is a flow chart diagram of the operations of a node unit to process change report information, in accordance with an embodiment of the present invention.
FIG. 8 is a flow chart diagram of the operations of a node unit to process change report information, in accordance with an embodiment of the present invention.
FIG. 9 is a flow chart diagram of operations of a node unit in accordance with loop control to maintain balanced fluid flow in the fluid distribution system, in accordance with an embodiment of the present invention.
FIG. 10 is a flow chart diagram of operations of a node unit in accordance with loop control to maintain the fluid flow of the fluid distribution system, in accordance with an embodiment of the present invention.
FIG. 11 is a flow chart diagram of operations of a node unit in accordance with loop control to maintain the fluid flow of the fluid distribution system, in accordance with an embodiment of the present invention.
FIG. 12 is a flow chart diagram of a node unit valve alteration process, in accordance with an embodiment of the present invention.
FIG. 13 is a systems drawing showing a prior art system.
FIG. 14 is a systems drawing showing a prior art system.
FIG. 15 is a systems drawing showing a prior art system.
FIG. 16 is a flow chart diagram of operations to increase pump speed, in accordance with an embodiment of the present invention.
FIG. 17 is a flow chart diagram of operations to decrease pump speed, in accordance with an embodiment of the present invention.
FIG. 18 is a flow chart diagrams of operations to increase demand flow target, in accordance with an embodiment of the present invention.
FIG. 19 is a flow chart diagrams of operations to decrease demand flow target, in accordance with an embodiment of the present invention.
FIG. 20 shows two linked chart diagrams depicting decreases and conversions for decreasing the demand flow target through the steps of FIG. 19, in accordance with an embodiment of the present invention.
FIG. 21 shows two linked chart diagrams depicting decreases and conversions for decreasing the speed of the pump through the steps of FIG. 17, in accordance with an embodiment of the present invention.
FIG. 22 shows two linked chart diagrams depicting increases and conversions for increasing the speed of the pump through the steps of FIG. 16, in accordance with an embodiment of the present invention.
FIG. 23 shows two linked chart diagrams depicting increases and conversions for increasing the demand flow target through the steps of FIG. 18, in accordance with an embodiment of the present invention.

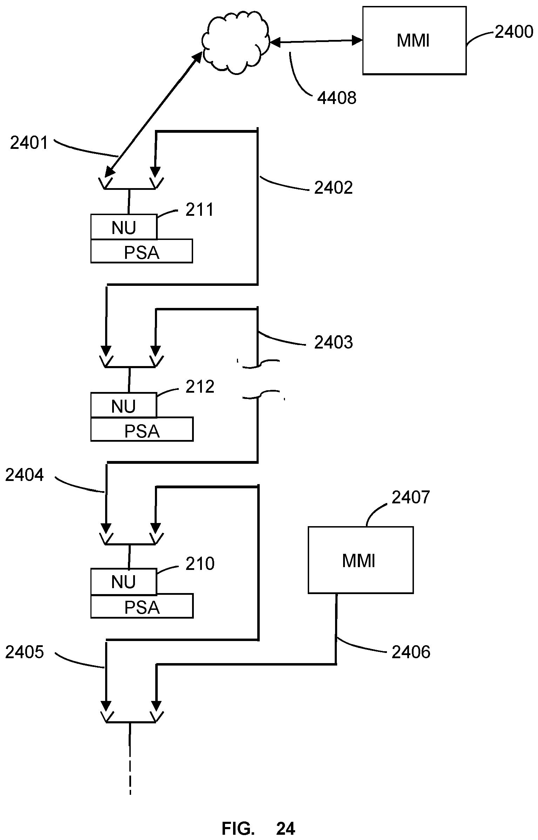

FIG. 24 is a systems drawing showing information sharing in a distribution system (ECN), between the node units and external devices by way of an electronic communication network in accordance with an embodiment of the present invention.
FIG. 25 is a systems drawing showing multiple thermal loads positioned downstream of a node unit, in accordance with an embodiment of the present invention.
FIG. 26 is a chart showing the effects for fluid flow as a function of differential pressure, in accordance with an embodiment of the present invention.

In the drawings, embodiments of the invention are illustrated by way of example. It is to be expressly understood that the description and drawings are only for the purpose of illustration and as an aid to understanding, and are not intended as a definition of the limits of the invention.

### Detailed Description of the Preferred Embodiment

The present invention is a fluid distribution system comprising connected conduits (e.g., lines) wherein fluid flows, such as pipes within a building. The lines may be configured to: (i) include multiple lines that connect at intersections (some of the intersections will be identified as nodes); and (ii) incorporate node units associated with pressure assemblies ("PSAs"). Activities of a node unit incorporating a PSA can result in alterations in fluid flow, such as by a loop control process or other processes to operate one or more pumps. Each PSA has a pump incorporated therein. These alterations adjust fluid flow to cause the system to produce a balanced and high efficiency energy transfer (e.g., heating or cooling), and do not require any: addition of any line (conduit) pressure losses, measuring of differential pressure, or identification or use of any specific, fixed or absolute pressure value. Each PSA functions based on an operation locus for a node unit to adjust the fluid flow.

Notably, prior art systems that function to achieve balanced fluid pressure within a fluid distribution system though adjustments to balancing valves require the addition of line (conduit) pressure losses. Other critical benefits of the present invention over prior art systems are further discussed herein.

The discussions herein may introduce embodiments of the present invention shown in some of the drawings, and a skilled reader will recognize that such discussions are provided as examples to aid the description of the present invention. Other embodiments of the present invention, including embodiments shown in other drawings, may also be applicable.

The term "thermal load" when utilized in this document is to be understood to reference the demand for thermal energy of the system in a particular space within a building (e.g., a room in the building, an area in the building, a section of the building, etc.) where the fluid distribution system is located. The thermal load requirements in different spaces and sections of a building may demand variant thermal energy levels. A balanced system is achieved when the amount of fluid required to address the demand for thermal energy in all spaces in the building is met throughout said building. Meaning the system is balanced when each space in the building receives the thermal energy it requires. The term "thermal supply" when utilized in this document is to be understood to reference the mechanism or device utilized to generate thermal energy within the fluid distribution system. A thermal supply is an energy source of heat or a cooling, such as a boiler or a chiller incorporated in a HVAC system. The thermal supply is operable to inject thermal energy into the fluid flowing through the thermal supply (to create heating), or to remove thermal energy from the fluid flowing through the thermal supply (to create cooling). Such fluid flows from the thermal supply into the fluid distribution system.

The terms "line", "conduit", "pipes" and other words indicating the element of the invention that the fluid flows through in the system are to be understood to have the same meaning. These words may be used interchangeably within this document.

The term "information" when utilized in this document is to be understood to include all forms of information, including data.

The term "operation locus range" references a range that is determined by the system, being a range wherein the fluid flow will be balanced to meet the operational needs of the whole of the distribution system. Identification and generation of the operation locus range may occur in accordance with a number of steps, as discussed herein. The term "operation locus" is applied to an individual node unit and it references an operational range wherein the fluid flow will be balanced at that individual node unit.

The term "pressure" as used herein generally relates to fluid pressure. As discussed herein, one or more pumps that are each controlled by a corresponding pump variable speed drive, may be utilized to control fluid pressure within the fluid distribution system of the present invention. The pumps further operate to maintain a balanced fluid flow. A balanced fluid flow ensures that a target level of fluid flow in the system is achieved. The pumps in embodiments of the present invention, and the corresponding variable pump speed drives, are chosen in accordance with the configuration of the fluid distribution system, as discussed herein.

The term "fluid flow" as used herein generally relates to the volume of fluid conveyed through a PSA connected to a node unit over a period of time. Fluid flow may be calculated as gallons per minute (gpm), or liters per second, or in accordance with some other measurement.

References to fluid flow at a node herein generally relate to calculations undertaken by one or more node units that are downstream of a node to determine the fluid flowing through such upstream node. As such, fluid flow at a node is not the fluid flow measured at the node itself. Node fluid flow is a measurement occurring at the one or more downstream node units based upon activities of such node unit(s) to determine the fluid flow at the upstream node. Nodes may be positioned at intersection of lines in the fluid distribution system, or may be positioned at other locations in the lines, including along straight sections of the lines that do not include any intersection.

For the purpose of this document the term "NULL" indicates a setting, value, status, classification, or change indicator that is null, zero or nothing.

### PSAs

All node units in the present invention are associated with PSAs, and *vice versa.* Therefore, any reference to a PSA should be read to recognize that the PSA is associated with a node unit, and any reference to a node unit should be read to recognize that the node unit is associated with a PSA. References to operations of a node unit should be read to recognize that the operation may be achieved by elements incorporated in the PSA attached to such node unit.

The associated PSA and node unit may be incorporated in a single housing or be configured as attached components. The node unit/PSA combination generally functions to process and generate information, such as values sent as information to the node unit, change reports, or other information transmitted to the node unit, and incorporates many elements having multiple functions, as disclosed here. Thus, the node unit/PSA may incorporate any combination of one or more of the following, memory, program, microprocessor, communication port, and input and output Bus elements in some embodiments of the present invention. Each node unit/PSA incorporates at least one pump. When a node unit is discussed herein the discussion should be read to include the PSA, whether the PSA is explicitly referenced in such discussion or not and *vice versa.* Each PSA of the present invention incorporates a pump.

The present invention is applicable to both constant and variable flow distribution systems.

The PSAs in the present invention may be non-virtual PSAs. References to "line loss" herein should be understood to include virtual and non-virtual line loss.

The description of the present invention herein references graphs and tables representing aspects of the present invention or prior art. These graphs and tables and the discussion thereof may reference specific values or to particular environments that the invention may be utilized within. Any specific values or particular environments referenced are only examples. Other values or particular environments for use of the present invention are also possible.

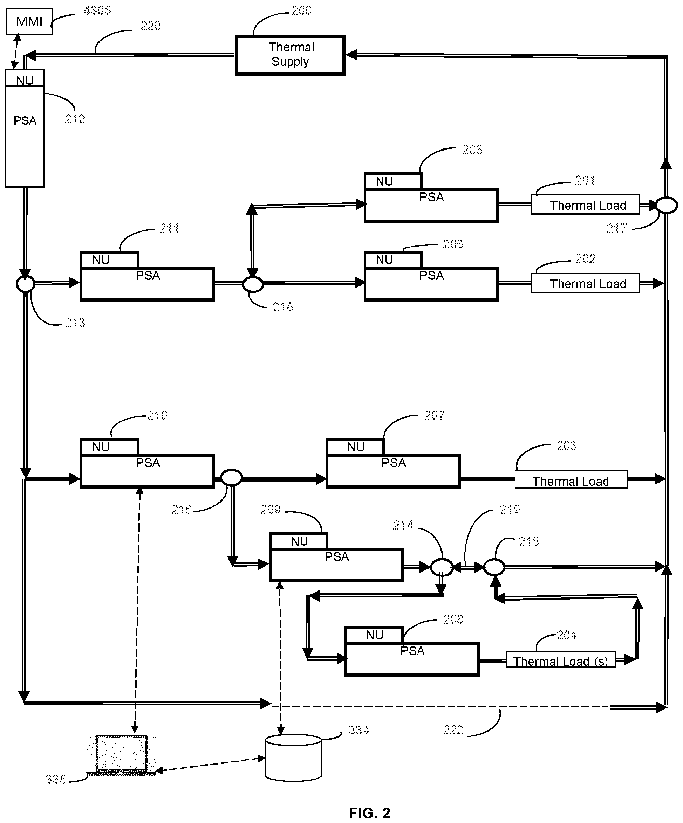

Within this document "downstream" refers to the direction that the fluid flows within the system, whereas "upstream" refers to the direction that is opposite to the direction in which the fluid flows within the system. (For example, the direction of the flow of the fluid is indicated by the arrows associated with the lines, as shown in FIG. 2.)

The lines incorporated in the present invention may include a supply section and a return section. The lines in the supply section are the lines through which fluid flows towards a node unit (i.e., supply lines). The lines in the return section are those directly between the thermal supply and one or more thermal loads. Node units may be positioned in the lines, and may be grouped (i.e., multiple lines may be recognized as a group of lines, wherein node units are located directly upstream and downstream of a shared node, as described herein).

### Nodes

Intersections or other positions in the supply lines that are designated or otherwise identified as nodes may be positioned to be shared by upstream and downstream node units, such as: (i) upstream of one or more node units and downstream of a node unit; or (ii) downstream of a thermal load and upstream of a thermal supply. A node may be positioned upstream of multiple node units, such node units forming a group of node units. A group of node units may collective be referenced herein as a node unit grouping, or a node unit group.

The positions of the nodes in the distribution system are each selected based upon several criteria and facts relating to the distribution system. For example, line distances, service areas, relative magnitude of flows in a distribution section, expertise of a system manager, and knowledge of the system designer can all be individually or collectively utilized as factors in determining the position of the nodes. Nodes can be positioned at intersections of lines within the system, or can be positioned at a point along a line where there is no intersection of lines.

The lines in the return section are the lines through which fluid flows after it has passed through a node unit (i.e., return lines). The fluid flows through the return lines directly to the thermal supply. Nodes can be positioned in the return lines.

### Information Collection and Transfer

The present invention operates to collect information from elements in a fluid distribution system.

The PSA of each node unit is operable to process information, perform measurements, and undertake other activities to generate information relating to the operation of the fluid distribution system. The information collected and generated by the PSA and node unit collectively can be shared with an upstream node unit. The information may be utilized at the upstream node unit, and may be processed by that upstream node unit. The processing of the information results in a determination as to whether each node unit and the system generally are operating in a manner that offers a balanced performance throughout the whole of the building where the system is installed. A balanced performance is achieved when the system functions so that all of the requirements of all of the sections of the system are addressed. The outcome of a balanced performance is an efficient and effective function of the system.

For example, if the fluid distribution system is a heating and cooling system, balanced performance occurs when the heating or cooling requirements for all of the areas within a building are being met simultaneously. Some areas of the building may require more or less heating or cooling than other areas. A balanced system functions in a manner that allows for all areas of the building to receive the heating or cooling that is required in the areas simultaneously, and does so in a manner that is efficient. For example, efficiency is achieved when the least amount of energy required to produce the balance in the system is utilized by the system and balance is achieved in the system.

To achieve and maintain balanced performance the system may require alterations from time to time. The alterations will be made in association with the information collected by and shared within the system. For example, the alterations may involve changes to the speed of one or more pumps, each such pump being incorporated within a PSA. These alterations are made based upon a range of operation values and/or settings generated from the information transmitted to and collected by the node units/PSAs, as discussed herein.

The system does not require that any fixed or absolute value for operational activities, such as any specific pressure levels or exact pump speeds, be identified or set within the system, either prior to the system being initiated or after the system is operating. For example, no fixed absolute pressure setting, or differential pressure setting is required to be set by a person or the system after the system begins running. In this manner the present invention differs from prior art systems that require a system administrator to set fixed or absolute values for functions and operations of the system before the system starts to function, and such values may be indicated in a manual or other document relating to the system. The present invention does not require such a step to occur.

For some embodiments of the present invention, fixed flow values may be applied to the system, and such fixed flow values may be utilized to establish the fluid flow settings of the system or other parameters of the system before the system begins operation. However, after the system is running the system will identify an operation locus range, as discussed herein. Alternations to the speed of the pumps of one or more PSAs will occur in accordance with the operation locus of the individual node units and and/or the operation locus range determined by the system.

The operation locus range is determined by the system of the present invention on an ongoing periodic basis. The operation locus range is amended as required by the system in accordance with the ongoing determination, such that each determination or some determinations may identify a new operation locus range. The new operation locus range will be applied by the system, replacing the previously identified operation locus range. This occurs on an ongoing basis such that the operation locus range is a dynamic aspect of the present invention.

Alterations in pressure can occur in the system due to alterations to the speed of the pumps incorporated in one or more PSAs in the system. Notably, the speed of one or more pumps may be determined and set in accordance with a loop control process that is described herein. The loop control of the present invention is not a proportional-integral-derivative (PID) controller known in the prior art.

There can be multiple node units within a system, and node units may be operable to process information received from one or more downstream node units. Node units may further receive information from one or more probes, system designer information (or information from another third party person or element), and/or thermal loads, secondary distribution system sections, thermostats, external devices (including computing devices), and may operate one or more sensors. All such information is utilized by the node unit to generate information that is sent to the upstream node unit that is operable to process information received from one or more downstream node units.

Any node units located within a secondary distribution section of the fluid distribution section may function in a manner similar to the node unit located in the primary distribution section. Therefore, any processes or functions that are described for a node unit in the primary distributions section should be read as also be in processes and functions that a node unit can perform in any secondary distribution section.

### Shared Nodes

A shared node is a node that is positioned between at least two node units. A shared node will be downstream of at least one node unit, and upstream of at least one node unit. As an example, a shared node may be downstream of a node unit, and upstream of one or more node units. A variety of configurations for the position of shared nodes are discussed and shown herein.

In general, node units are positioned within the distribution system in relation to at least one node. For example, one or more node units may be directly downstream of a node. These downstream node units may send information upstream to another node unit that is directly upstream of the same node. The node that is between the one or more downstream node units and the upstream node unit is known as a "shared node", as it is positioned between at least two nodes units.

A node that is positioned between one or more thermal loads and a thermal supply is not a shared node.

Herein a node unit is "directly" upstream or downstream of a shared node if there are no other elements (such as other node units or other elements) between the node unit and the node in the indicated direction (e.g., upstream or downstream).

Information is collected and/or generated by one or more node units that are downstream of a shared node, and this information is relayed to a node unit that is upstream of the shared node. The upstream node unit (and the PSA associated therewith) process the information collected from and otherwise obtained from the downstream node unit(s). The upstream node unit may operate based upon the information collected or otherwise obtained from the downstream node unit(s).

The upstream node unit may further transfer the results of its processing of the information it receives to a node unit that is upstream of it.

One or more node units that have a shared node unit between them form a node unit grouping. Some node units may be incorporated in more than one node unit grouping, as a node unit may have a shared node with one or more downstream node units, and a shared node with one or more upstream node units. A different node is the shared node for each of these node unit groupings of which a node unit is a part.

The node units that have a shared node between them can each function individually, such as to collect and generate information based on internal sensors, external probes, or information received from any one or more downstream node units (if any such information is received) and/or information provided by the system designer (or information from another third party person or device). Although most node units will receive information from a sensor, thermal load, one or more downstream node units, or a system designer (or information from another third party person or element), it is possible that a node unit may not receive such information.

Each node unit may generate a virtual target demand flow that represents the target flow for the fluid of the system to achieve balanced fluid flow. Each node may also generate a report that reflects information specifically related to whether flow is within the operation locus of the node unit (i.e., a change report). Any of the virtual target demand flow, change report and information collected or generated by the node unit may be sent upstream to another node unit.

As an example, node units function such that fluid flows from a node unit to a downstream thermal load, such that 100% of the fluid flow from the node unit is received by the thermal load. The downstream thermal load may be any of many types of thermal loads. For example, thermal loads may be caused by factors such as heat transfer through the building wherein the distribution system is located from the sun, the earth, and the outside environment (and weather), or heat generated by people, lighting, and equipment inside a building. A thermal load may further be a secondary distribution section, as discussed herein, which, in turn, consists of one or more such individual thermal loads.

Fluid may also flow through a node unit to a downstream shared node and from the shared node to one or more downstream node units. Therefore, the node unit is positioned upstream of: (i) a shared node; and (ii) one or more downstream node units. The one or more downstream node units transmit and send information upstream to the node unit.

There is no maximum number of downstream node units that may be in a node unit grouping. A node unit may operate within the fluid distribution system to balance the fluid flow at the shared node, by maintaining flow in accordance with the virtual target demand flow relating to that node unit. Node pressure may be balanced when the node unit and each of the downstream node units in a node unit group are all operating to maintain flow in accordance with their own virtual target demand flows.

The node unit generates its virtual target demand flow to be equal to the sum total of all the virtual demand flow targets it receives from the downstream node units in a node unit grouping (i.e., the shared node of the node unit grouping is downstream of said node unit). The virtual demand flow targets that the node unit generates is transferred by the node unit to an upstream node unit in its upstream node unit grouping (i.e., the shared node in the upstream node unit grouping is upstream of the node unit). A node unit may utilize loop control to maintain its virtual target demand flow, by operating to adjust the speed of the pump of the PSA connected to the node unit in accordance with an operation locus of that node unit.

A node unit further generates a change report periodically based upon its operation locus. The internal change report, generated by the node unit, is based on the then current operation locus of the node unit (as determined in relation to the operation of the connected PSA). The change report is related to the alteration of fluid flow required at its upstream shared node.

Each node unit may process the information it receives from one or more downstream node units. The result of such processing may be to effect a change in the speed of the pump incorporated within the PSA connected to said node unit. Such effected change may cause the speed of the pump to be increased, decreased, or remain constant, and may further turn the pump on or off.

### Monitoring and Adjusting Fluid Flow

Node pressure is neither monitored nor measured by the present invention. Node pressure is not set to a specific, fixed or absolute pressure value by the present invention. The present invention monitors and adjusts fluid flow within the system. Adjustments of the fluid flow affect the pressure at nodes within the system.

The present invention incorporates an operation system that is operable in accordance with a network of node units, and that can be computer software based. For example, the software may be in a variety of programming languages, such as C, or C++, or any other programming language that is in compliance with the requirements of the microprocessor instructions, set in relation to the microprocessors integrated in the present invention. The platform and software of the system operates to permit incremental adjustment of the fluid flow, that may occur so as to be dynamic and in response to real time information generated by the system, to adjust the fluid flow of each line section that is directly downstream of a node. (The system is operable to adjust each line section that is directly downstream of each of the nodes in this manner.) The network of node units are linked by either or both of the processors and controllers (e.g., microprocessors, communications ports, etc.) that are incorporated in each node unit in the system. The processors and controllers are incorporated in the PSA associated with the node unit, as discussed herein. Information can be transferred between node units in the network of node units.

The node unit utilizes the information it receives to determine whether the speed of the pump incorporated in the PSA attached to such node unit should be altered. If the pump speed is determined to need to be altered then the node unit will send information to the pump incorporated in the PSA connected to said node unit to alter the pump speed.

The node unit network operates to achieve the lowest fluid flow at all nodes that is achievable in accordance with the operation locus range of the system. The lowest fluid flow at all nodes is created by achieving the required fluid flow in all lines in the system of lines within a building. This further achieves the desired flow in all lines that extend from a shared node and for each node unit within the system.

The node network may be operable by a combination of hardware and software elements. For example, the hardware elements of the node units may include a microprocessor, communication ports, memory, and input and output Bus (and these elements may be incorporated in the PSA associated with the node unit). The hardware elements may be of any type that is operable to achieve the required function of the system. Each PSA incorporates a pump with a pump bypass channel and integral check valve.

The node network may further be operable in accordance with program elements, such as software or other instructions that may cause the hardware elements to perform specific functions. As an example, the program elements of the present invention may include communication software drivers installed in the processor and assigned to the communication hardware ports. Industry standard drivers may be incorporated in the system and may include those provided with network protocols, such as LON^{™}, BAC.net^{™}, and Modbus^{™}.

FIG. 2 shows a distribution system that incorporates a variable flow distribution section.

Each node unit shown in FIG. 2 is indicated as a "NU". Each node unit (NU) is shown to be connected to a PSA. The lines may include lines between node units that extend from a shared node. (For example, as shown in FIG. 2 node **213** is a shared node that is between the upstream node unit that is attached to PSA **212** and downstream node units **211**, **210.** Node **213** is therefore a shared node in a node unit grouping that includes the upstream node unit and the downstream node units. As another example, node **217** is a node, that is not a shared node, positioned between the thermal load **201** and thermal supply **200.**

The system is operable to detect a requirement for increased or decreased fluid flow at each node unit. The system can operate the node units and associated PSAs to increase, maintain or lower the speed of the pump incorporated in the PSA connected to a node unit. This ensures that the required fluid flow is achieved in the line sections emanating from each node. The system also maintains the lowest node fluid flow possible at all nodes throughout the system in accordance with the operation locus range relating to each node. The direct adjustment that the system undertakes occurs at the PSAs. The resulting change in pump speed affects the upstream node as well as the downstream return line.

The thermal supply **200** is positioned at the apex of the system, and a node unit **212** is directly downstream of the thermal supply, said node unit is the node that is furthest upstream of all the nodes in the distribution system.

Each node conducts flow from the immediate upstream conduit to one or more downstream conduits. The node itself does not perform any calculations or other activities.

The one or more node units downstream of a node (i.e., a shared node) will each sense a change in fluid flow resulting from any change in the node fluid flow that is related to such upstream shared node. The detected change in flow may be generated by either the activities of the node units that have the shared node in a node unit grouping, or by a change in the speed of the pump in any upstream PSA.

### Loop Control

The system described herein can incorporate loop control processes. A skilled reader will recognize that the loop control processes may be utilized in other applications of the present invention as well as with embodiments of the present invention specifically described herein. In particular, the loop control processes and apparatus of the present invention may adjust the speed of the pump of a PSA. The adjustment may have the effect of altering fluid flow through the PSA within the lines. Therefore, the loop control may be utilized to assist with achieving and maintaining balanced fluid flow within the system.

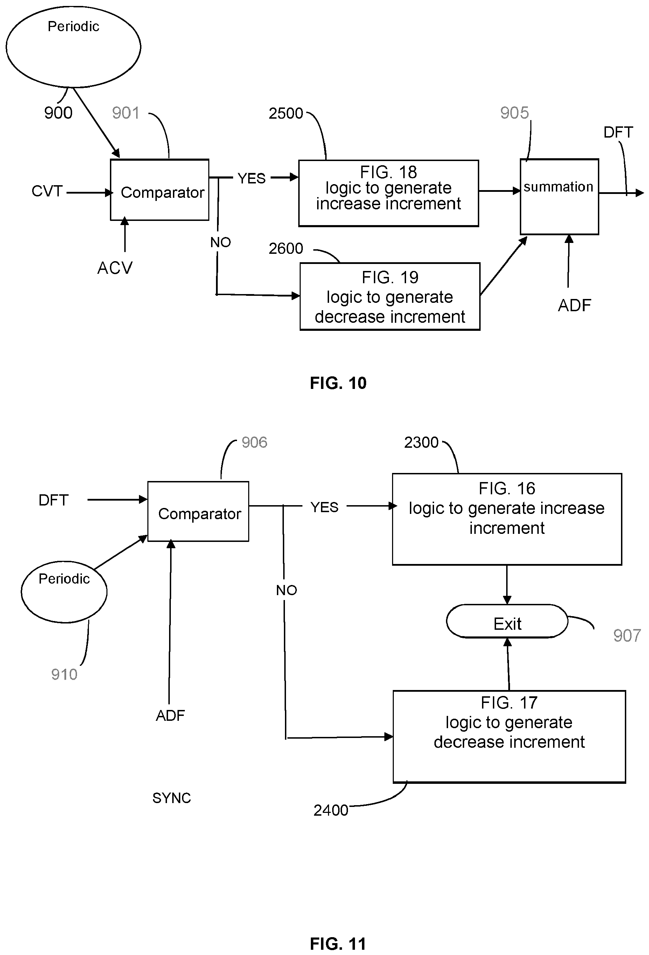

The loop control processes and apparatus of the present invention may also generate the demand flow target, resulting from the loop control operations in maintaining an external control variable at a target setting, as shown in FIG. 10.

The loop control processes may be software based. For example, the software may be in a variety of programming languages, such as C, or C++, or any other programming language that is in compliance with the requirements of the microprocessor instructions (relating to the microprocessor in the one or more PSAs within a loop control section of the conduit of the distribution system), and can be utilized in relation to the microprocessors integrated in one or more of the PSAs of the present invention.

Generally, loop control processes act to automatically control a non-virtual, or a virtual, variable (i.e., an essential non-virtual variable within a system, such as flow) that must be maintained at a particular setting for a period of time during the operation of a process, (such as an operational HVAC system) to a specific virtual target (i.e., as may be defined from time to time, such as demand flow target, during the operation of the loop control process by other elements in the process, or may be defined by the design engineer of the system process). This occurs based on one or both of the following: feedback information that is generated by monitoring the actual state of the non-virtual variable, or virtual variable; and the automatic operation of a virtual transfer function to effect a change of a non-virtual transfer function and thereby effect a change in the state of the non-virtual variable, or virtual variable. A non-virtual transfer function is related to the operation of the loop control in the PSA. Specific loop control processes of the present invention are discussed herein in more detail.

The loop control processes may be operated by elements of a PSA. The PSA may include a processing module incorporated in the program element and/or the microprocessor therein. The processing module may undertake processing of information, such as the flow of fluid within the flow line between the inlet port and discharge port of the PSA as determined by the flow sensor, or other information. The processing may include calculations, algorithms and/or other information processing functions to determine any adjustment required to the speed of the pump incorporated in the PSA that should occur to adjust the fluid flow within the line to achieve balance at an upstream node within the system. Information received and/or generated by the program module may be stored in the memory of the PSA. The operational speed of the processing module will be in accordance with the responsiveness required to achieve the balance of the system in a stable, effective and efficient manner.

The loop control apparatus differs from known PID controllers, as described herein. In particular the loop control apparatus differs from known PID controllers in regards to functionality. Each of the component algorithms incorporated in and operable by known PID controllers is a linear process that does not include non-linear functions (i.e., producing linear reactions). A PID controller may incorporate one or more component algorithms, such as, for example, three component algorithms.

Generally, the loop control apparatus identifies and utilizes a combination of non-linear relationships between the input differential error of the virtual target less the non-virtual variable, or virtual variable, and the output response of the non-virtual transfer function. The non-linear relationship can take the form of an equation, or a set of equations, for example: Output = Mx(Input)x(Input) + C; Output = Mx(Input)x(Input)x(Input) + C; using an exponential equation; a set of linear equations, each dedicated to a specific range of "input"; or any combination of the foregoing and other forms to create a non-linear relationship between "Input" and "Output".

The loop control process of the present invention uses the speed information of the non-virtual transfer function in the calculation it utilizes to generate a determination of the response (Output) to the differential error (Input). The loop control process generates differential increments of change, rather than an absolute level or fixed value of state as an output to the non-virtual transfer function. The loop control incorporates automatic adjustment of response parameters to eliminate instability and dead band cycling of the controlled non-virtual variable.

The loop control process has a significant impact on the commissioning of on-site control loop performance and set-up. Specifically it: (i) substantially reduces the on-site commissioning time to setup, test and re-adjust control loop performance; and (ii) eliminates the need to re-commission the control loops under new and different operating conditions than existed at the initial commissioning time. The loop control further eliminates the need for actuators (i.e., non-virtual transfer function) to be equipped with electronic converters (that can be costly) that provide conversion of an analog signal input to dry contact output increase and decrease signals.

### Benefits

The present invention offers many benefits over the prior art. The present invention is focused upon providing an automated and self-adjusting, dynamic solution to balancing a fluid distribution system. For example, the fluid system may be applied to industries such as heating, ventilation and air conditioning (HVAC) systems, and industrial processes (e.g., accurately separating volumes of liquids or gases, or other processes involving the flow of liquids within conduits or channels). Balancing the fluid distribution system may achieve a desired fluid flow at all destinations throughout the system, while maintaining the lowest pumping energy usage. Thus, the present invention can achieve reduced use of energy and related cost-savings.

Prior art systems apply various flow controls to liquid within a system, such as a HVAC system. These prior art systems generally apply devices that limit flow to attempt to balance the system. The result is that the prior art systems are limited in range and require a setting value (e.g., generally a numerical value that represents a specific, pinpoint setting value - a "pinpoint value" - that is often set in a manual or other instructions relating to the system set-up) for each valve in the system. Generally valves are set in such systems to a pinpoint value that represents a specific absolute flow high limit value. The present invention does not require the identification of any pinpoint value to adjust elements to achieve a balanced flow of fluid in the system. For example, no pinpoint value is identified to adjust the position of any balancing valve or other valve of the PSA, or to adjust the speed of any pump. Instead the present invention identifies an operation locus range and the fluid flow is balanced within the system in accordance with the operation locus range.

The use of the operation locus range by the present invention has several benefits over the prior art. For example, in many prior art systems the balancing valves are initially set manually, and thereafter the valves may be reset manually. In some prior art systems pump speeds may also be set manually. Some prior art permits only automated generation of the pressure settings, and the generated pressure settings are pinpoint values. A skilled reader will recognize that no pinpoint value is required or utilized by the present invention in its automated positioning of any valves or any adjustment of the speed of any pump in the system. The present invention is operable to facilitate automation of pump speeds in accordance with, and within, an identified operation locus range, and/or within the operation loci of specific node units.

Another benefit of the present invention is that it avoids costs incurred to operate prior art systems. For example, the need to adjust valves and the pump speed to a pinpoint value can require manual adjustment, or may involve setting valves to pinpoint settings that cause the system not to be able to operate to achieve overall balance within the system, and that consequently leads to system inefficiencies (or failures). Adjustment of the valves in the prior art to pinpoint settings cannot consistently achieve factors required for balancing of the fluid flow in the system, including achieving: (i) the minimum pump pressure; (ii) accurate fluid flow pump speed settings required for system balance; or (iii) reliable achievement of balanced overall fluid flow. The outcome is that the prior art systems can only achieve a rough or approximate balance in an intermittent and haphazard manner within a system, and pump speeds may not be readjusted so as to try to create continuous overall balance in the system until an issue occurs in the pressure (such as a drop in pressure or a change in the demands of a thermal load). Thus, the costs to operate the prior art systems can be significant. The labour costs to continually adjust the valves can also be sizable in prior art systems. Additionally, as the valve adjustments or pump speed adjustments of prior art systems do not achieve an accurate or consistently reliable balance of fluid flow within such systems, consequently the energy expenditure associated with higher speed pumping and other associated costs are higher for the prior art than the present invention.

Instead of allowing deficiencies to build up to the point where labour costs must be incurred to fix elements of the system, as occurs with the prior art, the present invention is operable to achieve early and immediate indications of flow deficiencies. The process of the present invention does not require any measurement or monitoring of actual node pressure or specific valve settings. The direct adjustment that the process undertakes is at the PSAs, namely an adjustment of the speed of the pumps in one or more PSAs in the system. The resulting change is subsequently effected at the nodes. Therefore, flow deficiencies are adjusted on an ongoing basis and small flaws are corrected. Thus, the adjustments avoid outcomes of flow deficiencies that require labour costs to be incurred to be rectified.

Through its function, the present invention is operable to achieve dynamic adjustment of the fluid flow through adjustments of the speed of pumps incorporated in one or more PSAs in the system, and the outcome is the adjustment of pump speed to cause the pump to operate so as to require the lowest energy consumption possible while maintaining balanced fluid flow throughout the system. The result is that the present invention can achieve a more accurate and consistently reliable fluid flow throughout the distribution system. This occurs because the present invention is utilizing node unit fluid flow to determine required adjustments at pumps located in PSAs positioned in various portions of the system, and the adjustments to the system are made to the speed of such pumps of the PSAs in the system. These adjustments are made on an ongoing basis and in an incremental manner, so as to achieve and maintain consistently balanced fluid flow in the distribution system. This outcome is not achievable by the prior art systems.

Yet another benefit of the present system over the prior art, is achieved through the incorporation of a pump in each PSA in the system. The incorporate of a pump in each PSA causes the present invention to be operable to alter the speed of the pump of one or more PSAs as required to affect the optimum fluid flow at each node, and thereby through the system. The fluid flow can be altered in specific areas of the system by alteration of the pump speed of the pumps incorporated in one or more PSAs relating to the nodes that require alteration of fluid flow to achieve an optimum fluid flow. This directed localized alteration in fluid flow is not achievable by prior art systems that incorporate a single pump for the entire system. Moreover, the adjustment of the speed of one or more of the pumps of the present system is achieved in accordance with information sensed within the system, as described herein, and therefore the pump speed adjustments can cause the fluid flow to be consistently optimum throughout the whole of the system, which is not achievable by prior art systems. The operation of the present invention to alter the speed of pumps in PSAs in the system further has the benefit that the overall energy output to affect the fluid flow within the system, and to keep it consistently at an optimum flow level throughout the system is less than the energy required to adjust fluid flow of prior art systems that require the speed of a single pump or multiple pumps, that are not incorporated in node units in the system, to be adjusted to affect the fluid flow throughout the whole of such prior art systems.

### Prior Art Examples

Examples of some prior art systems are provided herein to better exemplify the benefits of the present invention.

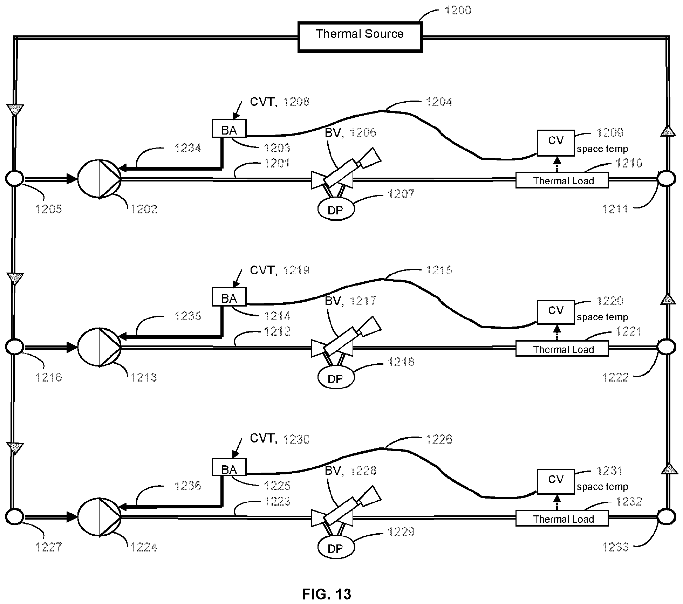

FIG. 13 shows a prior art fluid distribution system that consists of a conduit, that may incorporate conduit branches **1201**, **1212** and **1223** connecting all of the following: the thermal source **1200**, multiple pumps **1202**, **1213** and **1224**, balancing valves **1206**, **1217** and **1228**, conduit inlet ports **1205**, **1216**, and **1227**, and conduit outlet ports **1211**, **1222** and **1233.**

In said prior art system, fluid that flows through a thermal load **1210** will impact the space temperature sensor **1209** connected to said thermal load, such that the space temperature sensor will sense the temperature of said fluid and will capture said temperature as a controlled variable (CV). Such capturing of a temperature CV occurs periodically over time, such as at defined intervals manually set in the space temperature sensor, or in accordance with some other intervals over a period of time while the system is functioning.

Information captured by the space temperature sensor is transmitted by the space temperature sensor to the building automation system (BA or BAS) **1203.** Such transmission of information occurs via a transmission wire **1204.** The BA receives the temperature captured by the space temperature sensor. A system administrator can manually enter a control variable target (CVT) **1208** into the BA. The BA processes the CVT and temperature information, through the operation of a PID controller, to generate a controls signal that it transfers via wire **1234** to an upstream pump **1202**, and upon receipt of such controls signal the pump will respond to the controls signal by either changing its state to an ON or OFF setting. Such transmitting of information and processing by the BA occurs periodically over time, such as at defined intervals manually set in the space temperature sensor, or in accordance with some other intervals over a period of time while the system is functioning.

As shown in FIG. 13, the prior art system may incorporate conduit inlet ports **1205**, **1216** and **1227** positioned downstream of the thermal source **1200.** Each of such conduit inlet ports can connect to a conduit in the system that incorporates a pump **1202**, **1213** and **1224**, that is connected to a balancing valve **1206**, **1217** and **1228**, which is connected to a thermal load **1210**, **1220** and **1231.** Each thermal load may have a space temperature sensor connected thereto operable to generate temperature information and to transfer such information to a BA **1203**, **1214** and **1225.** Each BA may processing temperature information and a CVT manually entered therein, to generate a controls signal that is transmitted to a pump, and can affect said pump by changing the pump's state to either an ON or and OFF setting.

Should all of the pumps in the system be set to ON, the prior art system is manually balanced via adjustment to the balancing valves **1206**, **1217** and **1228**, in accordance with system design flow targets (SDFT) that are identified in a written manual provided with the system, and such adjustments will affect the pressure of the flow of the fluid in the system, and such pressure can be sensed by a differential pressure sensor **1207**, **1218** and **1229** as a differential pressure measurement.

A pump may be set to an OFF setting in accordance with a controls signal received by the pump from the BA, when said controls signal is generated by the BA based upon a temperature captured by the space temperature sensor that is very close (e.g., within one degree Celsius) in value to the CVT that is manually entered into the BA. A pump may be set to an ON setting in accordance with a controls signal received by the pump from the BA, when said controls signal is generated by the BA based upon a temperature captured by the space temperature sensor that is not close (e.g., one degree Celsius or more) in value to the CVT that is manually entered into the BA.

This prior art system shown in FIG. 13 exemplifies a fluid distribution system that is a variable flow system. In such a system, any one or more pumps may be set to OFF at any period of time. When a pump is set to an OFF setting the pump is not in operation.

When a pump **1202** is set to an ON setting while pumps **1213** and **1224** are set to an OFF setting only the flow of pump **1202** passes through the thermal supply **1200** which is now greater than the target balanced flow occurring when all three pumps are set to an ON setting. This difference in total flow is caused by the lower differential pressure losses between conduit outlet port **1211** and conduit inlet port **1205** and through the thermal supply **1200.**

When balancing process is conducted all of the pumps in a system are in the ON setting, each pump operates with a higher differential pressure line loss compared with that existing when only one of the pumps is operating. The result of such operation of the pumps is that the balanced flow is lower than the flow experienced by each pump when it is the only operating pump. The result is that the balance that was previously set manually is not maintained by the system in any state other than when all of the pumps in the system are set to ON and are therefore operating. Thus, this prior art system is not operable to maintain balance within the fluid distribution system.

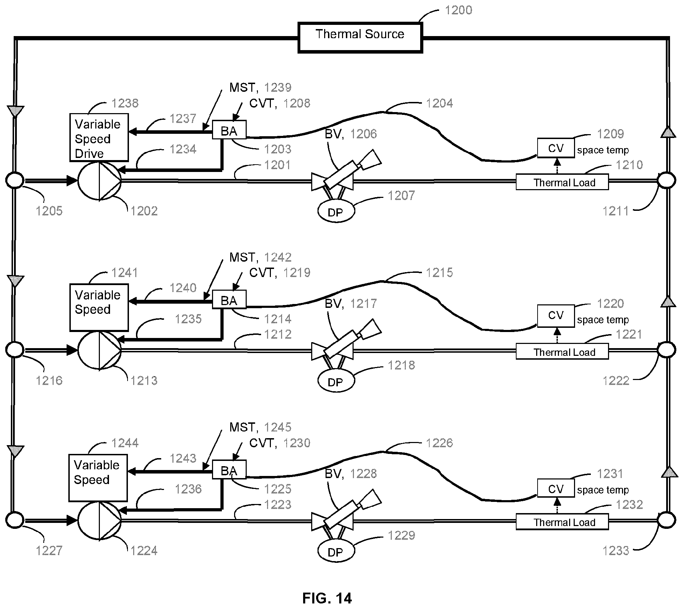

FIG. 14 shows another prior art system that incorporates the elements of the prior art system of FIG. 13, and FIG. 14 further includes a variable speed drive **1238**, **1241** and **1244** being connected to each pump **1202**, **1213** and **1224** in the system. For example, variable speed drive **1238** is connected to pump **1202.**

Each BA **1203**, **1214** and **1225** of the prior art system is operable to receive a manual speed target (MST) provided to the BA by a system administrator. A BA **1203** is operable to transmit said MST provided to it a variable speed drive **1238** via a MST transmission wire **1237.** The variable speed drive processes the MST and as a result of such processing it controls the speed of the pump to which it is connected in accordance with the MST. Such manual entry, processing and transmission of information occurs periodically over time, such as at defined intervals manually set in the space temperature sensor and/or BA, or in accordance with some other intervals over a period of time while the system is functioning.

As shown in FIG. 14, the prior art system may incorporate multiple conduit inlet ports, such as conduit inlet ports **1205**, **1216** and **1227** positioned downstream of the thermal source **1200.** Each of such conduit inlet ports can connect to a conduit in the system that incorporates a pump **1202**, **1213** and **1224**, that is connected to a balancing valve **1206**, **1217** and **1228**, which is connected to a thermal load **1210**, **1220** and **1231.** Each thermal load may have a space temperature sensor connected thereto operable to generate temperature information and to transfer such information to a BA **1203**, **1214** and **1225.** Each BA may processing temperature information, a MST manually entered therein, and a CVT manually entered therein, to generate: (i) a controls signal that is transmitted to a pump and can affect said pump by changing the pump's state to either an ON or and OFF setting, and (ii) to transmit the MST to the variable speed drive to alter the speed of said pump, by increasing or decreasing the speed of said pump.

When all of the pumps in the system are set to ON, the prior art fluid distribution system is manually balanced by: (i) manually incrementally and equally reducing of the speed of all the pumps in accordance with the MST that is manually provided to each BA, and (ii) subsequently adjusting the balancing valves to a position that is sufficiently open that the SDFT is achieved at such a position. The measurements captured by the differential pressure sensors will reflect that the system is balanced at that point in time.

During the balancing process when one or more balancing valve of the prior art system is adjusted to a position that is not operable to achieve the SDFT, then a system administrator will recognize that the last balancing valve adjustment must be abandoned and the speed and balancing valve positions in the system must be left as is in order to maintain balance in the system. At such a point in time the prior art fluid distribution system is balanced, and the pumps are all operating at the same speed.

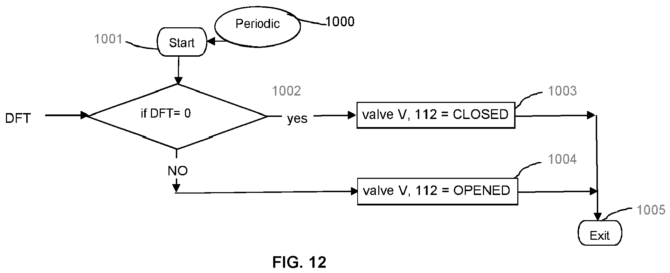

Lowering the speed of all of the pumps in the prior art system can result in a significant reduction in energy consumption of the system, however, should a building administrator increase the MST by providing the increased MST to one or more BAs in the system the balance may no longer be maintained in the system. This prior art system further can be affected by the differential pressure line loss issues occurring between conduit outlet ports and conduit inlet ports as are discussed for the prior art system shown in FIG. 12.

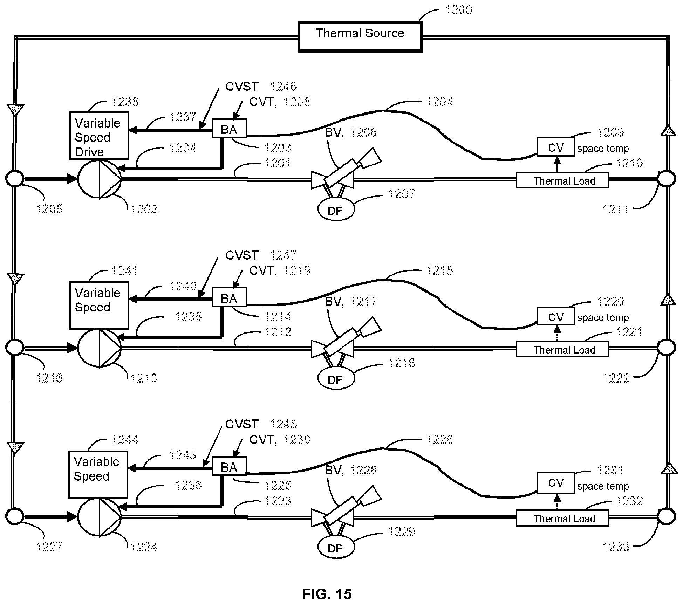

FIG. 15 shows a prior art fluid distribution system that incorporates the elements of FIG. 13, and FIG. 14 further incorporates a BA **1203** operable to generate a control variable speed target (CVST) **1246**, which is utilized in the same manner as is described for the MST in relation to FIG. 15. All manual entry, processing and transmission of information occurs periodically over time, such as at defined intervals manually set in the space temperature sensor and/or BA, or in accordance with some other intervals over a period of time while the system is functioning

As shown in FIG. 15, a CVST **1246** is generated by a BA **1203** and such generation is by operation of a PID controller operating to maintain the temperature captured by the space temperature sensor **1209** at a value close to the space temperature target that is a control variable target (CVT) **1208** that is manually entered into the BA by a system administrator. During each operation of the PID controller the value of CVST that is generated changes incrementally by either an increase increment or a decrease decrement. These incremental changes may be large or small (the determination as to whether an incremental change is large or small will be dependent on the magnitude of the differential between the target value and the actual value of the CVST), depending on the differential between the temperature value captured by the space temperature sensor and the CVT.

The CVST **1246** is transmitted from the BA **1203** to the variable speed drive **1238** via a wire **1237.** The variable speed drive processes the CVST and such processing can result in the variable speed drive controlling the pump to which it is connected to increase or decrease the speed of said pump.

As shown in FIG. 15, the prior art system may incorporate multiple conduit inlet ports, such as conduit inlet ports **1205**, **1216** and **1227** positioned downstream of the thermal source **1200.** Each of such conduit inlet ports can connect to a conduit in the system that incorporates a pump **1202**, **1213** and **1224**, that is connected to a balancing valve **1206**, **1217** and **1228**, which is connected to a thermal load **1210**, **1220** and **1231.** Each thermal load may have a space temperature sensor connected thereto operable to generate temperature information and to transfer such information to a BA **1203**, **1214** and **1225.** Each BA may processing temperature information, a CVST, and a CVT manually entered therein, to generate: (i) a controls signal that is transmitted to a pump and can affect said pump by changing the pump's state to either an ON or and OFF setting, and (ii) the CVST that is transmitted to the variable speed drive to alter the speed of said pump, by increasing or decreasing the speed of said pump.

An incremental increase change in the CVST that is generated by the BA, in comparison to the CVST that was previously generated by the BA, could generate a change that increases the speed of a pump. An incremental decrease change in the CVST that is generated by the BA, in comparison to the CVST that was previously generated by the BA, could generate a change that decreases the speed of a pump. A CVST may indicate to the variable speed drive that the speed of the pump is to be altered from no speed (at which setting the pump is not operational) to an operation speed. In this manner a CVST can cause a pump to be changed from an OFF setting to an ON setting. A CVST may also indicate to the variable speed drive that the speed of the pump is to be altered from an operation speed to no speed (at which setting the pump is not operational). In this manner a CVST can cause a pump to be changed from an ON setting to an OFF setting.

Incremental changes at one pump can create incremental flow imbalances in the system, creating differential line loss pressure differences between the conduit outlet port and the conduit inlet port, as described for FIG. 13. Each BA of FIG. 15, that utilize a PID controller to generate the incremental speed changes, may undertake to generate corrective responses to the imposed changes in flow. In this prior art system, the flow in each pump section is impacted directly by the activity and stability of its neighbour pumps. The higher the frequency of the generation of incremental speed changes, the greater the net disturbance to flow balance of the system may be, and the greater instability of all three controlled variables.

An incremental speed change of any one pump, caused by a CVST results in a change in the differential line loss pressure between a conduit inlet port and a conduit outlet port of each pump. For example, a reduction in the speed of the system pump to a speed that is below the maximum setting will change flow and pressure at all conduit inlet and outlet ports. The cause of this outcome is that the line pressure losses are non-linear functions of flow versus pressure. Reducing the speed in a balanced system (such as a prior art system) will have the impact of destroying the balance due to non-linear issues of line pressure losses versus flow. Thus, each change in differential pressure can create a disturbance at said ports that results in unstable operation within the prior art system. The result is that the balance in the prior art system created by manual balancing valve settings is not sustained over time.

To support manual entry into a prior art system the manufacturer of the system may provide information. For example, a chart may be produced by the manufacturer of the balancing valves that provides this calculation or assistance to achieve the calculation of the target differential pressure value. The balancing technician then can proceed to adjust each individual balancing valve till the measured differential pressure is equal to the target differential pressure value. The balancing technician can then disconnect the portable differential pressure sensor, and physically move to the next sensing location in the system and repeat this adjustment process there.

In some prior art configurations of fluid distribution systems, a computerized system may be utilized to provide determinations of differential project specific pressure targets for each balancing valve. In such a prior art configuration the balancing technician will not be required to manually convert target design flows to a target differential pressure. For example, the conversion may occur through the use of a printed chart, which may constitute a chart displayed on a hand held device (e.g., a smart phone, a tablet, or another hand held device), provided by the manufacturer of the balancing valve.

The prior art has several significant differences from the present invention. These differences will be described in the examples of embodiments of the present invention discussed herein.

### Embodiments of the Present Invention

The present invention is a type of fluid distribution system that incorporates a network of pipes, lines, ducts or other conduits through which the fluid is delivered to thermal loads. The conduit comprises one or more nodes. At some nodes the fluid flow may be redirected into multiple line sections, for example two or more line sections. At such a node the sum total flow entering the node equals the sum total flow entering the downstream node units in the line sections of the conduit, collectively. Embodiments of the present invention may be constant flow systems, variable flow systems, or systems that incorporate a combination of sections that constitute constant and variable flow sections.

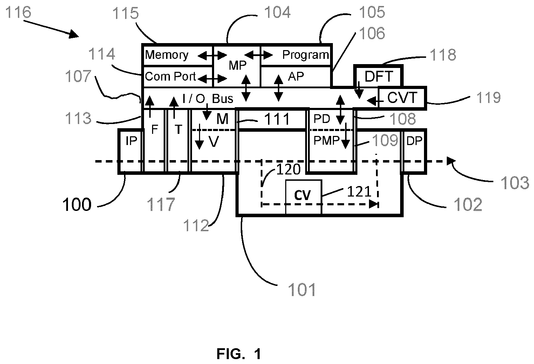

In embodiments of the present invention the conduit and nodes therein may be configured such that fluid flows directly through a node unit to its downstream shared node. Each of the node units downstream of a shared node in a node unit grouping is associated with a PSA. Each of the PSAs may be similar or the same as the PSA **116** shown in FIG. 1.

The present invention may further incorporate an operation system incorporating a node unit network that is an electronic communications network (ECN). The ECN may be operable to receive and send information between node units, and thereby to share information between all forms of node units/PSAs incorporated in the present invention. The ECN may be a separate entity that is located remotely from the conduit but is in communication with the node units. Alternatively, the ECN may be integrated with the conduit and otherwise located locally to the conduit. A remotely located ECN may be operable to receive and send information wirelessly from and to the node units/PSAs and to process information in a remote processor and store information in a database in a remote server.

One or more displays or man machine interface units (MMIs) may be integrated with or otherwise connected to the ECN, through a wired or wireless connection, whereby a user may view information, reports or other information related to the system of the present invention. In some embodiments of the present invention such information, reports or other information may be viewable by a user on an electronic device, such as a laptop, personal computer, smart phone, tablet or other device.

### PSA Elements & Configuration Examples

An embodiment of a PSA is shown in FIG. 1. A skilled reader will recognize that this is an example of a PSA incorporated in the present invention, and that the PSAs of the present invention may incorporate one or more of the elements and functions of the PSA shown in FIG. 1, and may further incorporate additional elements and functions, or may incorporate the elements in a different configuration than is shown in FIG. 1. All PSAs of the present invention will incorporate pump **109.**

Fluid flowing within the conduit of the present invention passes through the PSA, and the flow of the fluid within the PSA is indicated by flow lines **103**, **120.** The arrows incorporated in the flow lines indicate the direction of the flow of the fluid. The fluid enters inlet port **100** and exits at discharge port **102.** The inlet port and discharge port are attached to a conduit through which the fluid is flowing, such that the fluid continues its flow from a section of conduit, through the PSA and back into another section of the conduit, or the PSA may be configured to encompass the conduit.

The flow line that the fluid follows when flowing through the PSA will depend on the setting of check valve **121.** The setting of the check valve operates to open and close the pump bypass channel **120.** The pump bypass channel provides an alternate flow path to the path through the pump required when the pump is in an active state (set to ON). Fluid flows in the same direction whether flowing through the pump bypass channel or through the channel that exists through the pump operation components. The pump bypass channel provides path that results in a lower pressure loss that the channel through the pump operation components. A greater volume of fluid will flow through the pump bypass channel than flows simultaneously through the path that passes through the pump operation components.

When the check valve is set such that the pump bypass channel is open, the fluid flow through the pump bypass channel results in a significant reduction in pumping energy consumption, as the pump bypass channel is opened when the pump is set to OFF (a deactivated state). The fluid flow through the pump bypass channel will occur when the node unit to which the PSA is attached generates a DFT that is greater than a zero value and the pump of said PSA is not set to ON (the pump is set to OFF, a deactivated state).

The check valve, which is integral to the pump bypass channel, will be set to close the pump bypass channel, and thereby stop the flow of fluid through the pump bypass channel, when the pump of the PSA is set to ON (an activated state). When the pump bypass channel is closed all of the fluid flow will flow along the path that passes through the pump operation components.

The PSA may generate fluid flow based upon the operation locus range and/or operation locus of a specific node unit. As described herein, the operation locus range is determined by the system and represents a range wherein the fluid flow will be balanced to meet the operational needs of the whole of the system. Identification and generation of the operation locus range may occur in accordance with a number of steps. For example, the PSA may receive information from downstream node units via the ECN. The received information may be processed by the PSA to generate fluid flow information, represented as an operation scale relevant to the PSA and related node unit. The speed of the pump of the PSA may be adjusted in accordance with the operation locus of the operation scale that the PSA generates. The outcome of the adjustment of the speed of the pump or other elements in the PSA may affect the fluid flow in the line to which the node unit is attached, such that the adjustment is experienced by the fluid flow in the line as increased or decreased fluid flow.

In some embodiments of the present invention, the PSA incorporates a pipe section **101** that may extend between the pump **109** and valve **112.** In other embodiments of the present invention, the PSA may incorporate a pipe section that extends between the pump and flow sensor, and/or the between flow sensor **113** and inlet port, or between any of the inlet port, discharge port, or any other combination of the components therebetween, including the flow sensor, the fluid temperature sensor **117**, the valve **112**, and/or pump **109.**

The flow sensor is operable to generate information relating to the flow of the fluid from the inlet port to the discharge port. The information generated by the flow sensor is transmitted to the I/O Bus. The fluid temperature sensor is operable to generate information relating to the temperature of the fluid flowing from the inlet port to the discharge port. The information generated by the fluid temperature sensor is transmitted to the I/O Bus.

The inlet port and discharge port may be configured to be attachable or otherwise connectable to the conduit. For example, the intake port and/or the discharge port may incorporate connections, such as threaded, sweat, compression, or union connections, whereby the PSA is attachable to the conduit.

The PSA further incorporates a microprocessor **104** that is connected to a number of components, including a program element **105**, a memory **115**, a communications port **114** and an input and output Bus (I/O Bus) **107.** Information may be transferred bi-directionally between the microprocessor and any of the connected components.

The connection to the program element in particular achieves a reliable independent operation of the PSA based on the program content that may be a software application or another program that incorporates computer or digital instructions, algorithms, calculations, information content, information generation or other functions.

The connection to the memory enables the PSA to retain information relating to the recent performance of the PSA unit. The memory may arrange information into an organized storage configuration, such as storage within an information-based structure. The connection to the memory is operable to achieve detection of instability in the system occurring during the recent past operating period of time. This information can be analyzed by the program to determine the appropriate corrective action. Performance stability in the present invention is a vital performance issue that may be addressed by the loop control process of the present invention, as described herein.

The connection to a communications port is operable to transfer information from one or more node units that are directly downstream of a shared node, to a node unit that is directly upstream of the shared node operating on the ECN. The information shared in this manner between the downstream and upstream node units and PSAs having a shared node in a node unit grouping is utilized by the program to determine how and where the fluid flow occurring at the shared node needs to be adjusted.

The I/O Bus is connected to an element operable to determine the actual real time speed of the pump, such as a pump speed drive **108.** The connection between the I/O Bus and such an element provides the PSA with information regarding the actual real time speed of the pump. Alterations to the speed of the pump creates the changes in the fluid flow associated with loop control process that operates to maintain the target fluid flow at the PSA.

The I/O Bus connection to the motor **111** can be utilized to open and close the valve **112.** In some embodiments of the present invention, the motor may be a solenoid and the valve may be a solenoid-actuated valve or a motor-actuated valve. The valve **112** is not a balancing valve.

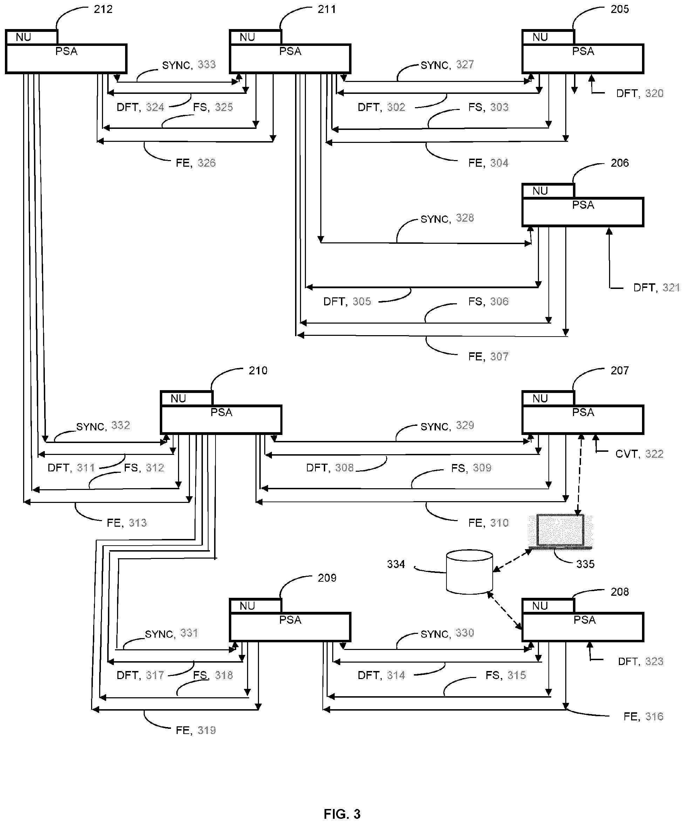

The I/O Bus **107** is further connected to an auxiliary input and output port **106** operable to perform optional operations incorporating additional devices, such as a temperature probe, and control devices such as a relay output device, etc., which may be used in some embodiments. An embodiment of the present invention wherein the auxiliary input and output port connects to a temperature probe is shown in FIG. 3, wherein the controlled variable **312** incorporates information obtained from such a temperature probe device.

### System Elements & Configuration Examples

As shown in FIG. 2, the present invention will incorporate a node unit **212** that is directly downstream of the thermal supply. The node unit is operable to receive information from the one or more downstream node units. Said node unit is the most upstream node unit in the system (i.e., the node unit that is directly downstream of the thermal supply).

FIG. 2 shows an example of a portion of a fluid distribution system, and in particular a configuration of line sections of a system that are ultimately connected to the thermal supply of the system. As indicated by dotted line 222, additional lines, nodes, node units, and thermal loads may be incorporated in the system that are not shown in FIG. 2. The configuration of the system may be specific to the building wherein such system is incorporated. Embodiments of the present invention may incorporate multiple shared nodes within a system that may have similar configurations to any of the shared node configurations shown in FIG. 2. All node units may transmit information in a similar manner to the node units shown in FIG 3.

As shown in FIG. 3, generally, information of a node unit of the system will be transferred to the upstream node unit that has a shared node with the node unit transferring the information in a node unit grouping. An upstream node unit that receives information from one or more downstream node units will generally consolidate the information it receives with any information it has generated in relation to the operation of its PSA. The consolidated information will be transferred to an upstream node unit in a node unit grouping that includes the node unit that is transferring the consolidated information. The final upstream node unit (i.e., the further upstream node unit), namely the node unit that is directly downstream of the thermal supply, will receive such consolidated information from one or more downstream node units (and it will process the information it receives and/or consolidate that information). The final upstream node unit may utilize the information to determine whether any alteration in the thermal supply is required in the system, in which case a signal may be transmitted to the thermal supply to cause such alteration to occur. As an example, such information may be utilized to alter the temperature of the fluid discharged from the thermal supply and/or to alter the activation status of one or more thermal loads in the system (e.g., one or more thermal loads that were not previously activated may be activated, and/or one or more thermal loads that were previously activated may be deactivated).

As shown in FIG. 2, a fluid distribution system of the present invention can include a conduit **220** that may be a line, pipe, tube, or other enclosed conduit wherein the fluid can flow. The conduit can have multiple sections within the fluid distribution system. The fluid distribution system also incorporates one or more nodes **213**, **218**, **217**, **216**, **214**, **215.**

A node may be positioned upstream from one or more node units, or downstream of a thermal load. For example, node **218** is positioned upstream from node unit **205** that is connected to PSA. Thermal load **201** is downstream from node unit **205.** As another example, node **213** is be positioned upstream of node unit **211** that is connected to a PSA. As yet another example, node **217** is positioned downstream of thermal load **201.**

There are multiple possible configurations of the present invention, and the nodes, node units, thermal loads and thermal supply within such distribution systems. Not all embodiments of the present invention are configured such that a node is positioned upstream from all node units. In one embodiment of the present invention, a node unit may not have a node between it and the thermal supply. For example, as shown in FIG. 2, node unit **212** is positioned directly downstream of the thermal supply **200**, and there is no node therebetween.

As shown in FIG. 2, in embodiments of the present invention a node **216** may be upstream of multiple node units **209**, **207.** The PSAs incorporated in the fluid distribution system each have a node unit attached thereto or otherwise associated therewith. The conduit sections that are downstream of a thermal load, and that return fluid to the thermal supply, collectively form the return conduit.

The node unit that is directly upstream of a shared node may receive information from one or more node units directly downstream of such shared node. Such node unit may further transfer information to any upstream node unit that it has a shared node. The node units directly upstream and downstream of a shared node collectively form a node unit grouping. The transfer of information between node units is discussed in more detail in reference to the ECN herein.

As shown in FIG. 2, there may not be a node unit either upstream or downstream of a node **217** in a particular conduit line section.

Moreover, there may only be a single node unit upstream and a single node unit downstream of a shared node **214** in a particular conduit line section.

An embodiment of the present invention may further incorporate one or more secondary distribution sections. Examples of the configuration of secondary distributions sections are discussed in more detail herein.

The fluid distribution system of the present invention transmits thermal energy from the thermal supply **200** to thermal loads **201**, **202**, **203**, **204.** Each node in the system is a defined portion of the conduit, and the fluid flowing within the conduit therefore flows through each node. Each node incorporates a node inlet port, whereby fluid flows into the node, and at least one node outlet port, whereby fluid flows out of the node and into one or more conduits beyond the node. When fluid flow through a node 100% of the fluid that flows into the node through the node inlet port flows out of the node through the at least one node outlet port. There is no fluid loss at a node.

Fluid flowing through the conduit further flows through one or more node units. All node units, and the PSA connected to each node unit, operate in the same manner with respect to achieving fluid flow balancing throughout the system. The node units and the PSA connected to each node unit further operate in a manner whereby each consumes the least amount of energy as is possible while delivering the fluid flow to all thermal loads in accordance with the fluid demand for each thermal load.

Each node unit achieves a delivery of fluid flow at a magnitude that is equal to the demand flow target (DFT) that is provided to said node unit by the ECN by adjustments to the speed of the pump in said node unit. Each node unit discharges fluid flow from said node unit to the thermal load that is downstream of said node unit. Fluid flows through a thermal load into the conduit downstream of the thermal load and to the thermal supply.

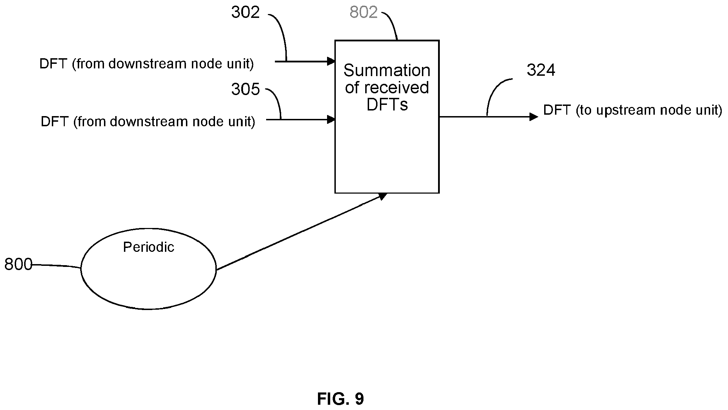

The DFT that is received by a node unit is calculated by the system to be the sum of the DFT required at the inlet port of the node that is downstream of said node unit. Said node receives fluid flow from the discharge port of said node unit. The DFT thereby is calculated to reflect the fluid flow demand required for the discharges at the one or more node outlet ports of said node, such fluid flow flowing downstream so that it is received at the node inlet ports of one or more node units positioned downstream of the node. FIG. 9 provides a description of calculations relating to fluid flow through (across) a node.

As shown in FIG. 2, node units **205** and **206** receive fluid flowing from node **218.** The fluid flows through node **218** from inlet port of said node to the one or more outlet ports of said node. Such fluid must therefore achieve the fluid flow demand required for node units **205** and **206** in order for a balanced fluid flow to be achieved in the system, and the fluid flow required for thermal loads **201** and **202** to be maintained. Information relating to the DFT required at node **218** is transferred to node unit **211** (that is upstream of node **218**)**.** The DFT calculated for delivery to node unit **211** is therefore the sum of the DFTs of node units **205** and **206.** The operation of the pump incorporated in the PSA that is connected to node unit **211** is therefore dependent upon the DFT of node units **205** and **206.** Node unit **211** will set the speed of said pump in accordance with the requirements to maintain the DFT provided to it via the ECN. Node unit **211** will then operate to maintain the flow that achieves the DFT, until a new DFT is provided to node unit **211** via the ECN. At all times the operation of node unit **211** and the speed of the pump incorporated in the PSA connected to such node unit is in accordance with the operational status of node units **205** and **206.** Each node unit operates in the same manner in accordance with the DFT generated in relation to the node that is downstream from said node unit and the operation of the one or more node units that are downstream from said node.

Systems of the present invention may further incorporate secondary distribution loops. As an example, thermal load **204** exists in a secondary distribution loop. Thermal load **204** receives its thermal energy from thermal supply **200** that is incorporated in the primary distribution loop. Node **214**, positioned between the primary distribution loop and the secondary distribution loop, experiences balanced fluid flow when there is no direct fluid flowing between nodes **214** and **215**, meaning there is zero (NULL) fluid flow between said nodes.

The secondary distribution loop incorporates at least one node unit **208**, and said node unit operates to maintain a DFT **323** received externally or via the secondary ECN as the demand flow total of the secondary thermal loads. Information relating to the operation of node unit **208** is transferred via the ECN to node unit **209** that is upstream of node unit **208**, and upstream of shared node **214.** When node unit **209** operates to maintain the DFT required to balance the system at node **214**, node **214** has the identical flow level entering its node inlet port as is being discharged from the node outlet port that leads into the secondary distribution loop towards node unit **208**, and no (zero) fluid flow is discharged from the outlet port of node **214** that is connected to conduit section **219.** As a result there is no fluid flowing between node **214** and node **215** along conduit section **219** in any direction (e.g., towards or away from node **214** or node **215**). Thus, when the fluid flow of the system is balanced nodes **214** and **215** function as separate and unrelated nodes, not nodes that are upstream and downstream of each other in relation to fluid flow to or from either node. In this state the secondary loop effectively become part of the primary distribution loop, and the secondary distribution loop does not experience any fluid flow entering the secondary distribution loop for a second time immediately after such fluid has left the secondary distribution loop at node **215.** Such fluid flow entering the secondary distribution loop for a second time will occur when fluid flows from node **215** to node **214**, and from node **214** downstream to node unit **208.**

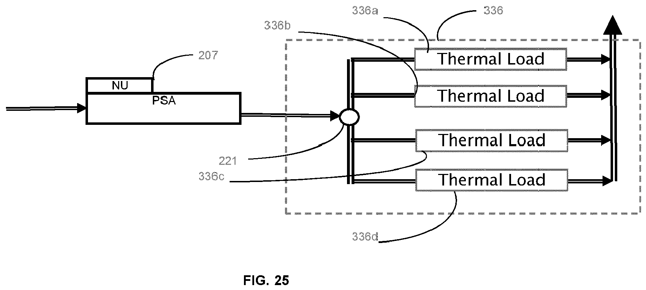

Other embodiments of the present invention, including other configurations of conduits, thermal loads, nodes and node units within the system are possible. As one example, thermal load **203** may represent two or more identical thermal loads, installed in parallel with almost identical piping and require identical, fixed or variable, DFTs for fluid flows (as shown in FIG. 25). The system designer may opt not to include node units within such a configuration of an embodiment of the present invention that incorporates two or more identical thermal loads (a thermal load set, or a combination of multiple thermal loads, as shown in FIG. 25), as said system design will recognize that some non-critical fluid flow imbalances may occur within the set of thermal loads. In such an embodiment of the present invention, the fluid distribution system will be balanced, excepting the portion thereof where the set of thermal loads is located, and such balance will be achieved by the system operation in accordance with the total value of DFTs for the thermal load set for the operation of node unit **207.**

As an example, as shown in FIG. 25, a thermal load set may be configured to include four separate thermal loads that are positioned downstream of a node unit. For example, a set of thermal loads **336a**, **336b**, **336c**, **336d** may be positioned downstream of a node unit **207.** A single node **221**, may be positioned between the node unit and the multiple thermal loads **336a**, **336b**, **336c**, **336d.** This is simply an example, and multiple thermal loads can be positioned downstream of any one or more node units within the system, in the present invention.

All thermal loads in a set may be identical in function, having conduit pressure losses that are equal or near-equal. In some embodiments of the present invention, the multiple thermal loads may collectively function in manner whereby the multiple thermal loads are recognized by the system to function as a single combined thermal load **336.** A DFT or a CVT must be provided to the node unit that is upstream of such single combined thermal load.

A DFT for a thermal load set may be provided by a designer of the fluid distribution system, and must represent the total flow required for all of the multiple thermal loads **336a**, **336b**, **336c**, **336d** in such set, that are all positioned downstream of a single node unit **207.** Such a DFT may be provided as a building automated systems (BAS) hardwired signal, as an entry of an operator of the fluid distribution system via the ECN, as a BAS communication signal, or as a CVT that is communicated via a device (e.g., a thermostat, sensor device, laptop, smart phone or other device) that is connected to a node unit (either via a hardwired or wireless connection). The CVT must represent the dynamic flow demands of all of the multiple thermal loads operating in the flow total range of all of the thermal loads in the set. The DFT and CVT signals may be constant or variable.

Each conduit section in the system may incorporate one or more node units. For example, as shown in FIG. 2 a conduit section may incorporate a single node unit, such as node unit **212.** As another example, a conduit section may incorporate multiple node units between a node **213** and a return conduit that flows directly to the thermal supply, such as node unit **211** and node unit **206.** The discussion and drawings referenced herein further show other configurations of one or more node units positioned in one or more conduit sections within a distribution system. A skilled reader will recognize that other configurations of one or more node units and one or more conduit sections are possible within a distribution system of the present invention.

There are multiple possible configurations of the system of the present invention. As an example, as shown in FIG. 2, node unit **210** is upstream of node **216.** Node units **207**, **209** are downstream of node **216.** Therefore, node **216** is a shared node of upstream node unit **210** and node units **207**, **209.** Collectively node units **210**, **207** and **209** form a node unit group around and relating to node **216.** Information transmitted by node units within the system can flow from each one or more node units that are downstream of a shared node to the node unit that is upstream of the shared node. Therefore, information transmitted by node units **205**, and **206** is received by node unit **211.**

Information may further be transmitted or otherwise transferred bi-directionally between one or more node units and an external device, such as one or more of the following: a man machine interface unit (MMI) **4308**, a server **334**, and/or a computing device, such as a laptop **335**, or other computing device. Such information may be transferred along a wired or wireless connection between any of a MMI, service or computing device and any one or more node units. Any external device may be positioned in proximity to the system, such as within a building wherein the system is located, or remotely from the system, such as many kilometers away from the building wherein the system is located.

As shown in FIG. 3, such one or more external devices may be incorporated in and/or connected to the ECN to transmit information bi-directionally with one or more node units such as any of the following: a computing device **335**, a server **334**, or one or more other devices, including one or more of the following - other computing devices, MMIs, thermostats, sensor devices, etc.

Any node unit that has a shared node with another node unit positioned upstream of said node unit, may transfer information upstream to said upstream node unit, or the upstream node unit may transfer information downstream to the one or more node units directly downstream of said node unit. For example, node unit **211** may transfer information upstream to node unit **212.** Node **213** is a shared node between node unit **211** and node unit **212**, node unit **212** and node **213** being upstream of node unit **211.** FIG. 3 therefore shows how data is shared through the electronic communication network (ECN) of the present invention, whereby the node units may operate in accordance with such data to balance the fluid flow in the system.

Each node unit and the PSA attached thereto processes the information it receives and can adjust elements in said node unit and the PSA attached thereto in accordance with the results of such processing. Such adjustments can include adjusting the speed of the pump incorporated in the PSA attached to said node unit. The adjustment of the speed of the pump will affect the fluid flowing through said node unit, and the fluid flow downstream from the node unit. In this manner the processing of the information by the node unit has the effect of affecting downstream fluid flow in accordance with information received from a downstream node unit. The fluid flow is thereby affected in a manner that responds to the requirements sensed by the downstream node unit to balance the fluid flow at such downstream node unit. The information such downstream node unit sends to the upstream node unit indicates the requirements for fluid flow reaching such downstream node unit to create balance in the system. This balancing of fluid flow in the system and at nodes achieves distribution of the ratio of discharge flow from a node unit outlet through a node and to the inlet port of the node unit that is downstream from such node.

The adjustment of pumps in node units to perform balancing that achieves particular fluid flow at nodes has the beneficial outcome of minimizing the energy consumption of the pumps in the system. The lowest possible pumping energy is consumed at each node unit. Specifically the least amount of energy consumption of the pumps in the system is achieved. The result is that the present invention incurs significant energy savings in comparison to prior art systems, and is energy efficient and cost-efficient to operate.

The information that is transferred from a downstream node unit to an upstream node unit can include several types of information, including: a demand flow target (DFT) **324, 302**, **305**, **311**, **308**, **317**, **314**, **323**, **320**, **321**, **323**, that is a numeric value; flow status (FS) **325**, **303**, **306**, **312**, **309**, **318**, **315**, that is "High", "Low; and flow error (FE) **326**, **304**, **307**, **313**, **310**, **319**, **316**, that is a numeric value. In some embodiments of the present invention synchronization information (SYNC) **333**, **327**, **328**, **332**, **329**, **331**, **330** can be transferred from an upstream node unit to a downstream node unit, as a "Tag" or another status indicator.

DFT is the flow required in the system that is generated by a node unit (and its attached PSA) when it processes information that is received by said node unit from one or more downstream node units. A DFT is received either at the I/O ports or via the ECN port of the PSA attached to a node unit. A node unit **212** operations to maintain a DFT **324** setting that is transferred to such node unit from a downstream node unit **211** by modulating the speed of the pump in node unit **212.** The modulation of said pump in turn generates the additional or augmented fluid pressure required to produce the measured DFT flows in the fluid flow that flows downstream to node unit **211.**

Other information can also be transferred into one or more node units within the system. For example, a control variable target (CVT) **322** is set externally and received either at the I/O ports or via the ECN port of a node unit, such as node unit **207.** Such node unit incorporates the CVT into its processing of the data that it receives and that it utilizes to adjust its elements, including the pump incorporated in such node unit (in the PSA attached to said node unit). In an embodiment of the present invention, that is a fluid distribution system for heating and air conditioning (HVAC) application, CVT may be a temperature target setting. The temperature setting may be set at a thermostat or other device that relates to a particular area within the building where the present invention system is installed. For example, if the present invention system is installed in an office building, the CVT may be a temperature setting to which a person adjusts a thermostat in a particular office within the building. The thermostat will transmit the CVT to the present system and the CVT will be directed to a node unit of the present invention that is thermally associated with the area in the building where such thermostat is located.

The node unit that receives CVT may apply a loop control algorithm or other calculation in its processing of such information to generate the DFT required to maintain such CVT that is a target temperature setting. Once generated a DFT can be maintained by said node unit that is directly upstream of a thermal load, such as is incorporated in an HVAC fluid distribution system, will operate to transmit the received DFT to an upstream node unit. For example, node unit **205** receives DFT **320** and said node unit will process said received DFT for the purpose of modulating the speed of the pump incorporated in the PSA attached to the node unit. Such modulation of the speed of the pump may be an increase or a decrease in the speed of the pump, and such modulation will result in the generation of fluid pressure required to product the measured fluid flow at an actual demand flow (ADF) that is maintained at the received DFT. Node unit **205** sets a DFT value that it generates, DFT **302**, to be equal to the DFT that it received (whereby DFT **302** is set to be equal to DFT **320**)**.** Node unit **205** transmits the DFT value that it has generated, DFT **302**, to the upstream node unit **211.**

An upstream node unit that is directly upstream of multiple node units will receive multiple DFT values, as each downstream node unit may transmit a DFT value to said upstream node unit. (For example, upstream node unit **211** will receive DFT values from downstream node units **205, 206**.) Upon receipt of the DFT values, DFTs **302**, **305**, the upstream node unit, node unit **211**, will process the received DFTs to generate a DFT value, DFT **324.** The DFT generated by the upstream node unit will set as equal to the sum of the received DFTs **302**, **305.** The generation of the DFT value by the upstream node is shown in FIG. 9.

If the pump incorporated in the PSA attached to the upstream node unit, node unit **211**, is set to ON (an active state) and the ADF value of said node unit is not equal to the DFT value generated by said node unit, then said node unit will modulate the speed of said pump to generate fluid pressure changes that are required to product the measured fluid flow ADF that will be maintained at the DFT **324.**

Examples of possible modulations of the pump include the following:
- When the pump of the node unit is set to ON and ADF of a node unit is equal to the DFT generated by said node unit (as an example, the ADF and DFT **324** are equal for node unit **211**) the pump incorporated in the PSA attached to said node unit is kept in the ON setting (an activated state) and at last speed setting.
- When the ADF of the node unit is less than the DFT generated by said node unit (as an example, the ADF and DFT **324** are not equal for node unit **211**) and the pump incorporated in the PSA attached to said node unit is set to OFF (a deactivated state), the solenoid valve of the PSA will be open and the majority of fluid will flow through the pump bypass channel and from the pump bypass channel through the open check valve to the downstream shared node. Some fluid will pass through the channel that exists through the pump operation components which are inoperative while the pump is in the deactivated state.
- The pump will remain set to OFF until the node unit receives FE and FS information for the one or more downstream nodes (as an example, node unit **211** receives FE and FS information for node units **205** and **206**) and such FE and FS information is processed by said node unit that receives such information. The pump may be altered from an OFF setting in accordance with the results of the processing of the FE and FS information.

In this manner, as each node unit receives information from at least one downstream node unit, and potentially CVT from sources external to the system, and adjusts its elements in accordance with the processing of such information. The result is that the fluid flow is balanced in the system and is continuously maintained to remain balanced.

The system functions such that node unit **211** is directly upstream of two node units **205**, **206.** Node unit **211** is downstream of node unit **212.** Node unit **211** receives a DFT **302**, **305** from each of the downstream node units. Node unit **211** processes the DFT values it receives and sets the DFT **324** it sends upstream to node unit **212** as equal to the sum of the DFT values it receives. If the node unit's processing of the information it receives indicates that adjustments are required, node unit **211** adjusts its elements, including the pump therein, in accordance with its processing of the DFT values it receives.

FS indicates a balanced status, and thereby indicates if a balanced state has been achieved, and if a balanced state is not achieved FS indicates whether there is a flow deficiency, or a flow excess of the node unit that generates the FS. FS information is set to either a "High", "Low" or "Normal" status. A FS status received by a node unit is processed by said node unit to determine whether the operational state of the pump incorporated in such node unit requires any adjustment. For example, if the FS received by a node unit indicates a flow deficiency is experienced by the downstream node unit, the pump incorporated in the PSA attached to said node unit is modulated so that it is set to ON (an activated state), and the speed of the pump of the node unit that received such FS can be altered to increase pressure to thereby increase fluid flow to the downstream node and in turn eradicate the fluid flow deficiency at the downstream node unit.

The FE information, **304**, **307**, **310**, **313**, **316**, **326** indicates an error status as a numeric value. A FE status received by a node unit is processed by said node unit to determine whether the operational state of the pump incorporated in such node unit requires any adjustment. For example, an adjustment may be: turning the pump OFF; turning the pump ON; an increase in pump speed; a decrease in pump speed; or a NULL change to the pump speed or state.

Other information can be transferred between node units by the ECN, including information relating to status, alarm condition reports, balancing report and general system performance. All information transmitted along the ECN is transmitted periodically, and can be transmitted upon events occurring in the building wherein the system is installed, periodically (e.g., at regular intervals, or upon other trigger events, such as information being sent to the system from an external source (i.e., sensors, thermostats, or other devices operable to transmit information to the system), or any combination of the foregoing). Different types of information may be transferred by the ECN based upon different periodic transmission impetus.

In embodiments of the present invention, all node units may operate on an identical periodic basis, or each node unit may operate on a separate periodic basis (e.g., a periodic interval and/or trigger of one or more node units may differ from those applicable to one or more other node units). This is applicable to all periodic operation of each node unit in the system. Moreover, regular intervals applicable to some periodic activities may differ amongst node units, such that a regular interval for some periodic activities for some node units may be every 10 seconds, whereas the regular interval for other periodic activities of the same or other node units may be every 15 minutes.

Information generated by a node unit (e.g., a DFT generated by a node unit) may be stored with the node unit. Information transmitted from each node unit along the ECN may further incorporate maintenance commands such as commands to enable and/or disable one or more node units. When a node unit is disabled the functions of the PSA attached to such node unit, including the function of the pump incorporated therein, may be stopped while the node unit remains disabled. The information transmitted along the ECN may further include retransmission of received BAS data, such as DFT and CVT.

A node unit that is upstream of multiple node units may receive information from multiple node units and will process all of the information that it receives. As an example, node unit **212** is upstream of node units **211** and **210**, and therefore both downstream node units will send information to node unit **212** via the ECN, including node unit **211** sending FE **326**, FS **325** and DFT **324** to node unit **212**, and node unit **210** sending FE **313**, FS **312** and DFT **311** to node unit **212.**

The SYNC information, **333**, **327**, **328**, **332**, **329**, **331**, **330** indicates whether loop control activity at a specific node unit should be enabled or disabled. SYNC information is transferred from a node unit to one or more node units that are directly downstream from said node unit. The SYNC information received at a node unit is processed by said node unit to determine whether the loop control activity at said node unit is to be enabled or disabled. Other information may also be transferred in a downstream direction between node units in embodiments of the present invention.

The information that is transferred between node units may be collectively referenced as comprising a change report.

A shared node will be affected by the function, operation, and functional operation of all of the downstream node units that have the same shared node in a node unit group. For example, node **218** will be affected by the function and processing of node units **205, 206.** This is because the information received by node unit **211** from node units **205**, **206** may cause adjustments of the speed of the pump within the PSA connected to node unit **211.** Such adjustments create an adjustment to the fluid pressure flowing through the node unit that is experienced as a fluid flow change relating to node **218**, namely, an increase or decrease to the fluid flowing through said node. The fluid that flows through node **218** flows on to node units **205**, **206** that are both downstream of node **218.**

As indicated in FIG. 2, downstream of a node there may be one or more additional sections of the line integrated with one or more node units. For example, a shared node **213** has may have multiple node units **211**, **205**, **206**, **210**, **207**, **209**, **208** downstream of said shared node, and such multiple node units may be positioned along multiple line sections. One or more secondary distribution systems incorporating one or more node units **208**, may be incorporated within a fluid distribution system of the present invention, and such secondary distribution systems may incorporate one or more nodes **214**, **215.** A skilled reader will recognize that a shared node could have other combinations of one or more downstream node units of varying types, as required for the configuration of a specific system.

A line section may further incorporate a thermal load positioned downstream of a node unit. Fluid flowing through a node unit that is directly upstream of a thermal load will flow from the node unit outlet to the thermal load **201**, **202**, **203**, **204.** A return conduit is positioned between each thermal load and the thermal supply. A node **201** may be positioned between the thermal load **201** and the thermal supply **200.** Other configurations and fluid flows in the distribution system of the present invention are possible.

There may be one shared node or any number of shared nodes within embodiments of the present invention. The number of shared nodes and node units upstream or downstream of each shared node within the system will be determined by the configuration of the system to achieve the specific purpose for which it is developed. For example, the number of shared nodes, the number of node units, and the configuration of node units in relation to shared nodes, in the system may depend on the size, shape and other parameters of a building wherein the fluid distribution system is installed.

### Electronic Communications Network

In embodiments of the present invention, information is shared between elements and such information flows along the electronic communications network (ECN). An example of an ECN is shown in FIG. 3. The ECN may be achieved by wired or wireless connections between node units and other elements of the present invention, such as elements that generate information that is provided to a node unit of the present invention (e.g., external sensors, thermostats, and other devices operable to transmit information to the ECN and/or to a node unit), thermal loads and the thermal supply. Sections of the ECN are positioned among the node units (each having a PSA connected thereto) of the system. Multiple forms of information may be transferred along the ECN. There are a variety of configurations for the ECN and the multiple types of information being transferred between elements of the system as individual information streams along the ECN.

Thermostats are not specifically shown in the drawings herein, but a skilled reader will recognize that there may be one or more thermostats in a building operable to transmit information to one or more of the node units in the system. Other external sensors and devices may also be positioned within a building and operable to transmit information to the system. All of the information received by the node units and processed by the node units and the PSAs connected thereto is utilized to keep the flow within the system balanced based on operating conditions that affect the system (e.g., warmer weather, colder weather, heating requirements in sections of the building, etc.).

A node unit may further receive information from one or more probes or sensors that may be located within or outside of the building wherein the fluid distribution system is located. The probe or sensor may be related to the performance of the thermal load that is downstream of the node unit. (A thermal load downstream of the control node unit may be a secondary distribution section in some embodiments of the present invention.) The information may be received from the probe or sensor by the function of the I/O Bus of the PSA that is connected to the node unit. The information received from a probe or sensor may be processed by the node unit and utilized in the generation of the DFT information by the node unit, and/or the adjustment of the speed of the pump of the PSA connected to the node unit.

The processing of information by a node unit may include a comparison of the CVT to the ACV by one or more node units. Such comparison may generate a differential signal if the CVT and ACV differ from each other. For example, the CVT information may be less than the ACV. The differential signal may indicate the change in speed required to achieve a pump speed for a pump incorporated in a PSA attached to a node unit, that will achieve balanced fluid flow in the system. The differential signal may therefore represent a percentage of the total design flow.

The generated change in speed information is controlled variable information, such as may be based upon a measurement by the node unit of actual temperature ACV in an area of the building, and a DFT target temperature that is set by the operator or designer of the system before the system is initiated and begins to function. The generated change in speed indicates the difference between the actual and target temperatures.

Said node unit processes the internally generated DFT to determine if any adjustment to the speed of the pump incorporated in the PSA attached to said node unit is required to achieve such fluid flow. For example, the speed of the pump may be altered by way of a control loop process. Such operation of said node unit has the effect of balancing fluid flow at the node that is directly upstream of said node unit. In this manner, the outcome of the processing of the CVT information received by said node unit is activities by said node unit to balance fluid flow that flows from the upstream node unit to said node unit. The fluid flow at the shared node between the upstream node unit and said node unit is balanced when (i) the DFT generated by said node unit is achieved, and (ii) all other node units sharing the same upstream shared node have also achieved the DFT that each generates.

The DFT and change report of a node unit located directly upstream of a thermal load is sent by said node unit to the node unit that is upstream of the shared node that is shared by said node unit and said upstream node unit. The upstream node unit processes the DFT it receives to determine if any adjustment of the speed of the pump of the PSA of said upstream node unit, by way of a control loop process, is required to achieve such fluid flow. This operation of the upstream node unit has the effect of assisting only when required based on the change report information received from said downstream node unit(s), to balance fluid flow at the node directly downstream of said upstream node unit. In this manner, the reaction of the upstream node unit to information it receives from a downstream node unit has the effect of balancing fluid flow that flows from the upstream node unit to the downstream node unit. The fluid flow at the node shared by the upstream and downstream node units is balanced when the DFT of all thermal loads downstream from said node is achieved.

Information may be transferred in a manner whereby multiple types of information are sent simultaneously or in a collected manner. Such transfer may be considered to be a transfer of a change report (multiple types of information). Each change report may include information that indicates a need for an increase, a decrease, or a null change to the fluid flow at the node that is immediately upstream of the node unit. The node unit processes the change report(s) it receives (e.g., FS, FE, DFT, SYNC, etc.), and determines if any adjustment to the operating state of a pump or the pump speed is required, and acts accordingly to alter: (i) the operating state of the pump (e.g., turning the pump to an ON or OFF setting), or (ii) the pump speed, or (iii) neither of the state of the pump nor the pump speed.

A node unit may operate within the fluid distribution system to balance the node pressure at the node that is directly downstream of the node unit, as required to maintain the DFT information that is generated by the node unit based upon the information it receives and processes, such information being received from downstream node units (DFT, FS, FE) and an upstream node unit (SYNC). Node pressure is balanced when the node unit is utilizing the information it receives to maintain the speed of the pump in the PSA attached to said node unit so as to achieve the fluid flow required by the downstream node units to meet the thermal loads of the system.

Alterations to the pump speed can include turning the pump on, turning the pump off, increasing pump speed when the pump is turned on, or decreasing the pump speed when the pump is turned on, or combinations of the foregoing (e.g., turning the pump on and increasing pump speed).

The pump in each PSA connected to a node unit of the fluid distribution system, generates the pressurization of the fluid within the fluid distribution system. The pumps of the node units in embodiments of the present invention, may be selected to accommodate the maximum total fluid flow for the fluid distribution system. The function of each pump may be controlled by a pump variable speed drive that provides conditioned operating power to the pump and is connected to the pump in the PSA. The pump variable speed drive may permit variations of the speed of the pump in accordance with externally sourced signals. Variation of the pump speed alters the fluid flow at the nodes in the fluid distribution system. The downstream node unit provides the transmitted information to upstream node unit and attached PSA that contain the pump, and the processing of such information by said node unit can assist the downstream node unit in achieving the DFT it generates by providing one or more signals to the pump variable speed drive, and such signals are utilized to determine the speed to which the pump speed should be functioning in accordance, and can be adjusted to function.

Processes to adjust the pump speed are shown in the drawings, and discussed herein.

The operation locus range is determined in relation to the function of each node unit. The operation locus range determined by the system represents a range wherein the pressure of the fluid flow will meet the operational needs of the whole of the system. Essentially the operation locus range represents consensus between the votes of the node units. The operation locus range is the "sweet spot range" for operation of the system. This is the range wherein the system will function to perform a balanced servicing of all the various areas in a building, and all of the nodes and node units therein, and thereby function in an effective and energy efficient manner.

There are many different possible configurations of embodiments of the present invention. The configuration of embodiments of the present invention may be determined in accordance with requirements for the fluid distribution system that can service a particular type, size, and shape of building. A skilled reader will recognize that other configurations of one or more shared nodes and related upstream/downstream node units may be incorporated in a distribution segment and that not all of the distribution segments in a distribution system need be identical. Each distribution segment has a supply line directly from the node connected to the distribution segment, whereby fluid flows into the distribution segment. Each distribution segment further has a return line extending therefrom, whereby fluid flows from the distribution segment to the thermal supply.

### Operation Scale, Operation Locus & Operation Locus Range

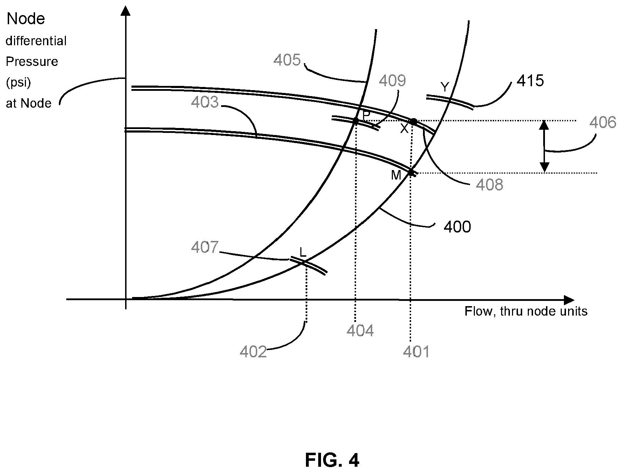

A graph shown in FIG. 4 represents in graph-form the effect of differential pressure at a node and fluid flow through said node in the system. The vertical axis of the graph plots differential pressure in a node (psi) and the horizontal axis plots flow of fluid through a node unit.

Load line **400** shows the effect of pressure loss as a function of the flow of fluid from a shared node through a first node unit, and from said node unit through a thermal load and from said thermal load to node. As an example, the graph may be related to node **218** and the path of fluid flow from node **218** through node units **205** or **206,** and from node unit **205** through thermal load **201** and to node **217**, and on through the thermal supply **200**, and through node units **212** and **211** and back to node **218**, as shown in FIG. 2.

A node unit may generate pressure as indicated by reference number **403** in the graph of FIG. 4 and such pressure may produce the flow indicated by reference number **401** of load line at intersection **M.** Flow indicated by reference number **401** may represent DFT generated by the relevant node unit (for example, such as the DFT for node unit **205**).

When the pump incorporated in the PSA attached to the node unit is operating at maximum pump speed the pressure indicated by reference number **415** is generated and intersects load line **400** at intersection **Y.** Whereas, when the pump incorporated in the PSA attached to the node unit is operating at minimum pump speed the pressure indicated by reference number **407** is generated and produces the flow as indicated by reference number **402** of load line **400** at intersection **L.** Operation of the node unit will migrate along load line **400** from intersection **L** to intersection **Y** while the node unit is independently able to maintain the then DFT without the assistance of the upstream node unit.

Load line **405** shows the effect of pressure loss as a function of the flow of fluid from a shared node through a second node unit, and from said node unit through a thermal load and from said thermal load to the thermal supply then via conduits, and nodes incorporated in said conduits, to flow through node units, said flow permitting a single direct path returning to said node. As an example, the graph may be related to node **218** and the flow of fluid from node **218** through node units **205** or **206**, and from node unit **206** through thermal load **202** and to node **217**, and then through thermal supply **200**, through node **213**, through node unit **211**, and then returning to node **218**, as shown in FIG. 2.

A node unit may generate pressure as indicated by reference number **409** in the graph of FIG. 4, and such pressure may produce the flow indicated by reference number **404** of flow indicator load line at intersection **P**, whereas the flow indicated by reference number **404** represents the DFT of the applicable node unit (for example, such as of node unit **206**).

A shared node that is directly upstream of multiple node units will have multiple discharge ports. For example, node **218** has two discharge ports. Each discharge port of a node can physically only exist at one pressure level, and this single level must apply to all of the conduits that are accessed through the one or more discharge ports of the node. Each discharge port discharges fluid flow to downstream node units. For example, the discharge ports of node **218** discharge fluid flow to node units **205** and **206.** Flow load lines **400**, **405**, reflect, at least in part, the inclusion of the one or more conduits connected to a shared node.

As only a single pressure level applies to both intersections in the chart shown as X and P, then physically X and P must exist at the same pressure. If X and P do not exist at the same pressure, flow through the node unit (such as node unit **205**) will be reduced from its DFT by the balancing pressure differential (BDP) indicated by reference number **406.** The BDP indicated by reference number **406** will be reduced to zero while the node unit operates to maintain DFT, and increases its produced pressure locus **408** level to intersection X.

In such an example, the node unit (such as node unit **205**) has generated sufficient pressure to achieve the ADF, and in doing so has thereby overcome the BDP.

In general, the BDP will vary and the node units operate to maintain their respective ADF equal to the DFT each generates. The state of the flow balance is reported by a node unit in the change report generated by such node unit.

As an example, if both node units **205** and **206** achieve their respective DFTs and the net node pressure at intersections P and X is below the maximum pressure locus **415** (of node unit **205**) and the maximum pressure locus **409** (of node unit **206**), the change report of each of node units **205** and **206** will not require the upstream node unit **211** to operate its pump in a manner that would provide additional (increased) pressure at the downstream node (being the shared node of node units **205**, **206** and **211**).

In such an example, the solenoid valve of the upstream node unit **211** will opened to permit the passage of both ADF flows that flow in a downstream direction from node unit **212** to node **213** and through node **213** to node unit **211.** Such fluid flowed from the thermal supply **200** downstream through node unit **212** before reaching node **213.** The fluid then flows from node unit **211** to node units **205** and **206.** A conduit channel is open to accept the DFT flow of node units **205** and **206.**

If each of the pumps that are incorporated in the PSAs that are attached to node units **211** and **212** is set to OFF (a deactivated state), the flow of fluid will pass through the bypass channel **120** of each PSA, thereby ensuring a low pressure loss channel for the passage of fluid through to node units **205** and **206** from the thermal supply **200.** As a result of each of the pumps being set to OFF the check valve 121 in the pump bypass channel **120** in each PSA that incorporates said pumps is in an open position to permit fluid passage through said pump bypass channel. The flow of fluid through the pump bypass channel is a normal operation state of some PSAs and/or of some or all sections of the distribution system.

A skilled reader will recognize that changes in the pump generated pressure attributable to one or more downstream node units having a shared upstream node in a node unit grouping will shift a flow indicator pump pressure locus vertically, indicating increased or decreased node pressure. This impact occurs in the distribution lines shared with other node units that have the shared node in a node unit grouping. However, this impact is not significant for the present invention because the present invention is not concerned with the absolute pressure values, fixed values, or specific numeric values being identified to be used to set the node fluid flow in the system. Therefore, as shown in FIG. 4, minimum pressure **407** is a reasonable base as it represents the pressure generated at the minimum pump speed of a pump of each of the PSAs connected to the node units.

The graph of FIG. 4 further shows maximum pressure **415** that is the pressure generated by the maximum pump speed of the pump of the PSA. The pump speed must be between the minimum and maximum speeds, and therefore, the pressure that can be generated by each pump is that generated between the minimum and maximum pump speeds.

In embodiments of the present invention, the BDP can be generated by a differential in pressure occurring between the pressure generated by two or more node units that share an upstream node. During most of the time when the distribution system is operating the value of BDP will be reduced to a zero value by the operation of the node units to maintain their generated DFTs.

When the BDP value persists above a zero value a change report will be issued by the node units relating to the BDP, and said report generated by a node unit will be processed by the node unit that is upstream of said node unit. Said upstream node unit will operate to set the state of the pump incorporated in the PSA attached to said node unit to ON (an activated state) and thereby will assist the one or more node units that are downstream of said node unit to achieve their respective generated DFT. This has the result of reducing BDP to a zero value for the downstream node units, as is reflected in the change reports generated by said node units.

In the instance that the BDP value is consistently above a zero value over time (the specific amount of time may be set for each system), an alarm report may be generated by each node unit experiencing a BDP value above zero, being the node units that reported the original change report indicated BDP above a zero value.

The BDP for each node unit, a component of the load line 400, 405, does not indicate a pinpoint pressure to be measured or calculated, but the component within a range of a pressure values that should be generated by the speed of the pump to create a balanced system. The BDP is therefore a component within a range of values, or an operation range.

The BDP component in the operation range is the obstacle to accommodate whereby balanced fluid flow may be achieved within the system. The section indicates more than one pump speed, it is the range of pump speeds that may be set to generate balanced fluid flow in the system.

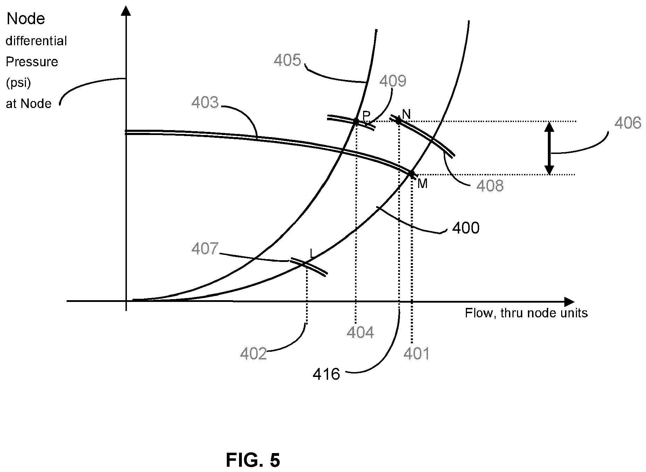

The graph shown at FIG. 5 represents in graph-form the effect of differential pressure at a node and fluid flow through said node in the system, whereby there is fluid flow pressure loss occurring between a thermal load and a node positioned downstream of said thermal load. The vertical axis of the graph plots differential pressure in a node (psi) and the horizontal axis plots flow of fluid through a node unit.

The graph shown at FIG. 5 depicts the condition wherein a node unit is not able to achieve the required DFT, due to the maximum possible node unit pressure having been reached. Insufficient flow ADF exists and the BDP value is not a zero value.

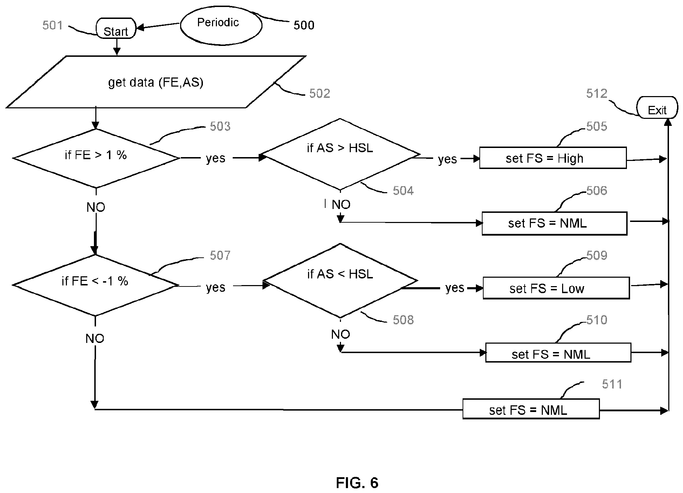

As an example, node unit **205** generates a pressure locus **403** which intersects the load line **400** at intersection M, and this causes the DFT **401** to be generated. Independently, node unit **206** generates a pressure locus **409** which intersects load line **405** at intersection P, and this causes the DFT **404** to be generated. In this example node unit **206** is able to maintain its DFT **404**, while node unit **205** has made the effort to maintain its DFT **401** but has reached its maximum pressure locus **408** at indicated at intersection N. The result is reduced flow ADF as indicated by reference number **416.** The BDP value has been reduced from a value indicated as reference number **406** to a zero value. This condition will persist because node unit **205** is unable to increase its flow as indicated by reference number **416** which is resulting from the maximum pressure locus **408** of the node unit being insufficient. A change report will be processed that reflects this condition, in accordance with FIG. 6.

The DFT and change report of the node unit located directly upstream of the thermal load is sent by said node unit to the node unit that is upstream of said node unit. The upstream node unit processes the DFT it receives to determine if any adjustment of the speed of the pump incorporated in the PSA attached to said upstream node unit is required to achieve balanced fluid flow. The speed of the pump may be altered by way of a loop control process. The operation of the upstream node unit has the effect of assisting to balance fluid flow only when such assistance is required. Assistance is provided or not provided based upon the change report information said node unit receives for the one or more downstream node units. In this manner the reaction of the upstream node unit is to balance fluid flow that flows from the upstream node unit to the one or more downstream node units. The fluid flow at the shared node of the upstream and downstream node units is balanced when the DFT of all thermal loads downstream from said node is achieved.

As an example, only node unit **206** may have achieved its DFT and the net node pressure at both intersections P and N are equal (N being the intersection where the maximum pressure locus 408 and the pressure at intersection P are equal and the BDP is a zero value). Although BDP has been reduced to a zero value, the DFT of node unit **205** has not been achieved with an ADF **416** being below the DFT **401.** Under these conditions, the change report of node unit **205** will require the upstream node unit **211** to operate to provide additional (increased) pressure at the downstream node **218.**

In this example, the solenoid valve of node unit **211** (being the upstream node unit) will be opened to permit the passage of both ADF flow downstream from node **213** (that flowed from thermal supply **200** to node unit **212**, and from node unit **212** to node **213**). As the pumps incorporated in the PSAs attached to node units 211 and 212 are set to OFF (a deactivated state), the flow of the fluid will pass through the bypass channel of each PSA, thereby ensuring a low pressure loss channel for the passage of fluid through to node units **205** and **206** from the thermal supply **200.** As a result of each of the pumps being set to OFF the check valve 121 in the pump bypass channel **120** in each PSA that incorporates said pumps is in an open position to permit fluid passage through said pump bypass channel. The flow of fluid through the pump bypass channel is a normal operation state of some PSAs and/or of some or all sections of the distribution system.

Opening the bypass channel of upstream node units **211** and **212** will result in an increase in fluid pressure in the fluid flow which may be sufficient to reduce BDP of node unit **205** to a zero value and thereby permit said node unit to achieve the DFT it generated. If node unit **205** is unable to achieve the DFT it generated, said node unit will transmit a new change report to upstream node unit **211.** Upon processing such change report node unit **211** will modulate the pump incorporated in the PSA attached thereto to be set to ON (an activated state), and the bypass check valve of said pump will close, thereby closing the bypass channel of the pump of node unit **211.**

Upon subsequent change report of flow deficiency being generated by node unit **205** and transmitted to upstream node unit **211**, and said change report being received by node unit **211**, node unit **211** will begin increasing the speed of the pump incorporated in the PSA attached thereto. The speed of said pump may be increased up to the maximum speed of such pump, as required in accordance with the processing of said change report (and subsequent change reports).

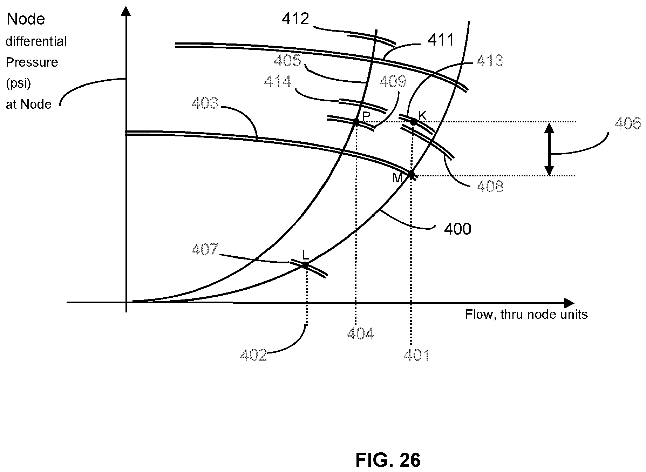

The effect of a pump being set to ON (an activated state) at a minimum speed is depicted in FIG. 26.

When an upstream pump is operating, its pressure locus applies pressure to the pressure being generated by the two or more downstream node units. The function of the upstream pump thereby assists the downstream node units to achieve the DFT that each downstream node units generates.

As an example, as shown in FIG. 26, when the pump of node unit **211** is set to ON, the pressure locus of node unit **205** will be altered from locus **408** to locus **411.** Moreover, when the pump of node unit **211** is set to ON, the pressure locus of node unit **206** will be altered from locus **414** to locus **412.** The increase in fluid flow pressure permits DFT **401** (of node unit **205**) to be achieved as indicated at intersection K on pressure locus **413.** This creates a condition whereby BDPs **406** is are reduced to a zero value, and the values of intersections M and N no longer apply. The balanced pressure of node unit **211** is depicted at the values indicated at intersections P and K, and the DFT of each of node units **205** and **206** are achieved as indicated as DFTs **401** and **404.**

When a node unit requires the assistance of the upstream node unit for the said node unit to achieve a required DFT the operation of the said node unit will migrate along load line **400** from intersection **L** to intersection **M**, and then vertically along DFT **401** from intersection **M** to intersection **K** while the node unit is able to maintain the required DFT with the assistance of the upstream node unit.

Should the DFT generated by node unit **206** be lowered sufficiently below flow level **404** to relocate intersection P at a lower value and at the same pressure level as N, the change report of node unit **205** will indicated no further need for pressure support form node unit **211.** Upon processing such change report, node unit 211 will set its pump to OFF and the bypass channel of said pump will be opened (by altering of the bypass check valve as described herein). When the bypass channel is open the fluid flow will flow through said bypass channel instead of flowing directly through the channel in the pump through which fluid flow is directed when the pump is activated. This bypass channel thereby decreases wear and tear upon components of the pump when it is open.

The PSAs incorporated with each of the node units in the fluid distribution system, are each a pressure range of fluid flow within an operation scale, as shown in FIGs 4, 5 and 26: as the fluid flow indicated between intersections **L** and intersection **Y**, and between intersection **L** and intersection **M**, and between intersection **M** and intersection **K**, and between intersection **M** and intersection **X.** Differential pressure is not required to be measured and no comparison of differential pressure between nodes is required to be undertaken by the present invention.

An objective of the present invention is for all downstream node units to maintain their respective actual fluid flows at their respective DFTs. A simultaneous second objective is for the node units to operate at a fluid flow that is very close to the minimum fluid flow in the operation locus range (as is identified for all of the upstream node units having a downstream shared node shared with downstream node units, said upstream and downstream node units all sharing said node in a node unit grouping). In this manner the system is both balanced and energy efficient.

### Node Unit Information Generation

As shown in FIG. 6, there are a number of steps involved in generating and transmitting information at a node unit, such information being transmitted along the ECN to an upstream node unit and used by such upstream node unit to determine whether any alteration to the speed of a pump in a PSA attached to said upstream node unit is required.

Each node unit received fluid at its inlet port, for most node units in the system of the present invention such fluid flows from a discharge port of a node positioned upstream of said node unit. Said node unit is a downstream node unit. The downstream node unit generates information that is transferred along the ECN to the node unit (the upstream node unit) that is upstream of the node (shared node) that is upstream of the downstream node unit. For example, as shown in FIG. 2, node **218** is a shared node between upstream node unit **211** and downstream node unit **205.** The generation of the information, and processing of information, is undertaken by operation of the processor (e.g., microprocessor) incorporated in the PSA attached to the node unit.

FIG. 6 illustrates the steps involved in the operation of a node unit to establish the FS information that reflect the flow status of the node unit in relation to the fluid flow that flows to the inlet port of the node unit from the upstream shared node.

Periodic entry (occurring in accordance with the periodic entry and initiations as are discussed herein), as indicated as step **500**, initiates the FS information generation operations the node unit as step **501.**

At step **502**, the processor determines DFT in accordance with the manner described in FIGs 3, 9 and 10 DFT represents a specific flow target at a specific time during the then current time of operation of the system, in a range of flow from 0.0 gpm to a maximum gpm (100%) assigned to the specific node unit (stored in initialization data). Each node unit generates the FE information. The flow sensor in the PSA attached to the node unit provides information to the processor regarding the actual flow ADF at the inlet of the PSA. The processor determines the difference between the DFT, which is the flow target for balanced fluid flow within the system, and the actual flow ADF sensed by the flow sensor. Based upon this difference the processor generates FE information as a numeric value. The actual speed (AS) of the pump is obtained by the processor from the pump drive incorporated in the PSA. The processor generates FS information, being information or data relating to the flow status, as a result of processing the FE information, and the actual speed (AS) of the pump incorporated in the PSA.

The processor of the PSA reviews the FE information as part of the determination of the FS information. At step **503**, FE information is reviewed to determine whether it is greater than 1%.

If the FE information is greater than 1%, at step **504** the actual speed of the pump is reviewed to determine if the speed is greater than the high limit (HSL) for the speed of the pump. The high limit speed of the pump is known by the system as a value that is preset for the system, and is not altered by the function of the system. The HSL is therefore either embedded in the processor of each PSA, or is accessible in a database that is accessible by the processor of each PSA, such as a database in a computing device, server or other computing system external to the system of the present invention, but linked to the ECN of the present invention, or linked directly to the PSAs of the present invention.

If the actual speed of the pump is determined to be greater than the HSL, at step 505 FS information is set to "High". If the actual speed of the pump is determined not to be greater than the HSL, at step **506** FS information is set to "NML". A setting of NML indicates that the fluid status reflected in the FS information, is normal.

If at step **503** the FE information is not greater than 1%, at step **507** the FE information is reviewed to determine if it is less than -1%. If the FE information is determined to be less than -1%, at step **508** the actual speed of the pump is reviewed to determine if the speed is less than HSL. If the actual speed of the pump is determined to be less than the HSL, at step **509** FS information is set to "Low". If the actual speed of the pump is determined not to be less than the HSL, at step **510** FS information is set to "NML".

If at step **508** the FE information is determined not to be less than -1%, at step **511** FS information is set to "NML".

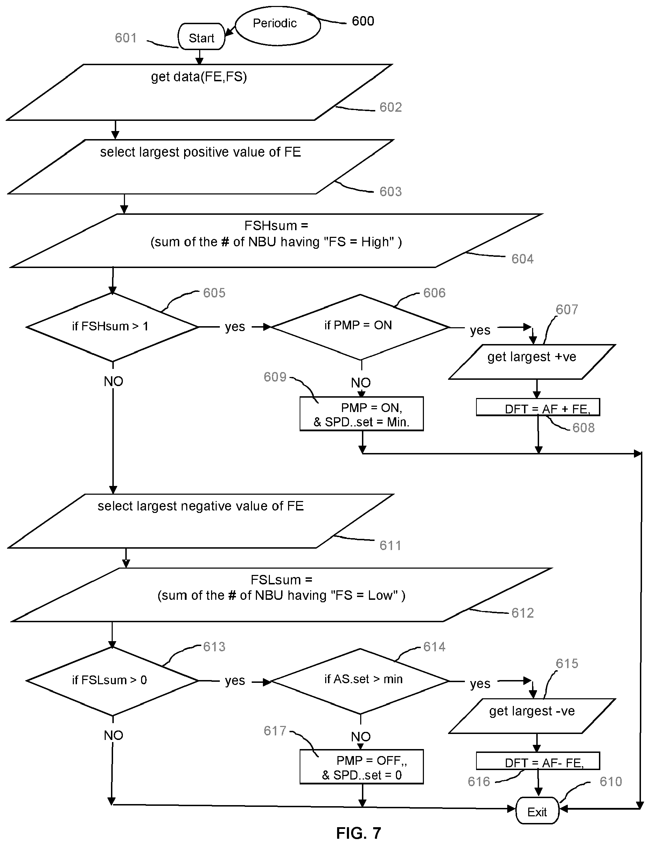

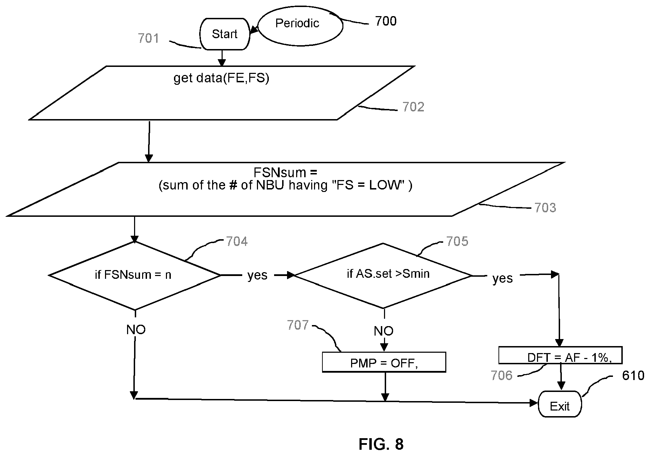

The processing of the node unit FS information, FE information and DFT (that is generated by the node unit, as indicated in FIGs 7 and 8) are transmitted along the ECN from the node unit to the upstream node unit at step **512.**

In general the information transmitted from a node unit to the upstream node unit via the ECN involves steps to obtain information relating to the real-time fluid flow entering the inlet port of the PSA and the operation of the node unit and associated PSA. This information is compared to the operation locus identified for that node unit (the DFT) to determine whether the current (present) operational status of the node unit is within its operation locus.

The operations of the node unit and PSA, and the specific processing of information indicated in FIG. 6 occurs on an ongoing basis, such as on a fixed time interval basis, or some other basis. The steps process the current operating state of the node unit to generate a FE information, FS information and DFT for that node unit. The DFT reflects the present flow value of the node unit, which is understood as existing within a section of the operating scale of the node unit (i.e., from intersection L to intersection Y as shown within FIG. 4). Intersection L and intersection Y on the operating scale of the node unit are also utilized in these steps.

A series of queries are posed by the processor of the PSA as the steps to determine the FS information.

The FS information, FE information and DFT are generated by each downstream node unit that have a shared node in a node unit grouping are collectively represented as a change report that is transmitted via the ECN to an upstream node unit. The change report of each downstream node unit having a shared node in a node unit grouping is delivered to the node unit directly upstream of the shared node. A node unit that does not have an upstream node may generate a change report which may be used by a third party (in the case of the thermal supply), but it may generate FE information and DFT as FE information and DFT is utilized in processing to determine whether the speed of the pump in the PSA attached to such node unit requires and adjustment to achieve balanced fluid flow within the system.

### Node Unit Information Processing

A node unit that receives one or more change reports and potentially other information (such as information from an source external to the system, e.g., a thermostat, or other device or information source) processes the one or more change reports and other information that is transferred to it, and based upon the processing generates additional information (some of which may be collectively transferred to an upstream node unit having a shared node with the node unit, as incorporated in a change report). The one or more change reports and other information is processed by the node unit to determine whether the speed of the pump incorporated in the PSA attached to the node unit should be altered (e.g., turned to on, increased, decreased or turned off) to balance the fluid flow in the fluid distribution system. The magnitude of the pump speed alteration is defined by the processing of the one or more change reports and other information transmitted to the node unit. Each node unit is operable to process information (including information collectively transferred as a change report) transmitted to the node unit, and to generate information (that may be transferred collectively as a change report) that it transmits to an upstream node unit with which it has a shared node.

As shown in FIGs 7 and 8, there are a number of steps involved in processing information transmitted to a node unit, such information being transmitted along the ECN from one or more downstream node unit(s) and used by such node unit to determine whether any alteration to the speed of the pump in a PSA attached to said node unit is required.

The information transferred from the one or more downstream node unit(s) that share a node with the node unit to said node unit (an upstream node unit) in a node unit grouping, including DFT, FS information and FE information (which may be collectively sent as a change report). The node unit therefore receives information from the downstream node unit that receives fluid flow at the downstream node unit's inlet port that has flowed from the node unit (being the upstream node unit) receiving the information. For example, as shown in FIG. 2, node **218** is a shared node between upstream node unit **211** and two downstream node units **205**, **206** Fluid flows from node unit **211** through node **218** and downstream to the inlet ports of the PSAs attached to each of the two downstream node units **205**, **206.** The information received by node unit **211** will have been transferred via the ECN from each of the two downstream node units **205**, **206.** The information transferred from each downstream node unit **205**, **206** to node unit **211** will include FS information, DFT and FE information generated by each downstream node unit. Node unit **211** will process the information it receives from each of the downstream node units **205**, **206**, as well as any other information node unit **211** may receive from an external device or other source (e.g., a thermostat, another device, or an external computer system linked to the present invention system) which relate to the node units sharing the same upstream node (for example, such as node **218**). Such processing will result in node unit **211:** determining whether the speed of the pump incorporated in the PSA attached to the node unit is required to be altered to maintain or achieve balanced fluid flow in the system; and generating FS information, FE information and DFT that it may transfer via the ECN to node unit **212** that is upstream of node unit **211** and that shares node **213** with node unit **211.**

FIG. 7 illustrates the steps involved in the operation of a node unit to process the FS information, and FE information to determine DFT and/or alter the pump speed of the pump incorporated in the PSA attached to the node unit. For example, the pump speed may be altered if the FS information and FE information transmitted from the downstream node unit indicate a requirement that such node unit requires alteration of the pump speed to assist in enabling the downstream node units to achieve their generated DFT and maintain or achieve balanced fluid flow within the system of the present invention.

Periodic entry as indicated as step **600** initiates the processing operations of the node unit to process the information transmitted to said node unit as step **601.** Such periodic entry may occur at one or more of the following: set intervals of time, as triggered by particular events, or any other initiation that causes the operation to initiate upon a regular or sporadic basis.

At step **602**, the node unit receives one or more FE information inputs and one or more FS information inputs from one or more downstream node units. The node unit reviews the FE information input it receives at step **603**, to determine if it has received one or more FE information inputs. If the node unit has received more than one FE information input, the node unit identifies and selects the largest positive value indicated in the FE information inputs. If the node unit has received one FE information input, the node unit selects that one FE information input.

The node unit processor reviews the FS information inputs at step **604**, to determine if it has received one or more FS information inputs. If the node unit has received more than one FS information input, the node unit identifies and selects the FS information inputs that are set to "High". The node unit calculates the sum of the number of selected FS information inputs as the value of FSHsum, such that FSHsum represents the number of FS information inputs that are set to "High".

If the node unit has received one FS information input, the node unit reviews said FS information input to determine if it is set to "High". If the FS information input is set to "High", the node unit sets FSHsum is to a value of 1. If the FS information input is not set to "High", the node unit sets FSHsum is to a null value.

At step **605**, the node unit determines whether FSHsum is greater than 1. If FSHsum is greater than 1, at step **606**, the node unit determine whether the pump incorporated in the PSA attached to the node unit is turned on. If the pump is turned on the node unit identifies and selects the largest positive FE information input, at step **607.** The DFT is set by the system, at step **608**, to be equal to the sum of the actual fluid flow (as is sensed by the flow sensor in the PSA of the node unit) and the FE information input selected at step **607.** Therefore, DFT will be increased to an amount that is above the measured actual flow ADF by the largest FE information received if one or more FS information inputs received by the node unit from downstream node units with a shared node with the node unit indicates a FS information set at "High", and the pump is already turned on.

If the pump is not identified to be turned on at step **606**, the pump will be turned on by the processor at step **609**, and the pump speed will be set to the minimum pump speed. Therefore, the processor will only turn the pump on and set it to a minimum speed if one or more FS information inputs received by the node unit from downstream node units with a shared node with the node unit indicates a FS information set at "High", and the pump is not already turned on. If the node units receives at least one FS information input set at High and the pump is already turned on, the system does not alter the pump speed and it calculates DFT.

If the FSHsum is not greater than 1, at step **611**, the processor will review the FE information inputs and will identify and select the largest negative value of the FE information inputs. At step **612**, the processor will calculate FSLsum as the number of the FS information inputs that are set to "Low". The processor determine if the FSLsum is greater than 0, at step **613.** If FSLsum is greater than 0, at step **614**, the processor determines the actual speed to which the pump that is incorporated in the PSA attached to the node unit is set (AS.set) and whether the AS.set is greater than the minimum speed of said pump. If AS.set is greater than the minimum speed of said pump, at step **615**, the processor identifies and selects the largest negative FE information input. The DFT is set by the processor, at step **616**, to be equal to the actual fluid flow (as is sensed by the flow sensor in the PSA of the node unit) less the FE information input selected at step **615.** Therefore, DFT will be decreased to an amount that is less than the measured actual flow by the largest negative FE information received if one or more FS information inputs received by the node unit from downstream node units with a shared node with the node unit indicates a FS information input set at "Low", and the pump speed is greater than the minimum speed.

If the pump speed is not identified to be greater than the minimum pump speed at step **614**, the pump will be turned off by the processor at step **617**, and the pump speed will be set to 0. Therefore, the processor will only turn the pump off and set it to 0 speed if one or more FS information inputs received by the node unit from downstream node units with a shared node with the node unit indicates a FS information input set at "Low", and the pump speed is not greater than the minimum pump speed. If the node units receives at least one FS information input set at Low and the pump speed is greater than the minimum pump speed, the processor does not alter the pump speed and it calculates DFT.

If the FSLsum is not greater than 0, the processor does not undertake any further operations, and the processing is exited, at step **610.**

FIG. 8 illustrates the steps involved in the operation of a node unit to process the FS information, and FE information. Such processing may be applied to altering the pump speed of the pump incorporated in the PSA attached to the node unit to turn the pump off in some circumstances, and to calculate DFT in other circumstances. For example, the pump speed may be altered to be turned off if the FS information and FE information transmitted from the downstream node unit indicate a requirement that such node unit requires alteration of the pump speed to a turned off status to maintain or achieve balanced fluid flow within the system of the present invention.

Periodic entry as indicated as step **700** initiates the processing operations of the node unit to process the information transmitted to said node unit as step **701.** Such periodic entry may occur at one or more of the following: set intervals of time, as triggered by particular events, or any other initiation that causes the operation to initiate upon a regular or sporadic basis.

At step **702**, the node unit receives one or more FE information inputs and one or more FS information inputs from one or more downstream node units. The node unit reviews the FS information input(s) it receives at step **703**, to determine the number of FS information inputs it has received that indicate a status of "Low", and such number is captured as FSNsum. The system also calculates the number of FS information inputs it has received in total and captures this number as "n".

At step **704**, the processor determines if the FSNsum is equal to n. If FSNsum is equal to n, at step **705**, the processor determines the actual speed to which the pump that is incorporated in the PSA attached to the node unit is set (AS.set) and whether the AS.set is greater than the minimum speed of said pump (Smin). If AS.set is greater than the minimum speed of said pump, at step **706**, the processor sets DFT to be equal to the actual fluid flow (as is sensed by the flow sensor in the PSA of the node unit) less 1%. Therefore, DFT will be decreased to an amount that is 1% less than the measured actual flow ADF if all of the FS information inputs received by the node unit from downstream node units with a shared node with the node unit indicate a FS information input set at "Low", and the pump speed is greater than the minimum pump speed.

If the processor determines the actual speed to which the pump that is incorporated in the PSA attached to the node unit is set (AS.set) is not greater than the minimum speed of said pump (Smin), at step **705**, then the processor will alter the pump speed so as to turn off the pump, at step **707.** Therefore, the pump will be turned off if all of the FS information inputs received by the node unit from downstream node units with a shared node with the node unit indicate a FS information input set at "Low", and the pump speed is not greater than the minimum pump speed.

If the processor determines that the FSNsum is not equal to n at step 704, no further processing operations will occur and the processing will be exited at step **610.**

### Adjustment of Pump Speed

The steps in the process of the present invention whereby a PSA processor, through the pump speed drive in a PSA that is attached to the pump in the PSA, adjusts the speed of said pump, are set out in FIGs 9, 10 and 11. As discussed herein, each node unit is operable to receive one or more change reports from one or more node units that are directly downstream of said node unit, that have a shared node with said node unit, in a node unit grouping. The node unit reviews the information provided to it, including the information that arrives in one or more change reports it receives, and determines whether the speed of the pump in the PSA attached to said node unit should be altered. If the speed of the pump should be altered the processor in the PSA send instructions to the pump speed drive in the PSA. Upon receipt of such instructions the pump speed drive will vary the speed of the pump in accordance with the instructions it has received.

The information received (e.g., a change report) by the node unit is reviewed and utilized in accordance with the steps of FIGs 7, 8 and 9 to determine whether the speed of the pump should be altered. The means of altering the speed of the pump will be determined in accordance with the process shown in FIGs 9, 10 and 11.

An alteration of pump speed will affect the fluid flow through the node unit and at the node downstream from said node unit. The flow through the node unit downstream of said node will be altered and thereby affected only if said downstream nodes have not achieved their DFT. The change in the speed of the pump increases pressure at the node directly upstream, and this alters the fluid flow through the node unit. As the fluid flow created by the alteration in the pump speed flows through to the upstream node the information generated by such downstream node unit will be altered in accordance with the change in the fluid flow caused by the change of the pump speed of the pump in the upstream node unit.

The node unit receives information from the one or more node units that are directly downstream of the node unit and that have a shared node with the node unit in a node unit grouping. The information received by the node unit includes information relating to the current operating state of each downstream node unit from which it receives information. Such information is utilized by the node unit that receives such information to adjust the pump speed of the pump incorporated in the PSA attached to said node unit, or to leave the pump speed unchanged. As the fluid flow having increased or decreased pressure, as created by the alteration in the pump speed, flows through the upstream node unit, downstream node and downstream node unit, the measured flow at such downstream node unit will change and the information generated by such downstream node unit will be altered in accordance with the change in the fluid flow caused by the change of the pump speed of the pump incorporated in the PSA attached to the upstream node unit.

FIG. 9 illustrates operations of a node unit to process one or more DFTs received from downstream node units having a shared node with said node unit in a node unit grouping, in a loop control operation process. The loop control operation is periodically initiated, at step **800.** Such periodic initiation may be at one or more of the following: set intervals of time, as triggered by particular events, or any other initiation that causes the operation to initiate upon a regular or sporadic basis. Such initiation commences the processing by the node unit of the one or more DFTs **302**, **305** that are provided to the node unit. For example, as shown in FIG. 3, a DFT **302** may be transmitted to a node unit **211** via the ECN from a downstream node unit **205**, or a DFT **305** may be transmitted to a node unit **211** via the ECN from a downstream node unit **206.** In some embodiments of the present invention information may be transmitted to a node unit, a thermal load or the thermal supply from a source external (e.g., a device, a computer server, a computer database, etc.).

As shown in FIG. 9, at step **802**, the processor of the node unit (that is incorporated in the PSA attached to said node unit) processes the one or more DFTs received by the node unit. Such processing involves determining the sum of the received one or more DFTs. The sum of the DFTs generates the DFT of the node unit. For example, as shown in FIG. 3, the sum of the DFTs received by node unit **211** (from downstream node units **205**, **206**) will generate the DFT **324** of node unit **211** that is transmitted via the ECN to upstream node unit **212.**

FIG. 10 illustrates operations of a node unit to process CVT received a source external to the fluid system of the present invention (e.g., from a thermostat, an external device, an external computer system, an external computer server, etc.), in a loop control operation process. The CVT indicates a requirement for the system requested by an external source, such as a temperature to be generated by the system in a particular location of the building wherein the system is located, such as may be requested by a thermostat setting for a particular room in the building. The function of the system to meet such request in accordance with the CVT transmitted to the system may require an alteration to the fluid flow of the system, to meet the request while achieving and maintaining a balanced fluid flow in the system. The node unit processes the CVT to generate DFT, and such DFT is applied by the node unit to alteration of the speed of the pump incorporated in the PSA attached to such node unit, to achieve and maintain balanced fluid flow within the system.

The loop control operation is periodically initiated, at step 900. Such periodic initiation may be at one or more of the following: set intervals of time, as triggered by particular events, or any other initiation that causes the operation to initiate upon a regular or sporadic basis. Such initiation commences the processing by the node unit of the CVT **322** that is provided to the node unit. For example, as shown in FIG. 3, a CVT **322** may be transmitted to a node unit **207** via the ECN from a source external to the system of the present invention. A CVT may be transmitted to any node unit in the system of the present invention, but is generally transmitted to a node unit that is in proximity to a downstream thermal load.

As shown in FIG. 10, at step **901** the processor of the system will receive the CVT, and function as a comparator. The processor will identify the type of variable that the CVT reflect (e.g., a temperature variable or other type of variable). The processor will obtain a measurement that reflects the actual measurement of the type of variable that the CVT reflects. For example, if the processor determines that the CVT reflects a temperature control variable target, the processor will obtain an actual temperature measurement from the temperature sensor connected to the PSA attached to said node unit. Such actual measurement of the type of variable that the CVT reflect is an actual control variable (ACV). The processor will compare the CVT to the ACV. The difference between the CVT and ACV is generated and will be evaluated to determine whether an increase increment is to be generated (YES) or whether an increase increment is not to be generated (NO) and a decrease increment is to be generated.

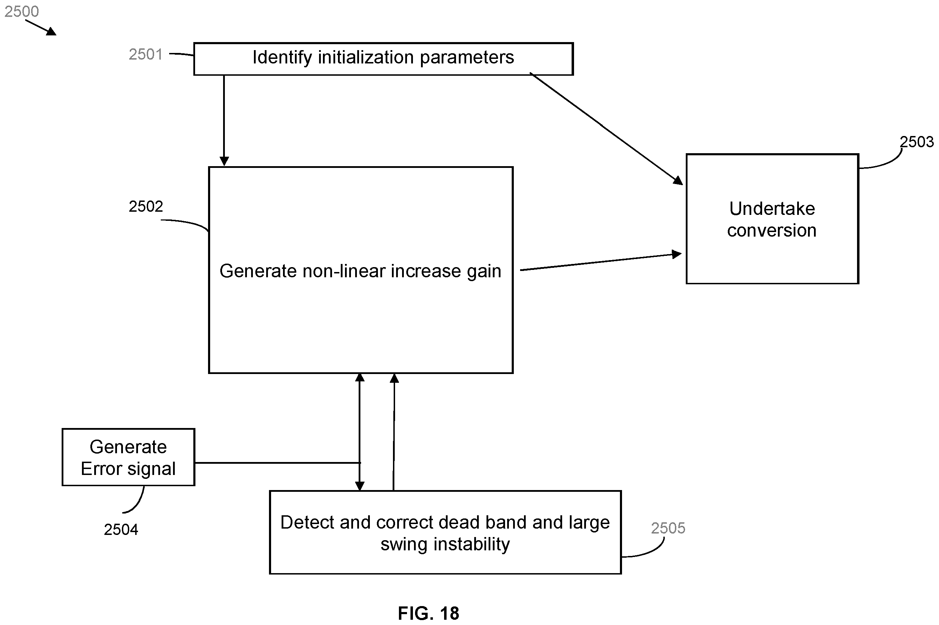

If the processor determines that an increase increment is to be generated (YES), the node unit will undertake the process to generate a decrease increment for the type of control variable that the CVT relates to, in accordance with the process shown in FIG. 18, at step **2500.** At step 905 the processor operates to achieve a summation, and integrates the increase increment generated at step **2500** with the ADF measured by the PSA attached to the node unit.

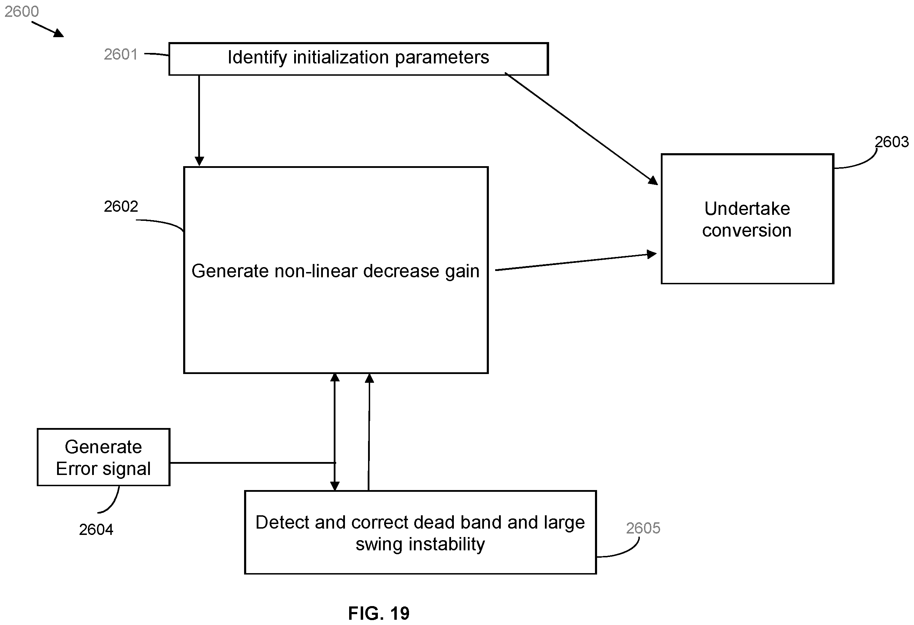

If the processor determines that an increase increment is not to be generated (NO), the node unit will undertake the process to generate a decrease increment for the type of control variable that the CVT relates to, in accordance with the process shown in FIG. 19, at step **2600.** At step **905** the processor operates to achieve a summation, and integrates the decrease increment generated at step **2600** with the ADF measured by the PSA of the node unit.

The processor will further receive ADF the actual flow as measure as the I/O port of the processor in the PSA of the node unit used as an accurate base to add or delete a change in the DFT and thereby generate a new DFT. The DFT is generated as the sum of ADF plus either the generated decrease or increase increment summation.

The DFT that is generated at step **905**, or generated at step **800** or a DFT received from an external source via the ECN or a DFT received at an I/O port of the processor in the PSA, can be further processed by the node unit to determine if any alteration to the speed of the pump incorporated in the PSA attached to said node unit is required to achieve or maintain fluid flow balance in the system of the present invention, in accordance with FIG. 11.

This loop control operation is periodically entered at step **910** at a greater time interval than the periodic entry in control loop at step **900.** Such periodic entry may occur at one or more of the following: set intervals of time, as triggered by particular events, or any other initiation that causes the operation to initiate upon a regular or sporadic basis. Such initiation commences the processing by the node unit of the DFT.

At step **906**, the processor of the node unit (that is incorporated in the PSA attached to said node unit) operates as a comparator and processes the DFT generated by the node unit. The processor receives an actual flow value ADF. Such actual flow value indicates the actual fluid flow at the inlet port of the node unit, said actual fluid flow being sensed by the flow sensor of the PSA that is attached to said node unit. The processor compares the DFT to the actual flow value. The processor generates the difference between the DFT and the actual flow value ADF. The difference between the CVT and ACV is generated and will be evaluated to determine whether an increase increment is to be generated (YES) or whether an increase increment is not to be generated (NO) and a decrease increment is to be generated.

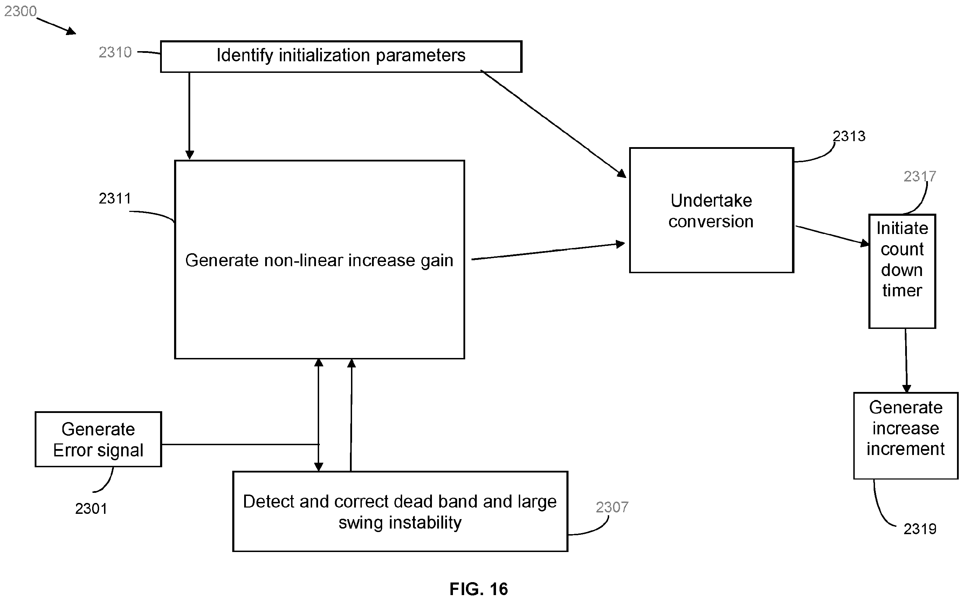

If the processor determines that an increase increment is to be generated (YES), the node unit will undertake the process to increase the speed of the pump incorporated in the PSA attached to the node unit in accordance with the process shown in FIG. 16, at step **2300.** After step **2300** is completed, the processing operations cease and exit at step **907.**

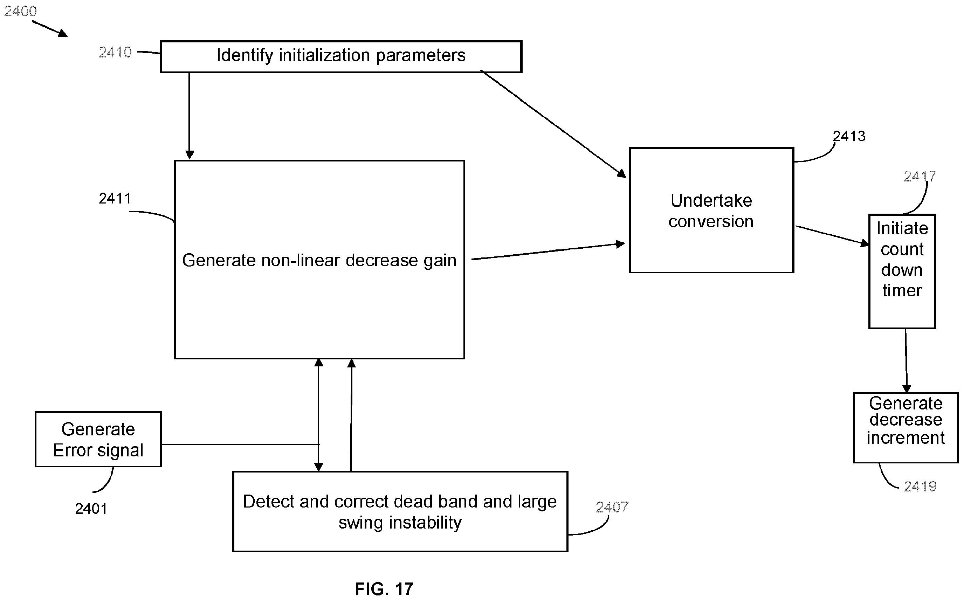

If the processor determines that an increase increment is not to be generated (NO), the node unit will undertake the process to decrease the speed of the pump incorporated in the PSA attached to the node unit in accordance with the process shown in FIG. 17, at step **2400.** After step **2400** is completed, the processing operations cease and exit at step **907.**

As shown in FIG. 12, a review of DFT by a processor of a node unit may occur on a periodic basis. Such review may be applied to value of DFT. A zero (0.0) value indicates that there is no requirement for the node unit to conduct flow through the PSA of the node unit. This review operation is periodically initiated by at step **1000.** Such periodic entry may occur at one or more of the following: set intervals of time, as triggered by particular events, or any other initiation that causes the operation to initiate upon a regular or sporadic basis. Such initiation commences the processing by the node unit of the DFT at step **1001.** The processor of the node unit will review DFT to determine if it is equal to 0, at step **1002.** If DFT is equal to 0, the processor will close the PSA valve, at step **1003.** If DFT is not equal to 0, the PSA valve will be opened, at step **1004.** Once the PSA valve is opened or closed the operations will be exited at step **1005.**

The steps of FIG. 12 will occur more frequently (at shorter time intervals) than the steps of FIG. 11. The opening of the valve in the PSA permits fluid flow through the pump in the same PSA and measurement of the fluid flow ADF (e.g., fluid flow is greater than or equal to 0 (zero)). Closure of the valve will cause fluid to be measured as zero (null) value.

### Control Loop Processes

The balancing of the system of the present invention involves adjusting the speed of the pump incorporated in the PSA associated with a node unit. The adjusting of pump speed involves a loop control function.

The loop control function of the present invention differs from closed loop control functions and proportional-integral-derivative controller (PID controller) functions of prior art systems in several manners. For example, the loop control apparatus differs from known PID controllers and therefore has a different functionality than known PID controllers. Each of the PID component algorithms is a linear process that does not include non-linear functions (e.g., functionally capable of producing non-linear reactions). Generally, the loop control apparatus of the present invention identifies and utilizes a combination of non-linear relationships between the input differential error of the virtual variable target less the non-virtual transfer function. The non-linear relationship can take the form of an equation, or a set of equations, for example: Output = Mx(Input)x(Input) + C; Output + Mx(Input)x(Input)x(Input) + C; using an exponential equation; a set of linear equations, each dedicated to a specific range of "input"; or any combination of the foregoing and other forms to create a non-linear relationship between "Input" and "Output". Moreover, loop control uses separate gain functions for an increase response and another for a decrease response. Automatic recovery from instability is also provided by the loop control functions.

The closed loop control and PID controllers of the prior art further require that a specific fixed value be set as a fluid flow pressure that is to be achieved by a system. The closed loop control and PID controllers achieve adjustments based upon the identified fixed pressure value. The loop control of the present invention does not require a fixed pressure value to be identified. The loop control of the present invention alters the speed of a pump in a PSA attached to a node unit in accordance with determinations that do not identify any fixed fluid flow value. Rather, the present invention operations are based upon ranges of fluid flow values whereby the speed of the pump of a PSA can be altered to achieve target distribution fluid flow within the nodes of the fluid distribution system. These ranges are the operation locus of a node unit and the operation locus range (representing the identified common range that is within operation locus of multiple node units).

The loop control function of the present invention further differs from known prior art, such as PID, in that it is operable to perform an automatic re-stabilization process, and automatic avoidance of dead band cycling. PID control requires manual intervention to adjust operating parameters to minimize the reoccurrence of these issues.

### Increase Flow (DFT) Procedure

If the increase flow procedure is initiated in accordance with step **2500** of any of FIG. 10, the steps shown in FIG. 18 are undertaken. The increase flow procedure can therefore be initiated periodically as part of the processes set out in FIG. 10.

Generally, the increase flow procedure is initiated in accordance with determinations performed by the microprocessor of a PSA associated with a node unit. Such determinations by the microprocessor involves information relating to the flow of fluid within the fluid distribution system, including DFT and FE information. Thus, the increase flow procedure steps, as shown in FIG. 18, are incorporated in the loop control of the present invention.

The increase flow procedure steps involve accessing initialization parameters that may be stored in the program of PSAs associated with the node unit at step **2501.** For example, an initialization parameter that is a time parameter may be set as a value range, such as in the range of 1 to 300 seconds, or any other range. The specific initialization parameters utilized and the range values of each initialization parameter will vary with the specific application of the increase flow procedure.

The initialization parameters are accessed and the initialization parameters applicable to the particular application occurring are identified at step **2501.** The initial values of the initialization parameter identified in step **2501** are established at time when the fluid distribution system is commissioned and set-up by a system operator. The initialization parameters incorporate several different parameters. For example, the initialization parameters include a ramp rate parameter. The ramp rate parameter is used to define a non-linear increase gain. In embodiments of the present invention, the initial value of the ramp rate may be set in the range of 10% to 40%.

The initialization parameters are utilized by steps **2502** and **2503.**

An error signal is generated at step **2504.** The error signal generated is generated in accordance with the compare value step **901** of FIG. 10.

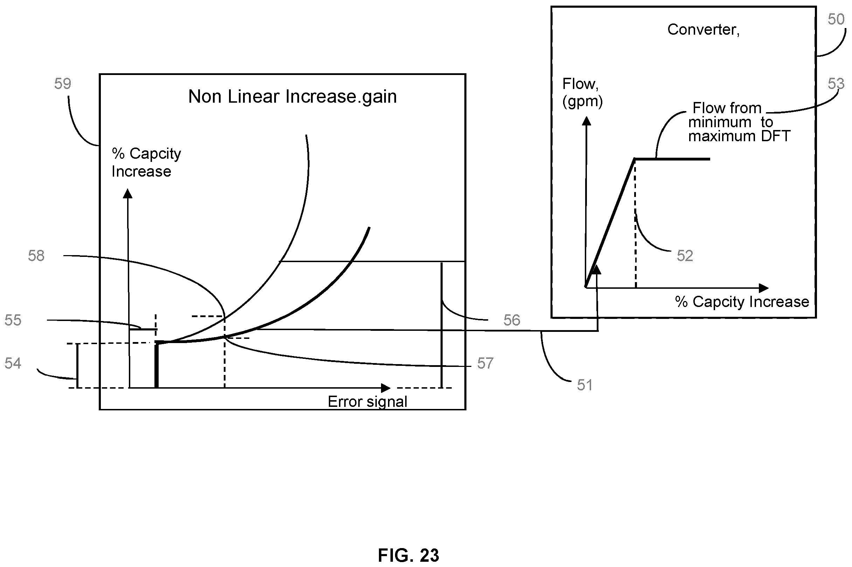

The magnitude of the error signal is identified and utilized to locate the percentage capacity increase that is generated at step **2502.** The dead band is a range value that is identified by the system at step **2502.** The dead band range includes the values between the lowest magnitude of error signal value and the initial percentage capacity increase, as shown in FIG. 23 as range value **55.**

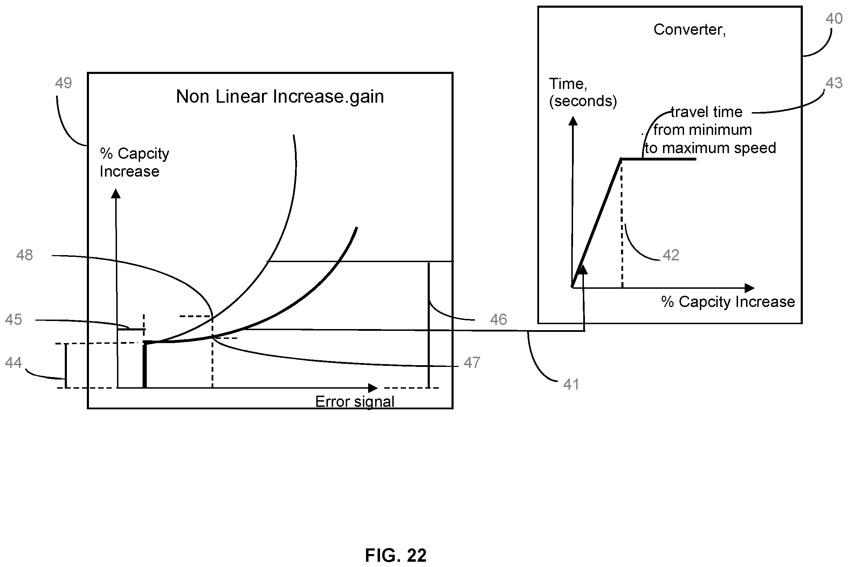

FIG. 23 shows a graph of the non-linear increase gain that represents the determinations occurring at step **2502**, of FIG. 18. As shown in FIG. 22, the horizontal axis represents the error signal and the vertical axis represents the percentage capacity increase. The range values **54** (minimum range), **55** (dead band range), **56** (limiting range), are set when the system is initialized, and these range values are application specific.

If the error signal is less than the magnitude of the dead band values then the percentage capacity increase is set to zero (0.0). When the error signal is greater than the magnitude of the dead band then the percentage capacity increase is set to the value occurring at the intersection of percentage capacity increase and the error signal. (This value is shown as the intersection **57** in FIG. 23.

The value range that incorporates the minimum values that the percentage capacity increase can be set to may be identified. (For example, value range **54** as shown in FIG. 23 represents the minimum range that the percentage capacity increase can be set to. The initial range value of minimum percentage capacity increase (value range **54**) is set initially by an operator of the system.

The intersection **57** indicates a value existing where the percentage capacity increase intersects with the error signal. (For example, in one embodiment of the present invention the intersection **57** may represent the intersection of 10% capacity increase, and the error signal that is equal to three times the dead band.) The percentage capacity increase is related to the ramp rate such that the percentage of the ramp rate is equivalent to the percentage capacity increase. (For example, in one embodiment of the present invention, if the ramp rate is set to 10%. the percentage capacity increase will be 10% capacity increase and the error signal that is equal to two or more multiples of the dead bands. Changing the ramp rate to a different percentage will affect the percentage of the capacity increase. This will cause a new intersection **58** between the percentage capacity increase and the error signal. (For example, if the ramp rate is 15% the new intersection **58** will occur at the intersection of perhaps 15% capacity increase and the error signal that is equal to 3 times the dead band.)

The percentage capacity increase is limited to the magnitude represented by range value **56**, which may be set in the range of 10% to 100%.

In one embodiment of the present invention, the non-linear determinations applied may be quadratic functions. Other embodiments of the present invention may utilize cubic functions, or some other mathematical representation that provides the same characteristic benefits as disclosed herein. For example, a form of piecewise linear segment function may be applied in an embodiment of the present invention.

A large swing instability detection and correction occurs at step **2505**, as shown in FIG. 18. This step automatically generates a reduction in the ramp rate on detection of large swing instability. This step also automatically generates an increase in the ramp rate on detection of sluggish response rates. Short term cycling is detected by this step, but corrective actions are not undertaken thereto.

The dead band detection and correction step automatically generates a reduction in the minimum percentage capacity increase value range (i.e., value range **54**, as shown in FIG. 23) on detection of dead band cycling instability. The dead band and large swing instability detection and correction step automatically generates an increase in the percentage capacity increase value range on detection of sluggish response levels at the dead band region. Short term cycling is detected by step **2505**, as shown in FIG. 18, but corrective actions are not undertaken thereto.

The automatic detection and correction of both the minimum percentage capacity increase value range and percentage capacity increase value range, in response to the identification of significant potential instability issues, is vital to the operation of the loop control in the fluid distribution system and the node balancing function of the system.

A percentage capacity increase signal is generated by step **2502.** The percentage capacity increase signal is transferred to the step **2503.** At step **2503** the percentage capacity increase signal is converted to a flow value. The flow value is determined to be a proportional percentage of the range of the DFT from a minimum of 0.0 (zero) to DFT gpm.

The 100% DFT is stored as an initialization parameter accessible by step **2501.** The 100% DFT is transferred by step **2501** to be used in step **2503.** The use of this information by the control loop in step **2503** establishes a critical, flow dependent, compatibility between the virtual control loop and the controlled real environment.

The determination of step **2503** is shown in graph form **50** in FIG. 23. The horizontal axis is percentage capacity increase and the vertical axis is flow shown in gpm. The capacity increase **52** is a capacity increase to 100% capacity, and it aligns with the beginning of the flow maximum **53** of the converter transfer function, being the range of fluid flow from minimum to maximum fluid flow capacity. Flow value as indicated by arrow **51**, is generated in relation to the change capacity depicted at intersection **57** of the non-linear increase gain graph **59** of FIG. 23.

### Decrease Increment Flow DFT Generation Procedure

If the decrease flow procedure is initiated in accordance with step **2600** of FIG. 10, the steps shown in FIG. 19 are undertaken. The decrease flow procedure can therefore be initiated periodically as part of the processes set out in FIG. 10.

Generally, the decrease flow procedure is initiated in accordance with determinations performed by the microprocessor of a PSA associated with a node unit. Such determinations involve information relating to the flow of fluid within the fluid distribution system. Thus, the decrease flow procedure steps, as shown in FIG. 19, are incorporated in the loop control of the present invention.

The decrease flow procedure steps, as shown in FIG. 19, involve accessing initialization parameters that may be stored in the program of PSAs of the present application at step **2601.** For example, an initialization parameter that is a time parameter may be set as a value range in the range of 1 to 300 seconds, or any other value range. The specific initialization parameters utilized and the range values of each initialization parameter will vary with the specific application of the decrease flow procedure.

At step **2601** the initialization parameters are accessed and the initialization parameters applicable to the particular application occurring are identified. The initial values of the initialization parameter identified in step **2601** are established at the time when the fluid distribution system is commissioned and set-up by a system operator. The initialization parameters incorporate several different parameters. For example, the initialization parameters include a ramp rate parameter. The ramp rate parameter is used to define a non-linear increase gain. In embodiments of the present invention the initial value of the ramp rate may be set in the range of 10% to 40%.

The initialization parameters are utilized by steps **2605** and **2603.**

An error signal is generated at step **2604** by the compare value step **906** of FIG. 10. The magnitude of the error signal locates the percentage capacity decrease that is generated in step **2602**, of FIG. 19.

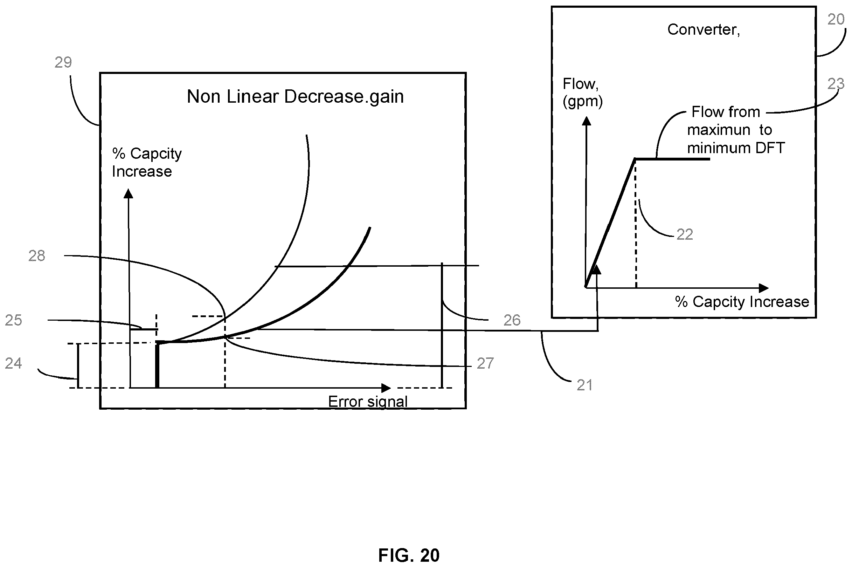

The dead band is a range value that is determined in step **2602.** The dead band values are the values between the lowest magnitude of error signal value and the initial percentage capacity decrease, as shown in FIG. 20 as range value **25.**

A graph of the non-linear increase gain, as shown in FIG. 20, represents the determinations occurring at step **2602**, as shown in FIG. 19. As shown in FIG. 20, the horizontal axis represents the error signal and the vertical axis represents the percentage capacity increase. The range values **24** (minimum range), **25** (dead band range), **26** (limiting range), are set when the system is initialized and these range values are application specific.

If the error signal is less than the magnitude of the dead band values then the percentage capacity decrease is set to zero (0.0). When the error signal is greater than the magnitude of the dead band then the percentage capacity decrease is set to the value occurring at the intersection of percentage capacity decrease and the error. (This value is shown as the intersection **27** in FIG. 20.)

The value range that includes the minimum values that the percentage capacity decrease can be set to may be identified. (For example, value range **24** as shown in FIG. 20 represents the minimum range that the percentage capacity decrease can be set to. The initial range value of minimum percentage capacity decrease (value range **24**) is set initially by an operator of the system.)

The intersection **27** indicates a value existing where the percentage capacity decrease intersects with the error signal. (For example, in one embodiment of the present invention the intersection **27** may represent the intersection of 10% capacity decrease, and the error signal that is equal to three times the dead band.) The percentage capacity decrease is related to the ramp rate such that the percentage of the ramp rate is equivalent to the percentage capacity decrease. (For example, in one embodiment of the present invention, if the ramp rate is set to 10%. the percentage capacity decrease will be 10% capacity decrease and the error signal that is equal to two or more multiples of the dead band. Changing the ramp rate to a different percentage will affect the percentage of the capacity decrease. This will cause a new intersection **28** between the percentage capacity decrease and the error signal. (For example, if the ramp rate is 15% the new intersection **28** will occur at the intersection of 15% capacity decrease and the error signal that is equal to 3 times the dead band.)

The percentage capacity decrease is limited to the magnitude represented by range value **26**, which may be set in the range of 10% to 100%.

In one embodiment of the present invention, the non-linear determinations applied may be quadratic functions. Other embodiments of the present invention may utilize cubic functions, or some other mathematical representation that provides the same characteristic benefits as disclosed herein. For example, a form of piecewise linear segment function may be applied in embodiments of the present invention.

A large swing instability detection and correction occurs at step **2605**, as shown in FIG. 19. This step automatically generates a reduction in the ramp rate on detection of large swing instability. This step also automatically generates an increase in the ramp rate on detection of sluggish response rates. Short term cycling is detected by this step, but corrective actions are not undertaken thereto.

The dead band detection and correction step automatically generates a reduction in the minimum percentage capacity decrease value range (value range **24**, as shown in FIG. 20) on detection of dead band cycling instability. The dead band and large swing instability detection and correction step automatically generates an increase in the percentage capacity decrease value range on detection of sluggish response levels at the dead band region. Short term cycling is detected by step **2605**, as shown in FIG. 19, but corrective actions are not undertaken thereto.

The automatic detection and correction of both the minimum percentage capacity decrease value range and percentage capacity decrease value range, in response to the identification of significant potential instability issues, is vital to the operation of the loop control in the fluid distribution system and the node balancing function of the system.

A percentage capacity decrease signal is generated by step **2602.** The percentage capacity decrease signal is transferred to the step **2603.** At step **2603** percentage capacity increase signal is converted to a flow value. The flow value is determined to be a proportional percentage of the range of the DFT from a minimum of 0.0 (zero) to DFT gpm.

The 100% DFT is stored as an initialization parameter accessible by step **2601.** The 100% DFT is transferred by step **2601** to be used in step **2603.** The use of this information by the control loop in step **2603** establishes a critical, flow dependent, compatibility between the virtual control loop and the controlled real environment.

The determination of step **2603** is shown in graph form **20** in FIG. 20. The horizontal axis is percentage capacity decrease and the vertical axis is flow shown in gpm. The capacity decrease **22** is a capacity decrease to 100% capacity, and it aligns with the beginning of the flow maximum **23** of the converter transfer function, which is the range of fluid flow from minimum to maximum fluid flow capacity. Flow value as indicated by arrow of line **21**, is generated in relation to the change capacity shown as intersection **27** in non-linear decrease gain chart **29** of FIG. 20.

### Decrease Pump Speed Generation Procedure

If the decrease increment procedure is initiated in accordance with step **2400** of FIG. 11, the steps shown in FIG. 17 are undertaken. The decrease increment procedure can therefore be initiated periodically as part of the processes set out in FIG. 11.

Generally, the decrease increment procedure is initiated in accordance with determinations performed by the microprocessor of a PSA associated with a node unit. Such determinations involve information relating to the flow of fluid within the fluid distribution system. Thus, the decrease increment procedure steps, as shown in FIG. 17, are incorporated in the loop control of the present invention.

The decrease increment procedure steps, as shown in FIG. 17, involve accessing initialization parameters that may be stored in the program of PSAs of the present application at step **2410.** For example, an initialization parameter that is a time parameter may be set as a value range in the range of 1 to 300 seconds, or any other value range. The specific initialization parameters utilized and the range values of each initialization parameter will vary with the specific application of the decrease flow procedure.

At step **2410** the initialization parameters are accessed and the initialization parameters applicable to the particular application occurring are identified. The initial values of the initialization parameter identified in step **2410** are established at the time when the fluid distribution system is commissioned and set-up by a system operator. The initialization parameters incorporate several different parameters. For example, the initialization parameters include a ramp rate parameter. The ramp rate parameter is used to define a non-linear increase gain. In embodiments of the present invention the initial value of the ramp rate may be set in the range of 10% to 40%.

The initialization parameters are utilized by steps **2411** and **2413.**

An error signal is generated at step **2401** by the compare value step **906** of FIG. 11. The magnitude of the error signal locates the percentage capacity decrease that is generated in step **2411**, of FIG. 17.

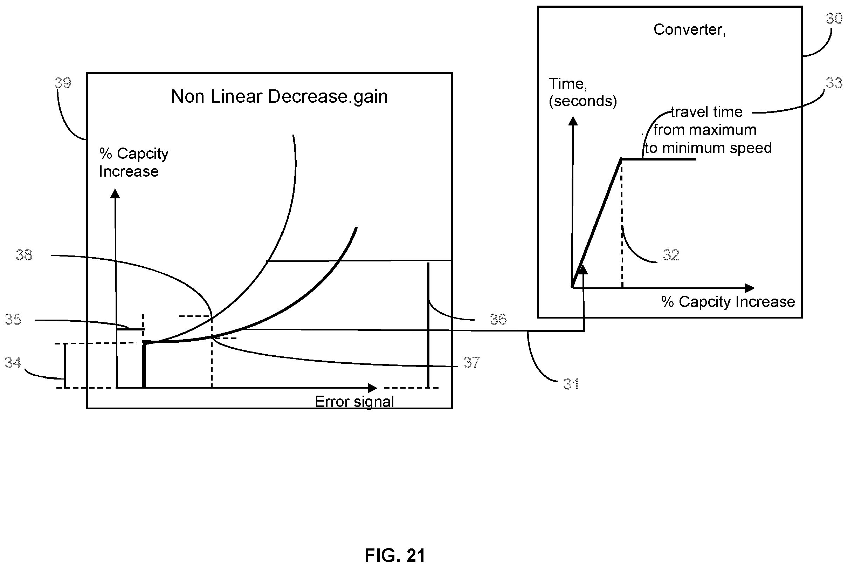

The dead band is a range value that is determined in step **2411.** The dead band values are the values between the lowest magnitude of error signal value and the initial percentage capacity decrease, as shown in FIG. 21 as range value **35.**

A graph of the non-linear increase gain, as shown in FIG. 21, represents the determinations occurring at step **2411**, as shown in FIG. 17. As shown in FIG. 21, the horizontal axis represents the error signal and the vertical axis represents the percentage capacity increase. The range values **34** (minimum range), **35** (dead band range), **36** (limiting range), are set when the system is initialized and these range values are application specific.

If the error signal is less than the magnitude of the dead band values then the percentage capacity decrease is set to zero (0.0). When the error signal is greater than the magnitude of the dead band then the percentage capacity decrease is set to the value occurring at the intersection of percentage capacity decrease and the error signal. (This value is shown as the intersection **37** in FIG. 21.

The value range that includes the minimum values that the percentage capacity decrease can be set to may be identified. (For example, value range **34** as shown in FIG. 21 represents the minimum range that the percentage capacity decrease can be set to. The initial range value of minimum percentage capacity decrease (value range **34**) is set initially by an operator of the system.)

The intersection **37** indicates a value existing where the percentage capacity decrease intersects with the error signal. (For example, in one embodiment of the present invention the intersection **37** may represent the intersection of 10% capacity decrease, and the error signal that is equal to three times the dead band.) The percentage capacity decrease is related to the ramp rate such that the percentage of the ramp rate is equivalent to the percentage capacity decrease. (For example, in one embodiment of the present invention, if the ramp rate is set to 10%. the percentage capacity decrease will be 10% capacity decrease and the error signal that is equal to two or more multiples of the dead band. Changing the ramp rate to a different percentage will affect the percentage of the capacity decrease. This will cause a new intersection **38** between the percentage capacity decrease and the error signal. (For example, if the ramp rate is 15 % the new intersection will occur at the intersection of 15% capacity decrease and the error signal that is equal to 3 times the dead band.)

The percentage capacity decrease is limited to the magnitude represented by range value **36**, which may be set in the range of 10% to 100%.

In one embodiment of the present invention, the non-linear determinations applied may be quadratic functions. Other embodiments of the present invention may utilize cubic functions, or some other mathematical representation that provides the same characteristic benefits as disclosed herein. For example, a form of piecewise linear segment function may be applied in embodiments of the present invention.

A large swing instability detection and correction occurs at step **2407**, as shown in FIG. 17. This step automatically generates a reduction in the ramp rate on detection of large swing instability. This step also automatically generates an increase in the ramp rate on detection of sluggish response rates. Short term cycling is detected by this step, but corrective actions are not undertaken thereto.

The dead band detection and correction step automatically generates a reduction in the minimum percentage capacity decrease value range (value range **34**, as shown in FIG. 21) on detection of dead band cycling instability. The dead band and large swing instability detection and correction step automatically generates an increase in the percentage capacity decrease value range on detection of sluggish response levels at the dead band region. Short term cycling is detected by step **2407**, as shown in FIG. 17, but corrective actions are not undertaken thereto.

The automatic detection and correction of both the minimum percentage capacity decrease value range and percentage capacity decrease value range, in response to the identification of significant potential instability issues, is vital to the operation of the loop control in the fluid distribution system and the node balancing function of the system.

A percentage capacity decrease signal is generated by step **2411.** The percentage capacity decrease signal is transferred to the step **2413.** At step **2413** the percentage capacity decrease signal is converted to a time value. The time value is determined to be a proportional percentage of the travel time, from minimum to maximum (100%) speed of the pump speed drive of a pump incorporated in the PSA.

The 100% full travel time is stored as an initialization parameter accessible by step **2410.** The 100% full travel time is transferred by step **2410** to be used in step **2413.** The use of this information by the control loop in step **2413** establishes a critical, time dependent, compatibility between the virtual control loop and the controlled real environment.

The determination of step **2413** is shown in graph form **30** in FIG. 21. The horizontal axis is percentage capacity decrease and the vertical axis is time shown in seconds. The capacity increase **32** is a capacity decrease to pump speed, and it aligns with the beginning of the travel time **33** of the converter transfer function, being the time to travel from maximum to minimum pump speed. Time value as indicated on convertor chart 30, as shown in FIG. 21, by the arrow of line **31** (indicating a time lapse), is generated in relation to the change capacity shown as intersection **37** in non-linear decrease gain chart **39** of FIG. 21.

The time value generated at step **2413,** as shown in FIG. 17, is measured by a count-down timer at step **2417.** Step **2413** further generates a signal based upon the time value. The count-down timer accurately measures the duration of the signal. At step **2419** an increase increment signal is generated to be sent to the pump speed drive for a pump in a node unit. The pump speed drive that utilizes such signal to adjust the pump speed as indicated to be required by the signal. The speed of the pump will be decreased in reaction to the decrease increment signal received by the pump speed drive, said signal being generated by the process set out in FIG. 17.

The travel times for an incremental change of pump speed to result in a measured change in ADF may differ substantially for an increase increment from that for a decrease increment to produce the same incremental change in flow ADF, adjusting the speed of pumps can differ. This difference is accommodated with the implementation of separate processes for non-linear increase gains (FIG. 16) and for non-linear decrease gains (FIG. 17). In particular each process can incorporate values and determinations relating to the travel times for the speed of a pump in a node unit to be increased (for the non-linear increase gains process of FIG. 16) and to be decreased (for the non-linear decrease gains process of FIG. 17). Alternatively, values and determinations relating to the travel time for the speed of a pump in node unit to be decreased (for the non-linear increase gains process, as shown in FIG. 16) and to be increased (for the non-linear decrease gains process, as shown in FIG. 17).

The implementation of two separate processes to accommodate the differing travel times for the increase and decrease of the speed of the pumps in the system has the effect of achieving better stable operations of the fluid flow in the system of the present invention.

### Increase Increment Speed Generation Procedure

If the increase increment speed procedure is initiated in accordance with **2300** of FIG 11, the steps shown in FIG. 16 are undertaken. The increase increment generation procedure can therefore be initiated periodically as part of the process set out in FIG. 11.

Generally, the increase increment speed generation procedure is initiated in accordance with determinations performed by the microprocessor of a PSA associated with a node unit. Such determinations by the microprocessor involves information relating to the flow of fluid within the fluid distribution system, including DFT and FE information. Thus, the increase increment speed procedure steps, as shown in FIG. 16, are incorporated in the loop control of the present invention.

The increase increment speed procedure steps involve accessing initialization parameters that may be stored in the program of PSAs associated with the node unit at step **2310.** For example, an initialization parameter that is a time parameter may be set as a value range, such as in the range of 1 to 300 seconds, or any other range. The specific initialization parameters utilized and the range values of each initialization parameter will vary with the specific application of the increase increment speed procedure.

The initialization parameters are accessed and the initialization parameters applicable to the particular application occurring are identified at step **2310.** The initial values of the initialization parameter identified in step **2310** are established at time when the fluid distribution system is commissioned and set-up by a system operator. The initialization parameters incorporate several different parameters. For example, the initialization parameters include a ramp rate parameter. The ramp rate parameter is used to define a non-linear increase gain. In embodiments of the present invention, the initial value of the ramp rate may be set in the range of 10% to 40%.

The initialization parameters are utilized by steps **2311** and **2313.**

An error signal is generated at step **2301.** The error signal generated is generated in accordance with the compare value step **906** of FIG. 11.

The magnitude of the error signal is identified and utilized to locate the percentage capacity decrease that is generated at step **2311.** The dead band is a range value that is identified by the system at step **2311.** The dead band range includes the values between the lowest magnitude of error signal value and the initial percentage capacity increase, as shown in FIG. 22 as range value **45.**

FIG. 22 shows a graph of the non-linear increase gain that represents the determinations occurring at step **2311**, of FIG. 16. As shown in FIG. 22, the horizontal axis represents the error signal and the vertical axis represents the percentage capacity increase. The range values **44** (minimum range), **45** (dead band range), **46** (limiting range), are set when the system is initialized, and these range values are application specific.

If the error signal is less than the magnitude of the dead band values then the percentage capacity increase is set to zero (0.0). When the error signal is greater than the magnitude of the dead band then the percentage capacity increase is set to the value occurring at the intersection of percentage capacity increase and the error signal. (This value is shown as the intersection **47** in FIG. 22.)

The value range that incorporates the minimum values that the percentage capacity increase can be set to may be identified. For example, value range **44** as shown in FIG. 22 represents the minimum range that the percentage capacity increase can be set to. The initial range value of minimum percentage capacity increase (value range **44**) is set initially by an operator of the system.

The intersection **47** indicates a value existing where the percentage capacity increase intersects with the error signal. (For example, in one embodiment of the present invention the intersection 47 may represent the intersection of 10% capacity increase, and the error signal that is equal to three times the dead band.) The percentage capacity increase is related to the ramp rate such that the percentage of the ramp rate is equivalent to the percentage capacity increase. (For example, in one embodiment of the present invention, if the ramp rate is set to 10%. the percentage capacity increase will be 10% capacity increase and the error signal that is equal to two or more multiples of dead band. Changing the ramp rate to a different percentage will affect the percentage of the capacity increase. This will cause a new intersection **48** between the percentage capacity increase and the error signal. (For example, if the ramp rate is 15 % the new intersection will occur at the intersection of perhaps 15% capacity increase and the error signal that is equal to 3 times the dead band.)

The percentage capacity increase is limited to the magnitude represented by range value **46**, which may be set in the range of 10% to 100%.

In one embodiment of the present invention, the non-linear determinations applied may be quadratic functions. Other embodiments of the present invention may utilize cubic functions, or some other mathematical representation that provides the same characteristic benefits as disclosed herein. For example, a form of piecewise linear segment function may be applied in an embodiment of the present invention.

A large swing instability detection and correction occurs at step **2307**, as shown in FIG. 16. This step automatically generates a reduction in the ramp rate on detection of large swing instability. This step also automatically generates an increase in the ramp rate on detection of sluggish response rates. Short term cycling is detected by this step, but corrective actions are not undertaken thereto.

The dead band detection and correction step automatically generates a reduction in the minimum percentage capacity increase value range (i.e., value range **47**, as shown in FIG. 22) on detection of dead band cycling instability. The dead band and large swing instability detection and correction step automatically generates an increase in the percentage capacity increase value range on detection of sluggish response levels at the dead band region. Short term cycling is detected by step **2307**, as shown in FIG. 16, but corrective actions are not undertaken thereto.

The automatic detection and correction of both the minimum percentage capacity increase value range and percentage capacity increase value range, in response to the identification of significant potential instability issues, is vital to the operation of the loop control in the fluid distribution system and the node balancing function of the system.

A percentage capacity increase signal is generated by step **2311.** The percentage capacity increase signal is transferred to the step **2313.** At step **2313** the percentage capacity increase signal is converted to a time value. The time value is determined to be a proportional percentage of the travel time, from minimum to maximum speed of the pump of the PSA.

The 100% full travel time is stored as an initialization parameter accessible by step **2310.** The 100% full travel time is transferred by step **2311** to be used in step **2313.** The use of this information by the control loop in step **2313** establishes a critical, time dependent, compatibility between the virtual control loop and the controlled real environment.

The determination of step **2313** is shown in graph form **40** in FIG. 22. The horizontal axis is percentage capacity increase and the vertical axis is time shown in seconds. The capacity increase **42** is a capacity increase to pump speed, and it aligns with the beginning of the travel time **43** of the converter transfer function, being the travel time to increase pump speed from minimum to maximum pump speed. Time value as indicated by arrow **41**, that indicates a time lapse, is generated in relation to the change capacity depicted at intersection **47** of the non-linear increase gain graph **49** of FIG. 22.

The time value generated at step **2313**, as shown in FIG. 16, is measured by a count-down timer at step **2317.** Step **2313** further generates a signal based upon the time value. The count-down timer accurately measures the duration of the signal. At step **2319** an increase increment signal is generated to be sent to the pump speed drive for a pump in a node unit. The pump speed drive that utilizes such signal to adjust the pump speed as indicated to be required by the signal. The speed of the pump will be increased in reaction to the increase increment signal received by the pump speed drive, said signal being generated by the process set out in FIG. 16.

The travel times for an incremental change of pump speed to result in a measured change in ADF may differ substantially for an increase increment from that for a decrease increment to produce the same incremental change in flow ADF, adjusting the speed of pumps can differ. This difference is accommodated with the implementation of separate processes for non-linear increase gains (FIG. 16) and for non-linear decrease gains (FIG. 17). In particular each process can incorporate values and determinations relating to the travel times for the speed of a pump in a node unit to be increased (for the non-linear increase gains process of FIG. 16) and to be decreased (for the non-linear decrease gains process of FIG. 17). Alternatively, values and determinations relating to the travel time for the speed of a pump in node unit to be decreased (for the non-linear increase gains process, as shown in FIG. 16) and to be increased (for the non-linear decrease gains process, as shown in FIG. 17).

The implementation of two separate processes to accommodate the differing travel times for the increase and decrease of the speed of the pumps in the system has the effect of achieving better stable operations of the fluid flow in the system of the present invention.

### Pump Speed Alterations

Alterations to the speed of the pumps (that can include one or more of: turning the pump on, turning the pump off, increasing pump speed or decreasing pump speed) in the system are necessary to respond to changes occurring at nodes in the fluid distribution system that are recognized by the node units and associated PSAs within the system. Such changes can occur at any given time as the environment that a portion of the system is servicing between nodes can change. For example, an open window can lower or raise the temperature in an area of a building that is being serviced by a portion of the system that exists between nodes. A change can also occur if a thermostat in an area that is serviced by a portion of the system existing between two nodes is altered only if the downstream node is a return node which receives fluid flow directly from a thermal load and the fluid flows through said return node downstream to the thermal supply.

Therefore, it is not adequate for the system to be manually set, or for the system only be set at a particular time during the year, or not at all, as is applied by prior art systems. These prior art approaches do not allow the system to be balanced in its functions and to service all areas in a building effectively and efficiently and repeatedly, automatically during every hour of every year without incurring labour costs associated with a balancing process and the labour costs to respond to tenant (occupant) complaints of tenants/occupants of the building wherein a system is located.

The present invention collects information regarding the function of the node units and associated PSAs on a regular basis, and utilizes the collected information on a periodic basis to adjust the pump speed of the PSAs. These adjustments change the flow of fluid within the system. Altering the pump speed changes the flow of fluid throughout the whole of the conduits of the system generally. Whereas altering the speed of the pump within specific PSAs alters the flow of fluid through specific PSAs, which can affect the flow of fluid through PSAs that are both upstream and downstream of the PSA (wherein the speed of the pump therein is adjusted).

These alterations can cause the fluid distribution system to achieve flow throughout the system that is effective and efficient, and that services the specific areas of the system that have particular requirements and that are serviced by particular node units within the system. For example, the flow of the fluid through the conduit generally and through each PSA specifically can affect the level of heating or cooling provided by an embodiment of the present invention, as the system can function to address specific heating and cooling requirements in particular areas of a building. The system is thereby effect throughout the building, supplying only the heating and cooling required to each area of the building. Furthermore, the system is efficient in that it supplies the specific heating and cooling needs to each area.

The fluid distribution system of the present invention is not required to operate at an exact fixed value of fluid flow that each node unit and associated PSA in the system must achieve, or an exact speed to which the pump in one or more PSAs must be set at (as are requirements for the prior art systems). Instead the system of the present invention determines ranges whereby all of the node units and associated PSAs in the system can function to achieve balanced function throughout the system, and the speed of the pumps within the system are periodically altered to function in accordance with such ranges. Thus, the system of the present invention functions within the determined ranges. The ranges are re-determined by the system to address changes that the system must address. The result is that the system of the present invention remains effective and efficient in its function overtime.

### Secondary Distribution Section

Embodiments of the present invention may incorporate one or more secondary distribution sections, each being configured to form a secondary loop of lines incorporating one or more nodes, and one or more pumps. As an example, node unit 208 as shown in FIG. 2 is positioned within a secondary distribution section. Node 214 is positioned as a conduit of fluid flow into the secondary distribution section, and node 215 is positioned as a conduit of fluid flow out of the secondary distribution section. If the fluid flow within the system is balanced there will be no fluid flow from node 215 in the direction of node 214 along conduit section 219 and no fluid flow from node 214 in the direction of node 215 along conduit section 219.

The flow of the fluid through the secondary distribution section, the function of the elements of the secondary distribution section (e.g., any function of the elements to alter the speed of the secondary pump, or other functions of the elements), and the information relating to the fluid flow in the secondary distribution section that is transmitted to the node unit directly upstream of the node that conducts fluid flow into the secondary distribution system, may be utilized to affect the fluid flow at the node that acts as a conduit for fluid flow into the secondary distribution section.

A benefit of the secondary distribution section configuration and the transfer of information between the secondary distribution section and the node unit directly upstream of the node that acts as a conduit for fluid flow into the secondary distribution section, is that the present invention may achieve 100% energy transfer between the primary and secondary system. Measurement of energy transfer is dependent on the fluid temperature differential and fluid flow. In the primary distribution section the temperature differential PD is defined as temperature of the fluid entering node **214** less the temperature of the fluid exiting node **215.** In the secondary distribution section the temperature differential SD is defined as temperature of the fluid exiting node **214** less the temperature of the fluid entering node **215.**

SD will be equal to PD, when the fluid flow DFT of the primary section enters node **214** with 100% of said flow exiting node **214** into the secondary system, while zero (0.0) flow exits node **214** into conduit **219** (i.e., DFTs=DFTp). Such a condition ensures that both temperature differential and flow are equal and therefore there is 100% energy transfer.

The node unit in the primary distribution section that is upstream of node **214** maintains the fluid flow through node **214** at a DFT equal to the DFT that the node unit of the secondary distribution section is maintaining. This secondary flow DFT is determined by node units operating downstream of the node unit of the secondary distribution section. This process within a secondary distribution section is identical to that applied with a thermal load within the conduits of the primary distribution section. The secondary distribution section balancing operation is accommodated in a seamless manner within the present invention.

Embodiments of the present invention may incorporate one or multiple secondary distribution sections. Some embodiments of the present invention may further incorporate tertiary distribution sections that operate with the secondary distribution section through similar junction nodes. In particular, the configuration of the embodiments of the present invention that incorporate a primary distribution section and one or more secondary distribution sections may be applicable to systems that incorporate any of the following: primary distribution sections that achieve constant flow and secondary distribution sections that achieve constant flow; primary distribution sections that achieve variable flow and secondary distribution sections that achieve variable flow; and primary distribution sections that achieve constant flow and secondary distribution sections that achieve variable flow.

Information may be transferred via an ECN between elements of the primary distribution section and elements of any secondary distribution section of the system.

To effect an efficient transfer of energy from the primary distribution section to the secondary distribution section, an amount of energy sent by the primary distribution section must equal to that received by the secondary distribution section. (For example, the energy transferred may be measured in node unit as a function of temperature differential of the fluid and both the fluid flows.) Having the node unit in the primary distribution section operate with the flow DFT target setting of the secondary distribution section, and measuring the fluid flow ADF primary distribution section, enables the node unit of the primary distribution section to generate (through operations of loop control) the precise target demand flow (DFT) required to be maintained at the target controlled variable setting of the secondary distribution section DFT. The target demand setting DFT for the primary fluid flow at the then current primary distribution section flow ADF delivers the exact energy level that is required for the secondary distribution section thermal load defined target flow to be maintained at the secondary distribution section. This control operation across the junction node achieves the required 100% balanced (i.e., equal) energy transfer between the primary distribution section and the secondary distribution section.

The secondary distribution section is configured to form a secondary loop of lines incorporating nodes, node units and a secondary pump. The secondary loop is connected to the primary distribution section via the junction node. The secondary distribution section may pass fluid into the primary distribution section and thereby adjust the fluid flow of the primary distribution section. Thus, the primary distribution section can improve the performance of the secondary distribution section to achieve its target thermal energy.

There may be one or multiple secondary distribution sections in an embodiment of the present invention, and each secondary distribution section may function as described herein. The secondary distribution sections may transfer demand target flow changes that increase or reduce the requirement for any adjustment of PSA operations of primary node units and/or of the speed of the primary pump. This can produce overall efficiency benefits for the system and may reduce the cost and energy required for the system.

### Display & Man Machine Interface Units

One embodiment of the present invention may incorporate one or more display units. The one or more display units may be located in the proximity of the distribution system, or remotely, at a distance from the distribution system. The display unit may have a wired or wireless connection with one or more elements of the distribution system. Information may be transferred to the display unit from the one or more elements of the distribution system. The information that is transferred to the display unit may be displayed to a user of the display unit. The user may thereby obtain information relating to the distribution system.

In an embodiment of the present invention, information may also be transferred from the display unit to one or more elements of the distribution system. In such an embodiment the display unit may have an input means connected thereto. For example, such as a keyboard, touch screen, or other input element. The user may utilize the input element to input information that will be transferred from the display unit to the distribution system. In some embodiments of the present invention, such input information may be processed to effect the function of the distribution system.

In an embodiment of the present invention, the display unit may either incorporate a processor, or be connected (through a wired connection or a wireless connection) to a processor. The processor may be operable to process information the display unit receives from one or more elements of the distribution system. For example, the display unit may process the information to: produce a particular report format whereby the information is displayed to a user; or generate new information to be displayed to the user by combining the information received from the distribution system with other information that is obtained or stored by the processor and/or the display unit. Embodiments of the present invention may also be connected to sensor devices (e.g., thermostats or other devices), laptops, computer servers, computer systems, or other devices (collectively referenced herein as man machine interface units (MMIs)), operable to receive and/or transmit information between such MMI and at least one node unit of the system.

In embodiments of the present invention, one or more MMIs may be connected (through a wired connection or a wireless connection) to one or more node units in the fluid distribution system. Information may be transferred to and from the MMI and the node unit (and/or to the PSA attached to said node unit). A MMI may be remotely positioned from the node unit and associated PSA to which the MMI transmits information or from which it receives information. The node unit may be further connected to one or more other node units within a primary distribution section and/or a secondary distribution section of the distribution section along the ECN. In any configuration, all MMI units may provide the same functional facility, namely to provide information to one or more node units and to receive information from one or more node units.

As an example, a MMI **4300** unit may be remotely connected to one node unit of the distribution system, such as a node unit **211**, via the Internet **4408**, through a wired or wireless connection **4301.** The node unit may be connected through a connection **4302** to another node unit **212** in the fluid distribution system. Such connection between node units may be ECN connections, or other types of connections. Information is passed between node units and to and from one or more MMI units through the connections between the node units and the one or more MMI units. In some embodiments there is a connection configuration whereby information is transferred from at least one node unit of the distribution system via the Internet, and at least one MMI unit is connected to the Internet and receives the information sent from the at least one node unit to the Internet from the Internet. For example, information may be passed to and from the node unit and the Internet. Information may also be passed to and from the Internet and an MMI unit.

Information may be passed to and from connected node units within the primary distribution section and/or the secondary distribution section, and to and from the one or more MMI(s). The MMI may incorporate a means whereby a user can input information, such as a keyboard, a touch screen or another input element. The MMI may further incorporate a display element, where by a user can view information displayed by the MMI. The MMI may also incorporate a processor operable to process the information that the MMI receives, whether in isolation, or in combination with other information obtained or stored by the MMI

As a further example, when local connections (whether wireless or wired connections) are established by one or more MMIs then the same functional accessibility to information available in node units may be provided concurrently. In a system that incorporates multiple MMI units a variety of types of connections to the MMI units may be incorporated in the system.

Further in other embodiments of the present invention, each or all node units may be connected to a dedicated MMI unit such that each MMI unit (whether local or remote from the node units) may be concurrently operable in the same ECN.

MMI units may operate on the same ECN as is used to transmit and receive change reports generated by node units, as discussed herein, or may operation through a separate connection.

One or more MMI units may be remotely located from the distribution system. The MMI unit may be any electronic device such as a laptop, computer, smart phone, tablet or other electronic device.

A MMI unit may be operable to transmit and receive information relating to both the primary distribution section and any secondary distribution section. A MMI unit may transmit and receive information in a variety of formats, including as reports that show processed information from the system, unprocessed information, or other formats. Information relating to individual node units and associated PSAs may be reported. As an example, information relating to the secondary pump control node unit may be reported and information relating to a node unit of the primary distribution section may be transmitted and received by the MMI. Information relating to the operation scale and/or the operation locus of one or more node units, information relating to the operation locus range, or any other information generated by the system may be received and processed by any of the MMI units in the system.

A MMI may incorporate a display or be connected (through a wired or wireless connection) to a display, for example, such as a display that is remotely located from the system. The display unit may further be the display of any device, such as a laptop, computer, smart phone, tablet, or other device. Secondary distribution section information (being information from node units and associated PSA in any secondary distribution system) may be transferred to the node unit or node unit that is directly upstream of the junction node. Therefore, in an embodiment of the present invention, the MMI may be operable to display information relating to both the primary distribution section and any secondary distribution sections. Information relating to one or more individual node units and associated PSAs may be shown, information relating to the pump may be shown, information relating to pressure at one or more nodes or junction nodes may be shown, information relating to the operation scale and/or the operation locus of one or more node units, information relating to the operation locus range, or any other information generated by the system may be shown on the display.

### Boilers and Chillers

Thermal energy is provided in an HVAC system by a thermal supply that incorporates thermal sources that are chillers and boilers. The drawings provided herewith do include a thermal supply as a representation of chillers or boilers. However, a skilled reader will recognize that should the fluid distribution system of the present invention operate as a HVAC system, boilers and chillers, as thermal sources, will be utilized by the system and such use may produce additional pressure drops in the lines of the primary distribution section of the fluid distribution system. To address such pressure drops the applied level of pump pressure can be increased. However, since this invention does not function so as to require that any absolute pressure level be defined and utilized, the pressure drops created by the boilers and chillers are not specifically discussed herein. This is also true of any pressure drop in an elbow section of the lines, any isolation valves, or any other elements of the system wherein such pressure drops may occur. The function of the present invention to operate within the operation locus of each node unit, and within the operation locus range identified for the system generally (and for groups of node units within the system) generally, will cause the system to correct any such pressure drops without having to explicitly react to individual pressure drops by identifying any absolute pressure level to do so.

### Other Functionalities

Embodiments of the present invention may have additional functionalities, which represent benefits of embodiments of the present invention over the prior art, including the following:
a. automatic control and adjustment of node pressure at all nodes within the fluid distribution system to establish and maintain the lowest possible pump (fan), head pressure.
b. control of pressure throughout the system without the requirement to measure absolute pressure, or measure differential pressure.
c. automatic control and adjustment of node pressure at all nodes within the fluid distribution system, based upon a precise measurement of the status of each node unit directly downstream from such node (in a node unit grouping).
d. use of independent control actions of the loop control process to either increase or decrease the node pressure by adjustment of the speed of the related pump (fan).
e. result in lower energy consumption, as multiple small pumps (as are incorporated in the present invention) operating at minimum speed consume less horsepower than is consumed by a single large pump operation at its minimum speed (as exists in the prior art). For example, the prior art generally incorporates 1 or more large horsepower pumps located close to the thermal source, but the present invention incorporates multiple small horsepower pumps, each incorporated within a PSA attached to a node unit and an electronic network operating connecting pump capacity via the PSA incorporated with each.
f. automation of the balancing process at a lower capital cost and more accurate and periodic rebalancing as the thermal load demands change, which is achieved due to the integration of a pump within each PSA attached to a node unit, instead of the integration of a control valve and manually positioned balancing valve.
g. provides a process to balance constant flow systems and variable flow system as well as an integrated mix of both constant and variable flow systems.
h. provides a process of seamlessly transferring the balancing demands of a secondary distribution system to a primary distribution system.
i. provides reporting on conditions existing within a distribution system which are beyond the limits of adjustability or which have been generated by a failure in the distribution system.
j. removes the engineering labour costs to define the size and an index setting for balancing valves which field technicians then use when manually adjusting the system balance. This also removes the technician labour costs related to physically adjusting and often readjusting the manual balancing valves.
k. loop control generates nonlinear responses to differential control error (using nonlinear gain functions to provide greater stability in maintenance of the flow balance than is achievable using industry standard PID algorithm applied in the prior art).
l. loop control incorporates self-tuning, to correct both large swing instability and deadband cycling.
m. loop control operations occur at a specific time interval, providing opportunity to measure the reaction to prior actions taken by loop control, before generation of new responses, which is not achieved by standard PID algorithm applied in the prior art.
n. loop control separates the process to generate an increase reaction from those used to generate a decrease reaction, permitting an opportunity to better match both responses of the reacting equipment thus avoiding possible instability.
o. loop control uses the adjustable pump ramp rate, both to increase or decrease pump speed, to fine tune its control responses.
p. loop control incorporates self-tuning, which minimizes commission labour during initial system setup and again during operation in conditions not available during the initial commissioning of the fluid distribution system.
q. permits the addition of new conduit and thermal load sections to the fluid distribution system in a seamless manner, without requiring changes to the operating systems of each node unit.
r. reduces capital (monetary) costs in comparison to such costs required for prior art system, due to the lack of a large horsepower pump being installed within the present invention, as such installation is costly.
s. provides a distribution system which may incorporate flow in a reverse direction from that discussed in the examples above. Such an application may function as a fume hood system wherein the fluid flows from numerous distribution locations to a single location. In such an embodiment of the present invention the fluid would flow from the tertiary locations of the distribution system to a central exhaust. As in other embodiments of the present invention the flow of the fluid would be balanced in the manner discussed herein.
t. the minimum flow of the system operation can be accommodated by the minimum flow of a single small pump at a tertiary location in the distribution system. This represents a significant reduction in energy consumption compared to the operation of a single large pump at a central location operating at minimum speed to accommodate the same tertiary load.
u. the control valve, used in prior art systems to adjust the fluid flow, is not required in the present invention, since the node unit of this invention generates the target demand flow and then maintains this target flow by adjusting the speed of the PSA pump. This operation of the node unit is an enhancement of control stability and provides a capital cost reduction in comparison to the capital costs for prior art systems. Elimination of the control valve in the present invention thereby eliminates a significant differential pressure loss which has the result of reducing the energy consumption required by the pumps.

It will be appreciated by those skilled in the art that other variations of the embodiments described herein may also be practiced without departing from the scope of the invention. Other modifications are therefore possible. For example, the method and apparatus of the present invention can be applied to systems relating to balancing pressure of a variety of gasses, fluids or other matter. The method and apparatus of the system can also be applied to a variety of environments whereby any gas, fluid or other matter is to travel through conduits in a manner that achieves balanced pressure, and is therefore not only applicable to a heating or cooling system within a building.

## Claims

1. A fluid distribution system comprising:
a. one or more nodes incorporated in a conduit;
b. one or more node units incorporated in the conduit, each of the one or more node units being operable to receive information from other node units and from one or more external sources, and to process the received information to produce processed information for the purpose of determining if balanced flow in the conduit and fluid flow at the one or more nodes is achieved and to generate adjustments to generate balanced fluid flow in the fluid distribution system;
c. one or more pumps, whereby each node unit incorporates one pump;
d. a return conduit wherein fluid flows directly to the thermal supply; and
said fluid distribution system being operable to maintain balance of fluid flow in the conduit and at each of the one or more nodes after initiation of the fluid distribution system to achieve a high efficiency energy transfer within the fluid distribution system devoid of any of the following: pinpoint settings for any fluid flow value; and pinpoint settings for any exact pump speed.

2. The fluid distribution system of claim 1, wherein the system adjustments generated by the one or more node units are alterations of the speed of the one pump in each such one or more node units.

3. The fluid distribution system of claim 1, wherein the one or more of the one or more node units are configured into one or more node unit groupings, and each one or more node unit groupings incorporate one of the one or more nodes that is directly upstream or direction downstream of each of the one or more node units in the node unit grouping, wherein fluid flow direction may be in either direction while being in the same direction for all node units.

4. The fluid distribution system of claim 1, operable to determine an operation locus for one or more of the one or more node units, and such node units being operable in accordance with the operation locus.

5. The fluid distribution system of claim 1, operable to determine an operation locus range for two or more of the one or more node units, and such node units being operable in accordance with the operation locus range.

6. The fluid distribution system of claim 4, wherein one or more node unit groupings are configured in one or more fluid distribution sections, and the fluid distribution system is configured to incorporate the one or more fluid distribution sections, each of said one or more fluid distribution sections being connected to the return conduit on a downstream end.

7. The fluid distribution system of claim 1, wherein one or more of the one or more node units has a thermal load connected downstream thereof and between such node unit and the return conduit.

8. The fluid distribution system of claim 7, wherein one of the one or more node units is dedicated to the thermal load that is a secondary distribution section incorporating an inlet node.

9. The fluid distribution system of claim 1, further comprising one or more of the following:
a. one or more display units;
b. one or more man machine interface units; or
c. one or more servers, positioned locally or remotely from the fluid distribution system.

10. A method for generating and maintaining balanced of fluid flow in a fluid distribution system comprising the steps of:
a. operating the fluid distribution system configured to incorporate:
i. one or more nodes incorporated in the conduit;
ii. one or more node units incorporated in the conduit, each incorporating a pump;
iii. an electronic communications network (ECN) connecting each of the one or more node units to the one node unit that is directly upstream and to any one or more of the one or more node units that are directly downstream; and
iv. a return conduit; and
b. each of the one or more node units: receiving information from other node units and from one or more external sources; processing the received information to produce processed information for the purpose of determining if balanced fluid flow in the conduit and at the one or more nodes is achieved; generating pump speed adjustments to create balanced flow and pump pressure in the fluid distribution system; and transmitting the processed information to one of the one or more node units that is upstream via the ECN; and
c. each of the one or more node units and the pump operating after initiation of the fluid distribution system to achieve a high efficiency energy transfer devoid of any of the following: pinpoint settings for any fluid flow value; and pinpoint settings for any exact pump speed.

11. The method of claim 10, further incorporating the following steps:
a. each of the one or more nodes units determining an operation locus and operating in accordance with the received processed information and the operation locus; and
b. one or more of the one or more node units determining an operation locus range and transmitting processed information that effects operation of the fluid distribution system in accordance with the operation locus range.

12. The method of claim 19, incorporating one or more of the further step of one or more of the node units receiving information from an external source that one or more of the following: a thermal load; and one or more external probes.

13. The method of claim 12, further incorporating the steps of the fluid distribution system operating to achieve 100% efficient energy transfer from the primary system to the secondary system, and equal flow in any thermal load that is a secondary distribution section and any primary distribution section for the fluid distribution system, said secondary distribution section being downstream of a node unit or a node unit in the primary distribution section, and the secondary distribution system incorporating a node unit that incorporates a fluid flow sensor, and incorporating the following steps:
a. the fluid flow sensor measuring the fluid flow of the fluid in the secondary distribution section;
b. the node unit in the primary distribution section that is upstream of the secondary distribution section measuring the fluid flow of the fluid at said node unit; and
c. said node unit comparing the fluid flow information it receives of the fluid flow in the secondary distribution section to the fluid flow of the fluid in the primary distribution section, and operating to adjust the speed of the pump incorporated in such node unit to thereby adjust fluid flow for the purpose of achieving an equal fluid flow of the fluid in the primary distribution section and the secondary distribution section.

14. The method of claim 10, further incorporating the step of the node units generating the net flow target information and a net change report relating to one or more node units downstream of the node unit, said one or more node units downstream of the node unit all being directly downstream of the one of the one or more nodes that is directly downstream of the node unit, the node unit and such downstream one or more node units being configured in a node unit grouping, and said node unit transmitting such net flow target information and net change report to the one of the one or more node units that is directly upstream of said node unit.

15. The method of claim 10, further incorporating the step of transferring information in any of the following:
a. from one or more of the one or more node units to one or more display units;
b. bi-directionally between one or more man machine interface units and one or more of the one or more node units; and
c. bi-directionally between one or more servers, positioned locally or remotely from the fluid distribution system, and one or more of the one or more node units;
whereby the fluid distribution system is operable in accordance with the information received from the one or more man machine interface units.

16. The method of claim 10, further incorporating the step of the one or more node units operating to balance the fluid flow in the fluid distribution system that is one of the following: a constant flow system; a variable flow system; and a combination of a constant flow system and a variable flow system.

17. The method of claim 10, further incorporating the steps of the node unit, the node unit, and the node unit, each generating the change report to indicate a requirement for the fluid flow to be increased, decreased, or have a null change at the one of the one or more nodes that is directly upstream thereof.
